# FASCICULE DE BREVET EUROPEEN

(11) **EP 2 382 220 B1**
(45) Date de publication et mention de la délivrance du brevet: **04.09.2013**
(21) Numéro de dépôt: 09805741.7
(22) Date de dépôt: 18.12.2009
(51) Int. Cl.: C07F 5/02, G01N 21/76

(54) **COMPOSÉS FLUORESCENTS HYDROPHILES À BASE DE DIPYRROMÉTHÈNES-BORE**
.
DIPYRROMETHENE-BORON HYDROPHILIC FLUORESCENT COMPOUNDS

(30) Priorité: 29.12.2008 FR 0859098
(43) Date de publication de la demande: 02.11.2011
(73) Titulaire: Centre National de la Recherche Scientifique (C.N.R.S.), 75016 Paris (FR)
(72) Inventeur: ULRICH, Gilles, F-67200 Strasbourg (FR); ZIESSEL, Raymond, F-67460 Souffelweyersheim (FR); NIU, Song-lin, F-67400 Illkirch (FR); HAEFELE, Alexandre, F-67540 Ostwald (FR); BURA, Thomas, F-57385 Teting Sur Nied (FR)
(74) Mandataire: Blot, Philippe Robert Emile
(86) Numéro de dépôt international: PCT/FR2009/052606
(87) Numéro de publication internationale: WO 2010/076516

(56) Documents cités:
- WO-A-2006/087459

## Description

La présente invention concerne de nouveaux composés fluorescents hydrophiles, utiles notamment comme marqueurs fluorescents dans des milieux aqueux ou hydrophiles, qui se révèlent notamment adaptés à une utilisation dans des milieux biologiques, ou à un greffage sur des supports hydrophiles (oxydes métalliques, polymère organiques par exemple).

Des composés fluorescents sont connus notamment de la demande internationale WO2006/087459, qui concerne des dipyrrométhènes-bore borocarbonés insaturés, ayant un déplacement de Stokes élevé, qui sont utiles comme marqueurs fluorescents, notamment pour l'analyse par fluorescence ou par électroluminescence.

Il existe un besoin de composés fluorescents de ce type, qui présentent en outre un caractère hydrophile et qui puissent être employés par exemple à titre de marqueurs au sein d'un milieu aqueux. En effet, il est intéressant de pouvoir conduire des procédés d'analyse par fluorescence en milieux aqueux, en particulier dans le cadre de l'étude des processus biologiques, pour le dosage fluoroimmunologique, la microscopie de fluorescence, la cytométrie de flux, le séquencage d'ADN et le marquage de matériel biologique. Or, il s'avère que nombre de composés fluorescents utiles à titre de marqueurs se révèlent inutilisables en milieu aqueux. C'est en particulier le cas des composés divulgués dans WO2006/087459.

En outre, la modification d'un composé fluorescent insoluble par un groupe de nature à augmenter son caractère hydrophile ne conduit pas systématiquement à l'obtention d'un composé concrètement utilisable au sein d'un milieu aqueux ou hydrophile. Au contraire, l'expérience montre que la présence d'un groupe polaire sur le cycle dipyrrométhène des dipyrrométhènes-bore borocarbonés insaturés de WO2006/087459 ne confère pas systématiquement un caractère hydrosoluble, ni même hydrophile, au composé. En pratique, on observe que de tels composés greffés par certains groupes polaires sur le cycle dipyrrométhène s'agrègent en fait en milieux aqueux ou hydrophiles, ce qui s'explique vraisemblablement par des interactions hydrophobes entre les dipyrrométhènes ou des interactions spécifiques de type liaison hydrogène. Cette agrégation ou interaction intermoléculaire entraîne une extinction de la luminescence.

Un but de la présente invention est de fournir des composés utiles comme marqueurs fluorescents, qui soient utilisables en milieux hydrophiles, et de préférence en milieux, aqueux sans conduire au phénomène d'agrégation précité.

A cet effet, l'invention fournit des composés fluorescents hydrophiles répondant à la formule (I) suivante : 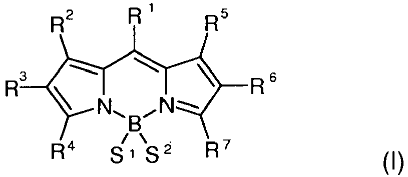 dans laquelle :
◆ S¹ représente un groupe de formule -C≡C-L'-A, où :
   - L' est un groupement de liaison qui est
      - une liaison simple (auquel cas S¹ est un groupe de formule -C≡C-A) ; ou
      - un groupement hydrocarboné divalent choisi dans le groupe consistant en les alkylènes linéaires ou ramifié, comprenant éventuellement un ou plusieurs oxygène, azote ou soufre au sein de leur chaîne (comme les groupements poly(éthylène glycol), poly(éthoxy) ou poly(propoxy), par exemple) ; les alcénylènes linéaires ou ramifiés ; les alcynylènes linéaires ou ramifiés, et les arylènes ; ou une chaîne hydrocarbonée divalente constitué par un enchaînement d'au moins deux groupements hydrocarbonés divalents du type précité ;
   - A est un groupement fonctionnel polaire choisi parmi les groupes sulfonate, sulfate, phosphate, ammonium, carboxylate, hydroxyle, phosphonate, sulfate d'alkylammonium et polyoxyéthylène;
◆ S² représente :
   - un groupe -C≡C-L'-A identique ou différent de S¹, où L' et A ont les significations précitées ;
   - -F;
   - -H; ou
   - une chaîne hydrocarbonée, linéaire ou ramifiée, saturée ou insaturée, éventuellement interrompue par un ou plusieurs atomes d'oxygène, d'azote ou de soufre, éventuellement cyclisée en totalité ou en partie, éventuellement aromatique, et éventuellement fonctionnalisée, et
◆ chacun des groupes R¹, R², R³, R⁴, R⁵, R⁶ ou R⁷ désigne, indépendamment des autres, un groupement -H ou une chaîne hydrocarbonée, linéaire ou ramifiée, saturée ou insaturée, éventuellement interrompue par un ou plusieurs atomes d'oxygène, éventuellement cyclisé en totalité ou en partie, éventuellement aromatique et éventuellement fonctionnalisée,
étant entendu que tout ou partie des groupes R¹, R², R³, R⁴, R⁵, R⁶ et R⁷, peuvent être reliés entre eux pour former une forme pontée (à savoir qu'au moins deux des groupes R¹, R², R³, R⁴, R⁵, R⁶ et R⁷ peuvent former ensemble un cycle avec les carbones auxquels ils sont reliés).

Les composés répondant à la formule (I) ci-dessus sont hydrophiles, à savoir ils présentent une capacité à créer des liaisons avec les molécules d'eau, notamment des liaisons hydrogène et/ou ionique, ou une forte polarité. Pour certains des composés selon l'invention, le caractère hydrophile est suffisant pour assurer une hydrosolubilité. En particulier, de nombreux composés selon l'invention ont une solubilité dans l'eau d'au moins 0,1 mg/L, et certains présentent une solubilité dans l'eau supérieure ou égale à 1 mg/L, voire supérieure à 5 mg/L, par exemple supérieure ou égale à 10 mg/L.

Dans le cadre de la présente invention, les inventeurs ont maintenant mis en évidence qu'un composé répondant à la formule (I) précitée, où au moins un des groupes présents sur le bore comporte un groupement polaire, est hydrophile et ne conduit pas à des phénomènes d'agrégations lorsqu'il est mis en milieu hydrophile ou aqueux, ce qui autorise son utilisation notamment à titre de marqueur fluorescent en milieu hydrophile ou aqueux. Ce résultat se révèle inattendu au vu des résultats observés avec les dipyrrométhènes-bore borocarbonés insaturés de WO2006/087459 comprenant un groupe polaire sur le cycle dipyrrométhène, cités plus haut dans la présente description, pour lesquels on n'observe pas un tel effet. L'effet observé semble, en partie au moins, s'expliquer par le fait que la substitution au niveau du bore par un ou des groupements hydrophiles empêche la formation d'agrégats, la molécule devenant plus encombrée et donc moins susceptible de s'agréger.

De plus, la ou les fonctions hydrophiles introduites au niveau du centre Bore des composés selon l'invention confère aux composés une stabilité chimique supérieure aux composés difluorés (S¹=S²=F) analogues. Cette stabilité permet d'utiliser les composés selon l'invention pour marquer des molécules, qui pourront subir des étapes de synthèse chimique ultérieures (synthèse peptidique, synthétiseur oligonucléotide par exemple), mais permet aussi de pouvoir incorporer les composés selon l'invention dans des dispositifs optoélectroniques (OLED (diode électroluminescente organique), cellules photovoltaïques).

De façon générale, les variations de groupes R¹, R², R³, R⁴, R⁵, R⁶ et R⁷ permettent de moduler la longueur d'onde d'émission des composés.

Différents aspects et modes de réalisation préférentiels de l'invention vont maintenant être décrits plus en détails.

Par « chaîne hydrocarbonée », on entend, au sens de la présente description, une chaîne comprenant un ou plusieurs atomes de carbone et un ou plusieurs atomes d'hydrogène, cette chaîne étant fonctionnalisée ou non fonctionnalisée. Les chaînes hydrocarbonées présentes au sein d'un composé de formule (I) selon l'invention comprennent de préférence de 1 à 8 atomes de carbone, de préférence moins de 6 atomes de carbone. Dans la présente description, lorsqu'il est fait référence à une « chaîne fonctionnalisée », on entend que la chaîne comporte au moins un groupe fonctionnel.

Par « alkylène », on entend ici un radical hydrocarboné saturé divalent, à chaîne droite ou ramifiée, comprenant de préférence de 2 à 10 atomes de carbone, par exemple de 3 à 6 atomes de carbone. Comme exemple, on peut citer les radicaux méthylène, éthylène, propylène, butylène, pentylène, hexylène, octylène, nonylène, décylène, dodécylène, hexadécylène, et octadécylène, linéaires ou ramifiées. Au sens de la présente description, le terme « alkylène » englobe également des groupements du type précité et incluant en outre des atomes d'oxygène. Le polyéthylène glycol et le polypropylène glycol sont les alkylènes linéaires comprenant dans leurs chaînes plusieurs oxygènes préférés.

Par « alcénylène », on entend un radical hydrocarboné divalent comprenant au moins une insaturation éthylénique (typiquement une ou plusieurs liaisons >C=C<, adjacentes ou non), comprenant de préférence de 2 à 8 atomes de carbone, par exemple de 3 à 6 atomes de carbone. A titre d'exemples de radicaux alkénylène, on peut notamment citer les radicaux allylène ou vinylène.

Par « alcynylènes », on entend un radical hydrocarboné divalent comprenant au moins une insaturation acétylénique (typiquement une ou plusieurs liaisons -C≡C-).

Par « arylène », on désigne un radical divalent aromatique hydrocarboné, de 1 a 4 cycles fusionnés ou non, ayant notamment de 4 à 16 atomes de carbone de préférence de 4 à 10 atomes de carbone, et pouvant contenir dans leur cycle des atomes d'azote, de soufre ou d'oxygène (hétérocycles). Les groupes aryles sont éventuellement substitués par un ou plusieurs groupes alkyles ou alkoxy, notamment par méthyle ou méthoxy. Parmi les radicaux aryles, on peut notamment citer le radical phényle, naphtyle, pyrényle, pérylényle, anthracényle, thiényle, pyrolyle, pyridinyle ou furanyle.

Selon un mode de réalisation particulier, les groupes R³ et R⁴ forment ensemble un groupement divalent et/ou les deux groupes R⁶ et R⁷ forment ensemble un groupement divalent. Dans ce cas, lesdits groupements divalents sont de préférence tels qu'ils forment avec les atomes de carbone auxquels ils sont attachés une structure choisie dans le groupe constitué par un cycle ou deux cycles condensés, chaque cycle ayant 5 ou 6 atomes et comprenant des atomes de carbone et éventuellement des hétéroatomes (de préférence 1 à 3 le cas échéant) choisis parmi N, O et S.

Selon un mode de réalisation intéressant, chacun des groupes R¹ R², R³, R⁴, R⁵, R⁶ et R⁷ désigne, indépendamment des autres, un groupement choisi parmi les groupements de formule -H ; -L-H, -G ou -L-G, où :
- G est un groupement fonctionnel, de préférence choisi parmi les groupes amine, amide, acide carboxylique, ester, sulfonate, sulfate, phosphate, ammonium, hydroxyle, phosphonate et polyoxyéthylène
- L est un groupement de liaison constitué par un ou plusieurs segments choisi parmi une liaison simple; les alkylènes linéaires ou ramifiés comprenant éventuellement dans leur chaîne un ou plusieurs oxygène; les alcénylènes linéaires ou ramifiés ; les alcynylènes, et les arylènes; le groupement L pouvant être porteur d'au moins un groupement fonctionnel en plus du groupement G ; ce groupement fonctionnel pouvant être identique au groupement G ou différent. Plus généralement, lorsque L est porteur de plusieurs groupes fonctionnels, ces groupes peuvent être identiques ou différents entre-eux et sont de préférence choisi parmi les groupes amine, amide, acide carboxylique, ester, sulfonate, sulfate, phosphate, ammonium, hydroxyle, phosphonate et polyoxyéthylène.

Lorsque plusieurs groupes R¹, R², R³, R⁴, R⁵, R⁶ et R⁷ répondent à la définition -G ou -L-G, les groupes G peuvent être identiques ou différents.

De préférence, le groupement fonctionnel A présent sur le groupement -C≡C-L'-A présent à titre de groupement S¹ dans les composés de formule (I) est choisi parmi les groupes polyoxyéthylène, phosphate, sulfate et sulfate d'alkylammonium, ce qui confère un caractère hydrophile, voire hydrosoluble, particulièrement prononcé au composé (I). Lorsque le composé (I) est porteur d'un groupe S² répondant à la formule -C≡C-L'-A, il est préférable que le groupement fonctionnel A soit choisi parmi les groupes polaires précités, ce qui tend encore à renforcer l'hydrophilie obtenue.

Selon un mode de réalisation avantageux, dans les composés de formule (I) les groupements S¹ et S² sont tous deux des groupements répondant à la formule -C≡C-L'-A précitée (où L' et A ont l'une des significations précitée). Dans ce mode de réalisation, le composé (I) comporte deux groupes sur le bore qui comportent chacun un groupe A polaire. Les composés selon ce mode de réalisation présentent de ce fait, en règle générale, un caractère hydrophile exacerbé.

De préférence, dans les composés de l'invention, les groupements S¹ et S² sont identiques.

Selon un mode de réalisation particulier, dans les composés de formule (I) selon l'invention, le groupement S¹ (et éventuellement le groupement S²) comporte un groupement polyoxyéthylène. Selon ce mode de réalisation, avantageusement, le groupement S¹ comporte à titre de groupe -L'-A est un groupe de formule -(O-CH₂-CH₂)ₙ-O-S', et le composé hydrophile et fluorescent selon l'invention répond alors a la formule (II) suivante : 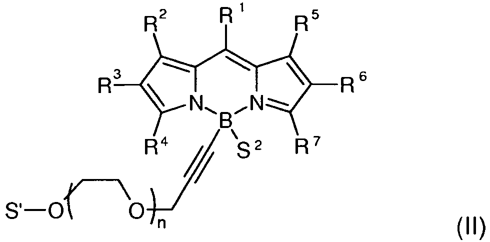 dans laquelle :
◆ R¹, R², R³, R⁴, R⁵, R⁶, R⁷ et S² sont tels que définis ci-dessus,
◆ n représente 1, 2, 3 ou 4,
◆ S' représente -H, -Me -(CH₂)_{n'}-SO₃⁻(X^{m+})_{1/m} ou -(CH₂)_{n'}-PO₃²⁻(X^{m+})_{2/m} où :
   - X^{m+} représente un cation (mono ou polyatomique) de valence m (cette valence M étant typiquement égale à 1, 2, 3 ou 4),
   - n' est un entier égal à 1, 2, 3 ou 4.

Les cations X^{m+} de la formule (II) sont de préférence des cations de métal alcalin, de métal alcalinoterreux ou des cations ammonium quaternaire.

Plus généralement, lorsqu'il est fait mention à des cations associées aux composés de l'invention dans la présente description, ces cations X sont de préférence des cations de métal alcalin, de métal alcalinoterreux ou des cations ammonium quaternaire, typiquement des cations choisis parmi les cations Li⁺, Na⁺, K⁺, Mg²⁺, Ca²⁺, NH₄⁺ et les cations tétraalkylammonium.

Les composés répondant à la formule (II) ci-dessus présentent généralement des propriétés d'hydrophilie particulièrement prononcées, qui s'expliquent entre autres par l'aptitude qu'ont les oxygènes du polyoxyéthylèneglycol à former des liaisons hydrogènes.

La présence de fonctions porteuses de charge sur un ou plusieurs des groupes R¹, R², R³, R⁴, R⁵, R⁶, R⁷, S² et S' augmente encore plus l'hydrophilie, et permet généralement que les composés soient solubles dans l'eau.

Selon un autre mode de réalisation intéressant, dans les composés de formule (I) selon l'invention, le groupement S¹ (et éventuellement le groupement S²) comporte un groupement phosphate. La présence de ce groupement confère au composé des propriétés d'hydrophilie marquées, en particulier grâce à la charge portée par le groupement phosphate, ce qui, là encore, favorise l'hydrophilie du composé dans l'eau. Selon ce mode de réalisation, le composé hydrophile et fluorescent selon l'invention répond de préférence à la formule (III) suivante : 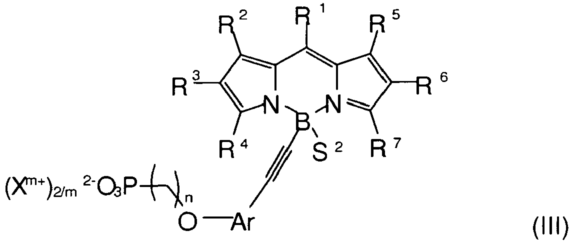 dans laquelle :
- R¹, R², R³, R⁴, R⁵, R⁶, R⁷ et S² sont tels que définis ci-dessus,
- Ar représente un arylène,
   - X^{m+} représente un cation (mono ou polyatomique, de préférence du type précité) de valence m (cette valence M étant typiquement égale à 1, 2, 3 ou 4),
   - n' est un entier égal à 1, 2, 3 ou 4.

Selon encore un autre mode de réalisation, dans les composés de formule (I) selon l'invention, le groupement S¹ (et éventuellement le groupement S²) comporte un groupement zwitterionique de type sulfate d'ammonium ou phosphate d'ammonium. La présence d'un groupement de ce type à titre de groupe S¹ confère en général des propriétés d'hydrophilie élevées au composé, qui s'explique notamment par la présence de la forme bétaïne (association du cation ammonium et du groupement anionique de type phosphate ou sulfate). Selon ce mode de réalisation, le composé hydrophile et fluorescent selon l'invention répond de préférence à la formule (IV) suivante : 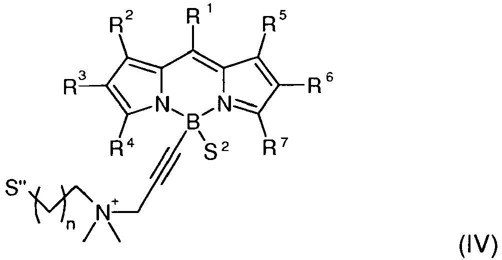 dans laquelle :
- R¹, R², R³, R⁴, R⁵, R⁶, R⁷ et S² sont tels que définis ci-dessus,
- n représente 0, 1, 2, 3, 4 ou 5,
- S" représente -SO₃⁻ ou -PO₃²⁻(X^{m+})_{1/m}
où X^{m+} représente un cation (mono ou polyatomique) de valence m
(cette valence M étant typiquement égale à 1, 2, 3 ou 4)

Avantageusement, dans les composés selon la présente invention, au moins un des groupements R¹, R², R³, R⁴, R⁵, R⁶ ou R⁷ est un groupe porteur d'un groupement fonctionnel polaire choisi parmi les groupes carboxylate, sulfonate, sulfate, phosphate, ammonium, hydroxyle, phosphonate et polyoxyéthylène. Les composés hydrophiles et fluorescents selon ce mode de réalisation spécifique s'avèrent généralement particulièrement hydrophiles, voire hydrosolubles, ce qui semble s'expliquer au moins en partie par le fait qu'ils comportent au moins un groupe polaire sur le groupement dipyrrométhène en plus du ou des groupements polaires S¹ et/ou S² sur le bore. Comme souligné plus haut dans la présente description, la seule présence d'un groupe polaire sur le groupement dipyrrométhène ne suffit pas à lui seul à assurer l'hydrophilie recherchée. Néanmoins, les travaux des inventeurs semblent indiquer qu'en présence d'un groupe polaire S¹ (et éventuellement S²) sur le bore qui assure l'hydrophilie, le groupe polaire sur le groupement dipyrrométhène augmente encore le caractère hydrophile, voire hydrosoluble.

Par ailleurs, dans les composés dans les composés de formule (I) selon l'invention, R¹ représente de préférence un groupement -Ar-L-Y, où :
- Ar représente un arylène,
- L représente une liaison simple; un alkylène linéaire ou ramifié ou un alkynylène substitué linéaire ou ramifié,
- Y représente -Cl, -Br, -I, -COOH, -COOMe, -COOEt, -CONH-CH₂-CH₂-NH₂, -CONH-CH₂-COOEt, -CONH-CH₂-COOH, -CONH-(CH₂)_{q}NCS, ou bien un groupe répondant à l'une des formules suivantes : 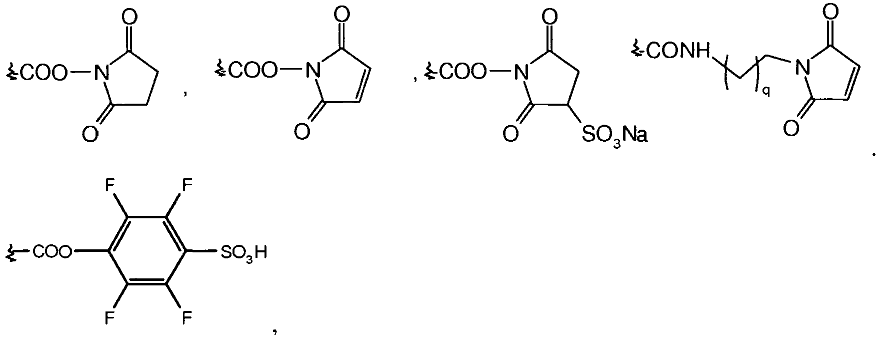
où q représente 1, 2, 3, 4 ou 5.

Dans la formule -Ar-L-Y ci-dessus, le groupement Ar est de préférence un phényle, et le groupement L est de préférence une liaison simple ou un alkynylène.

Lorsque R¹ représente un groupement -Ar-L-Y, les composés de l'invention présentent l'avantage de comporter une fonction Y qui peut servir de fonction de greffage par réaction avec la fonction chimique d'une molécule, en particulier d'une molécule biologique. Le composé fluorescent peut alors notamment être employé à titre de marqueur fluorescent hydrophile ou greffé sur des supports solides hydrophiles selon des techniques connues en soi, décrites notamment dans «The Handbook A guide to fluorescence Probes and Labelling Technologies » tenth edition, R. P. Haugland, Invitrogen 2005 et dans les références qui y sont citées.

Dans les composés de formule (I) selon l'invention, selon un mode de réalisation préférentiel :
◆ les groupements R² et R⁵ sont, indépendamment, des groupes -H ou -Me, et
◆ les groupements R³, R⁴, R⁶ et R⁷ sont choisis indépendamment parmi -H, -Me, -C≡C-CH₂-N⁺(Me)₂-(CH₂)ₙ-SO₃⁻, -C≡C-Ar-R' et un groupe de formule 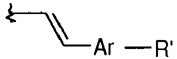
où :
- Ar représente un arylène,
- R' représente -OMe, -CH₂- PO₃²⁻(X^{m+})_{2/m}, ou -C≡C-CH₂-R", où R" représente -O-(CH₂-CH₂-O)ₙ-CH₃, -O-(CH₂-CH₂-O)ₙ-CH₂-PO₃²⁻(X^{m+})_{2/m}, -O-(CH₂-CH₂-O)ₙ-CH₂-SO₃⁻(X^{m+})_{1/m}, -N⁺(Me)₂-CH₂-(CH₂)ₙ-PO₃²⁻(X^{m+})_{1/m} ou -N⁺(Me)₂-CH₂-(CH₂)ₙ-SO₃⁻, où :
   - n représente 1, 2, 3 ou 4
   - X^{m+} représente un cation (mono ou polyatomique) de valence m (cette valence M étant typiquement égale à 1, 2 ou 3).

Plus généralement, dans les composés de l'invention, les groupements R³, R⁴, R⁶ et R⁷ sont de préférence choisis parmi -H, -Me et

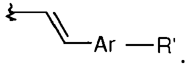

Lorsque R³, R⁴, R⁶ et/ou R⁷ représentent -C≡C-Ar-R' ou 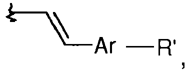 Ar représente de préférence un phényle ou un thiényle.

Selon un mode de réalisation particulièrement préféré, dans les composés de la présente invention :
◆ R¹ représente un groupement -Ar-L-Y, où :
   - Ar représente un arylène,
   - L représente une liaison simple; un alkylène linéaire ou ramifié ou un alkynylène substitué linéaire ou ramifié,
   - Y représente -Cl, -Br, -I, -COOH, -COOMe, -COOEt, -CONH-CH₂-CH₂-NH₂, -CONH-CH₂-COOEt, -CONH-CH₂-COOH, -CONH-(CH₂)_{q}NCS, ou bien un groupe répondant à l'une des formules suivantes : 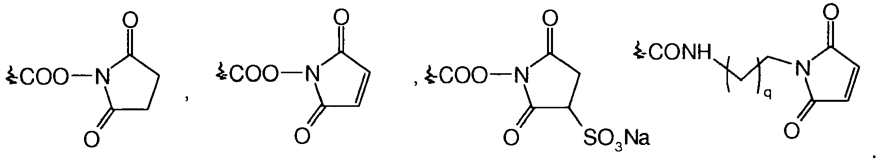 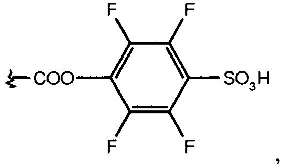
   où q représente 1, 2, 3, 4 ou 5,
◆ les groupements R² et R⁵ sont choisis parmi -H et -Me, et
◆ les groupements R³, R⁴, R⁶ et R⁷ sont choisis parmi -H, -Me, -C≡C-CH₂-N⁺(Me)₂-(CH₂)ₙ-SO₃⁻, -C≡C-Ar-R' et 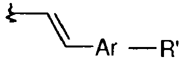 dans laquelle :
   - Ar représente un arylène,
   - R' représente -OMe, -CH₂- PO₃²⁻(X^{m+})_{2/m}, ou -C≡C-CH₂-R", où R" représente -O-(CH₂-CH₂-O)ₙ-CH₃, -O-(CH₂-CH₂-O)ₙ,-CH₂-PO₃²⁻(X^{m+})_{2/m}, -O-(CH₂-CH₂-O)ₙ-CH₂-SO₃⁻(X^{m+})_{1/m}, -N⁺(Me)₂-CH₂-(CH₂)ₙ-PO₃²⁻(X^{m+})_{1/m} ou -N⁺(Me)₂-CH₂-(CH₂)ₙ-SO₃⁻, où :
      - n représente 1, 2, 3 ou 4
      - X représente un cation, et
      - m représente la valence du cation X.

Selon un mode de réalisation particulier, les composés de l'invention sont des composés de formule (I) précitée où R² et R⁵ sont identiques.

Typiquement (notamment pour des raisons de facilité de synthèse) les composés de l'invention sont généralement des composés symétriques, à savoir des composés dans lesquels :
- R² et R⁵ sont identiques,
- R³ et R⁶ sont identiques, et
- R⁴ et R⁷ sont identiques.

Néanmoins, la présente invention s'étend naturellement à des composés non symétriques, qui présentent également les propriétés et avantages inhérents à tous les composés répondant à la formule générale (I).

Selon un mode de réalisation préféré, les composés fluorescents hydrophiles de l'invention peuvent avantageusement répondre à la formule (la) ci-dessous : 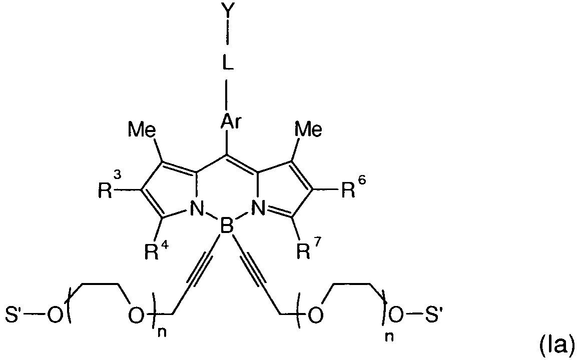 dans laquelle :
◆ S' est tel que défini ci-dessus,
◆ Ar, L et Y sont tels que définis ci-dessus,
◆ n représente 1, 2, 3 ou 4,
◆ R³, R⁶, R⁴ et R⁷ sont choisis tels que :
   - R³ et R⁶ sont identiques et représentent -H et R⁴ et R⁷ sont identiques et représentent -Me,
   - R³ et R⁶ sont identiques et représentent -Et et R⁴ et R⁷ sont identiques et représentent -Me,
   - R³ et R⁶ sont identiques et représentent -H et R⁴ et R⁷ sont identiques et représentent 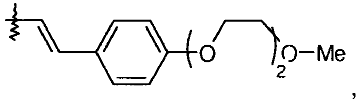
   - R³ et R⁶ sont identiques et représentent -H, R⁴ représente -Me et R⁷ représente 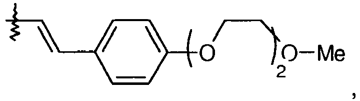
   - R³ et R⁶ sont identiques et représentent -H et R⁴ et R⁷ sont identiques et représentent 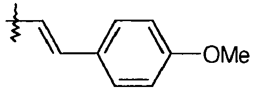
   - R³ et R⁴ forment ensemble un groupe divalent -(CH₂)₄- et R⁶ et R⁷ forment ensemble un groupe divalent -(CH₂)₄-, ou
   - R³ et R⁶ sont identiques et représentent -H, R⁴ représente -Me et R⁷ représente 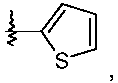 substitué ou non.

A titre d'exemples non limitatifs de composés de formule (la) bien adaptés selon l'invention, on peut notamment citer les composés répondant aux formules (Ia-1) à (Ia-20) ci-dessous :

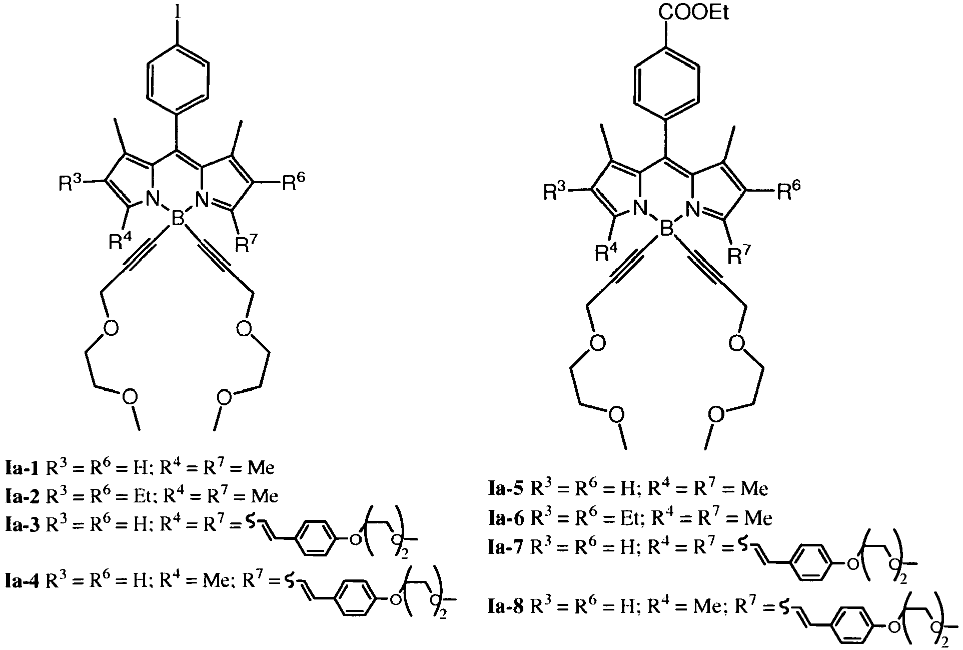

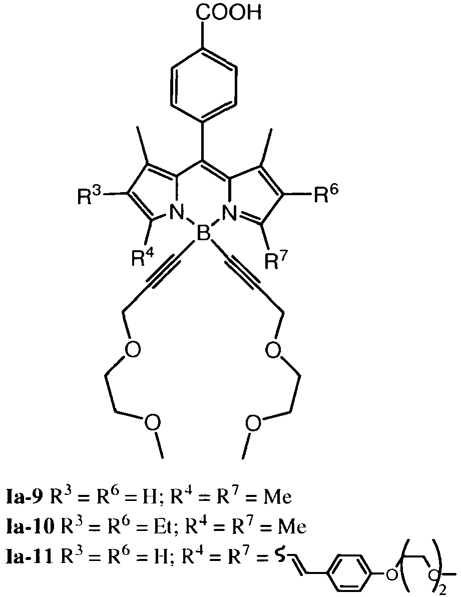

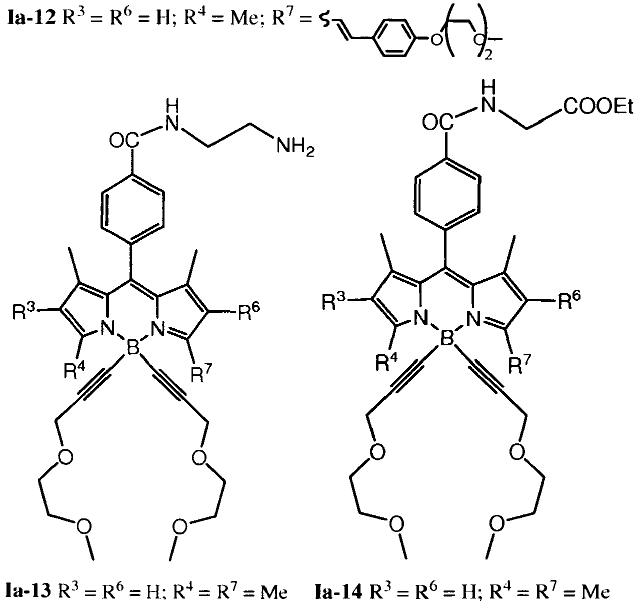

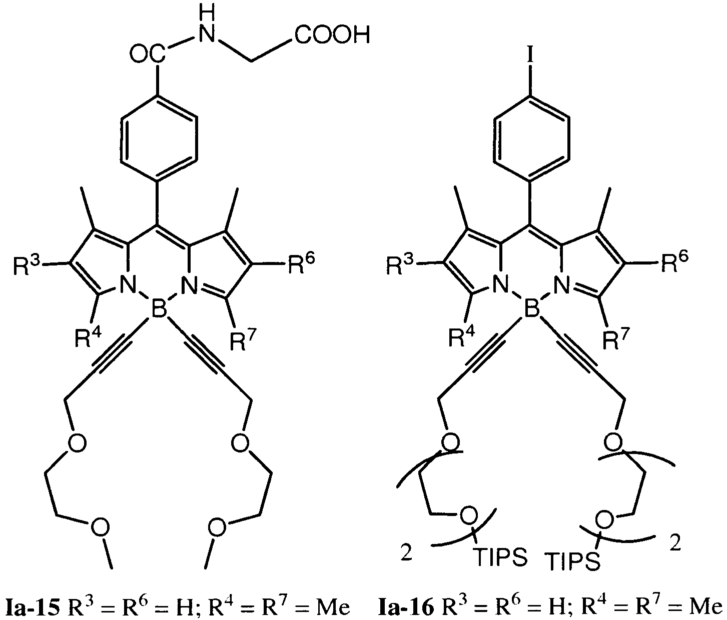

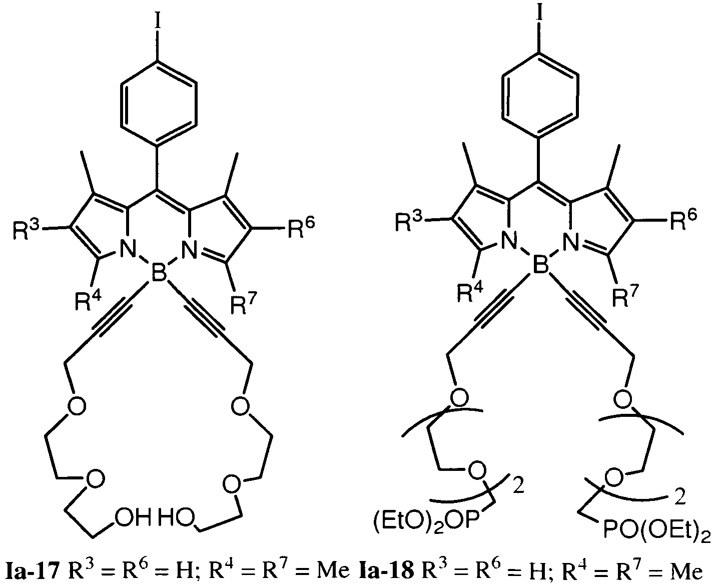

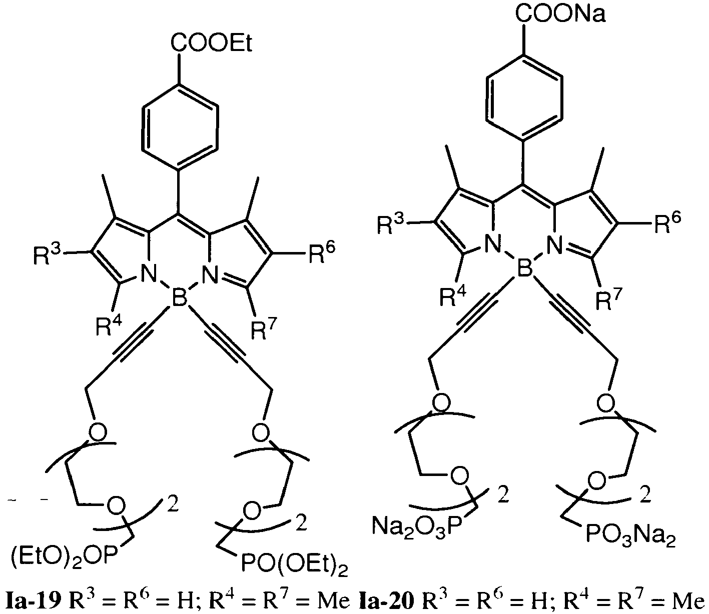

Les composés **Ia-1** à **Ia-20** ont l'avantage de présenter des propriétés optiques similaires à celles des fluorophores couramment utilisés :
- **Ia-1, Ia-5, Ia-9, Ia-16** à **Ia-20** ont des caractéristiques optiques similaires à la fluorescéine,
- **Ia-2, Ia-6, Ia-10** ont des caractéristiques optiques similaires à la Rhodamine 6G ;
- **Ia-4, Ia-8, Ia-12** ont des caractéristiques optiques similaires à TMR (tétraméthyl rhodamine);
- **Ia-3, Ia-7, Ia-11** ont des caractéristiques optiques similaires à TOTO-3 (1,1'-(4,4,7,7-tetramethyl-4,7-diazaundecamethylene)-bis-4-[3-methyl-2, 3-dihydro-(benzo-1,3-thiazole)-2-propenylidene]-quinolinum tetraiodide).

Selon un mode de réalisation particulier, les composés fluorescents hydrophiles de l'invention répondent à la formule (Ic) suivante : 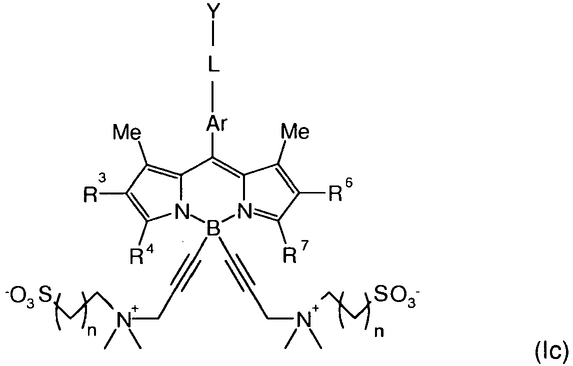 dans laquelle :
- Y, L et Ar sont tels que définis ci-dessus,
- R³, R⁶, R⁴ et R⁷ sont tels que définis ci-dessus, et,
- n représente 2, 3 ou 4.

A titre de composés de formule (Ic) bien adaptés selon la présente, on peut notamment citer, entre autres, les composés de formules (Ic-1), (Ic-2) et (Ic-3) suivants :

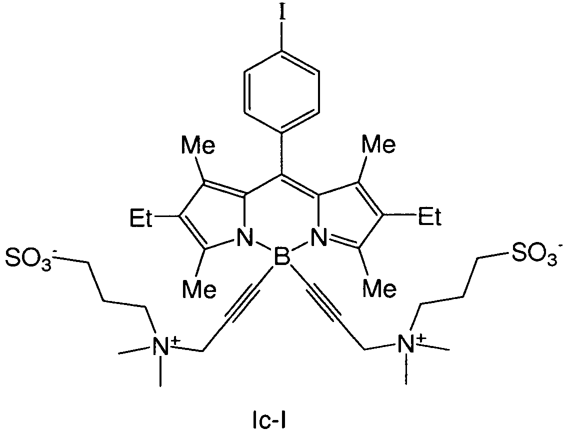

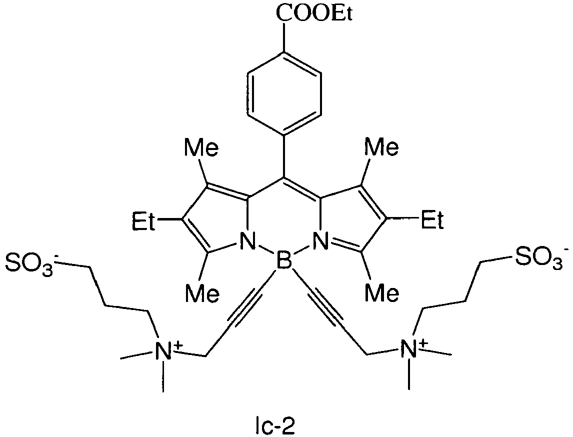

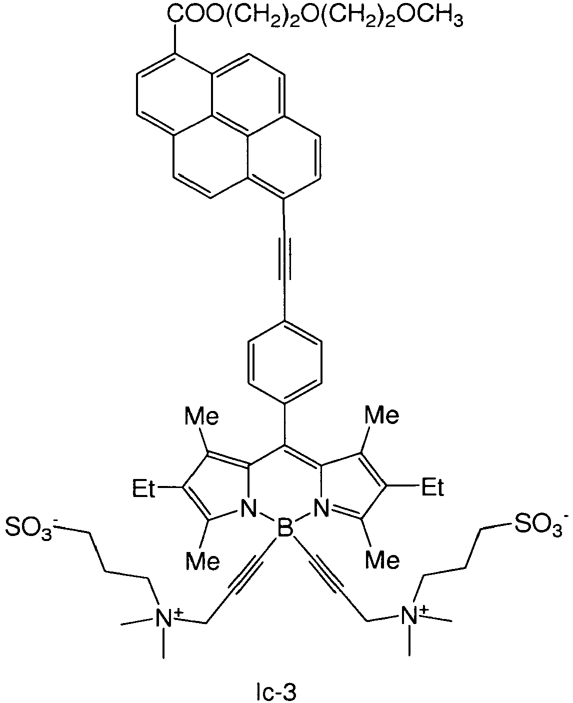

Selon un autre mode de réalisation, les composés fluorescents hydrophiles de l'invention répondent à la formule (le) suivante : 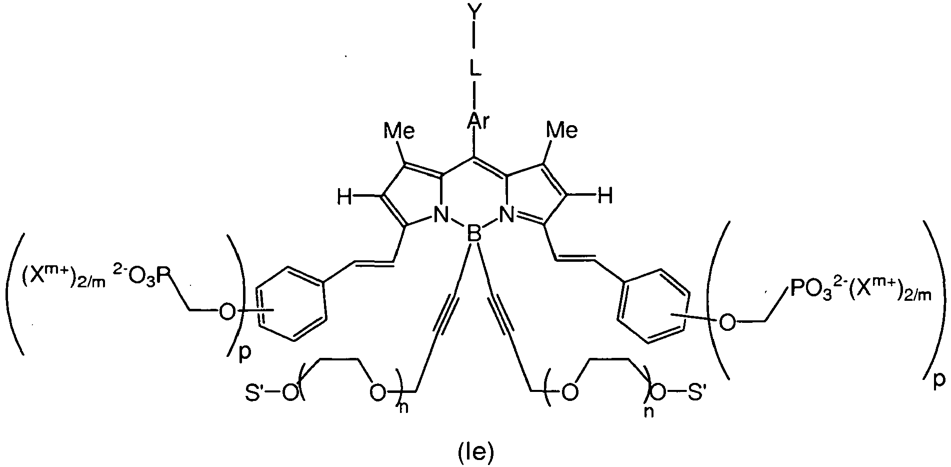 dans laquelle :
- Y, Ar et L sont tels que définis ci-dessus, et
- n représente 1, 2, 3 ou 4,
- S' est tel que défini ci-dessus, et désigne de préférence -Me,
- X représente un cation, et,
   - m représente la valence du cation X.
   - p représente 1 ou 2.

Dans un mode de réalisation, les composés fluorescents hydrophiles de l'invention ont la formule (If) suivante : 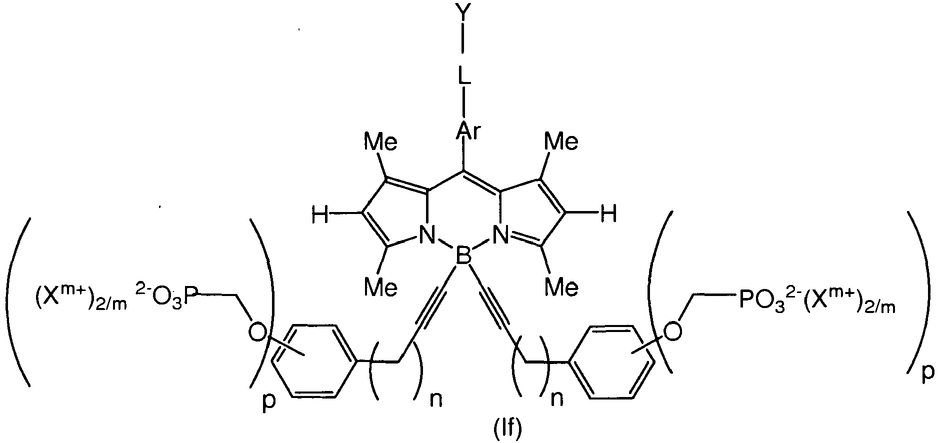 dans laquelle :
- Y, Ar et L sont tels que définis dans la revendication 8, et
   - X représente un cation,
   - n représente 0, 1, 2, 3, ou 4,
   - m représente la valence du cation X, et
   - p représente 1 ou 2.

Les composés de l'invention se révèlent en particulier utiles à titre de marqueur fluorescent en milieu aqueux. Dans un mode de réalisation préféré, au moins l'un des groupements R¹, R², R³, R⁴, R⁵, R⁶ et R⁷ comporte une fonction permettant le greffage sur la molécule à marquer, notamment une fonction Y telle que définie ci-dessus. De préférence, le groupe R¹ des composés utilisés comme marqueur fluorescent comporte une fonction permettant le greffage sur la molécule à marquer, notamment une fonction Y telle que définie ci-dessus.

Typiquement, un composé fluorescent et hydrophile selon l'invention peut être mis en oeuvre dans un procédé de marquage en milieu aqueux comprenant une étape de mise en contact au sein d'un milieu aqueux d'un composé de formule (I), de préférence à l'état solubilisé dans ledit milieu aqueux, et d'une molécule à marquer porteuse d'un groupement susceptible de réagir avec un des groupements du composé de formule (I), notamment la fonction Y.

Les composés fluorescents et hydrophiles de l'invention peuvent être utilisés dans un grand nombre d'applications, incluant entre autres les applications suivantes :
- le marquage de molécules d'intérêt biologique :
   ○ polypeptides et protéines
   ○ oligonucléotides, brin d'ADN et d'ARN
   ○ anticorps
   ○ enzymes
- microscopie de fluorescence
- cytométrie de flux
- dosage fluoroimmunologique.

Les composés peuvent notamment être utilisés pour marquer des acides aminés ou des nucléotides, qui peuvent ensuite respectivement être utilisés pour la synthèse de peptides ou d'oligonucléotides.

Par ailleurs, grâce à la stabilité chimique accrue des composés selon l'invention par rapport au composés dans lesquels S¹=S²=F, et à leurs propriétés électrochimiques, les composés selon l'invention peuvent être utilisés dans des systèmes optoélectroniques tels que des OLED (Diode électroluminescente organique) ou des cellules photovoltaïques.

Ces techniques de marquage, de microscopie de fluorescence, de cytométrie de flux et de dosage fluoroimmunologique peuvent être mises en oeuvre avec les composés selon l'invention en suivant les techniques rapportées dans «The Handbook A guide to fluorescence Probes and Labelling Technologies » tenth edition, R. P. Haugland, Invitrogen 2005 et dans les références cités dans cet ouvrage

Ces utilisations constituent, selon un autre aspect, un objet particulier de la présente invention.

Les composés selon l'invention peuvent être synthétisés par les techniques connues de l'homme du métier.

A titre d'exemple sont décrites ci-dessous des voies de synthèses des composés spécifiques **Ia-1** à **Ia-20,** qui peuvent être adaptées pour la préparation d'autres composés répondant à la formule (I).

Les composés **Ia-1** à **Ia-4** peuvent être obtenus par action du méthoxyéthoxyéthynyl Grignard dans le THF (tétrahydrofurane), typiquement à une température d'environ 60°C, par exemple en suivant le protocole décrit dans la demande PCT/WO 2006/087459A2 en partant des Composés 1-4 qui ont été préparés en suivant la littérature par l'homme de l'art. La fonction iode peut ensuite être convertie en dérivés carbonylés, par exemple sous atmosphère de monoxyde de carbone en présence de catalyseur [Pd(PPh₃)₂Cl₂], notamment dans un mélange triéthylamine/benzène à 70°C. Le choix du nucléophile utilisé permet d'obtenir directement de nombreuses fonctions pouvant être utilisées pour le couplage sur une molécule biologique ou l'utilisation dans un synthétiseur de protéine. Avec de l'éthanol, les esters éthyliques **Ia-5** à **Ia-8** sont obtenus avec de très bons rendements, ces esters sont saponifiés pour obtenir les acides carboxyliques **Ia-9** à **Ia-12** correspondants (Schéma 1). Ces composés sont très hydrophiles. Ia-9, Ia-10 et 1a-12 présentent l'avantage d'être solubles dans l'eau à pH=7, sous forme de carboxylate. Les composés hydrosolubles spécifiques constituent un objet particulier de la présente invention. Ces acides carboxyliques peuvent être directement utilisés pour le marquage, ou des espaceurs de types acides aminés peuvent être greffés en utilisant des techniques de couplage peptidique.

Typiquement, les composés peuvent être synthétisés selon la voie de synthèse décrite dans le schéma 1 ci-dessous.

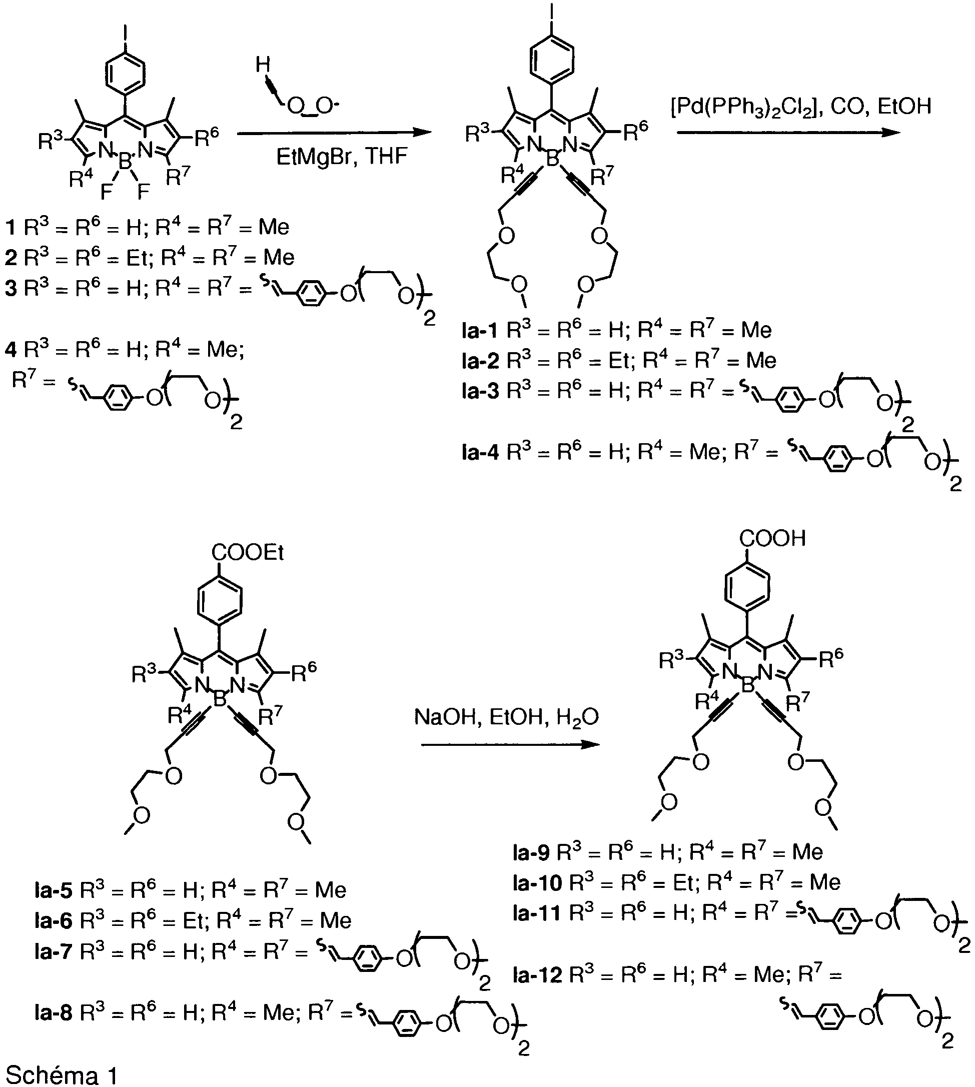

En utilisant une diamine aliphatique en excès, le composé **Ia-13** peut être obtenu. Un acide amine protégé (exemple : ester éthylique de la glycine) peut également être introduit directement pour donner la-14, dont l'acide carboxylique **Ia-15** correspondant peut être obtenu par saponification (Schéma 2). Le composé la-15 présente l'avantage d'être hydrosoluble.

Typiquement, les composés peuvent être synthétisés selon la voie de synthèse décrite dans le schéma 2 ci-dessous.

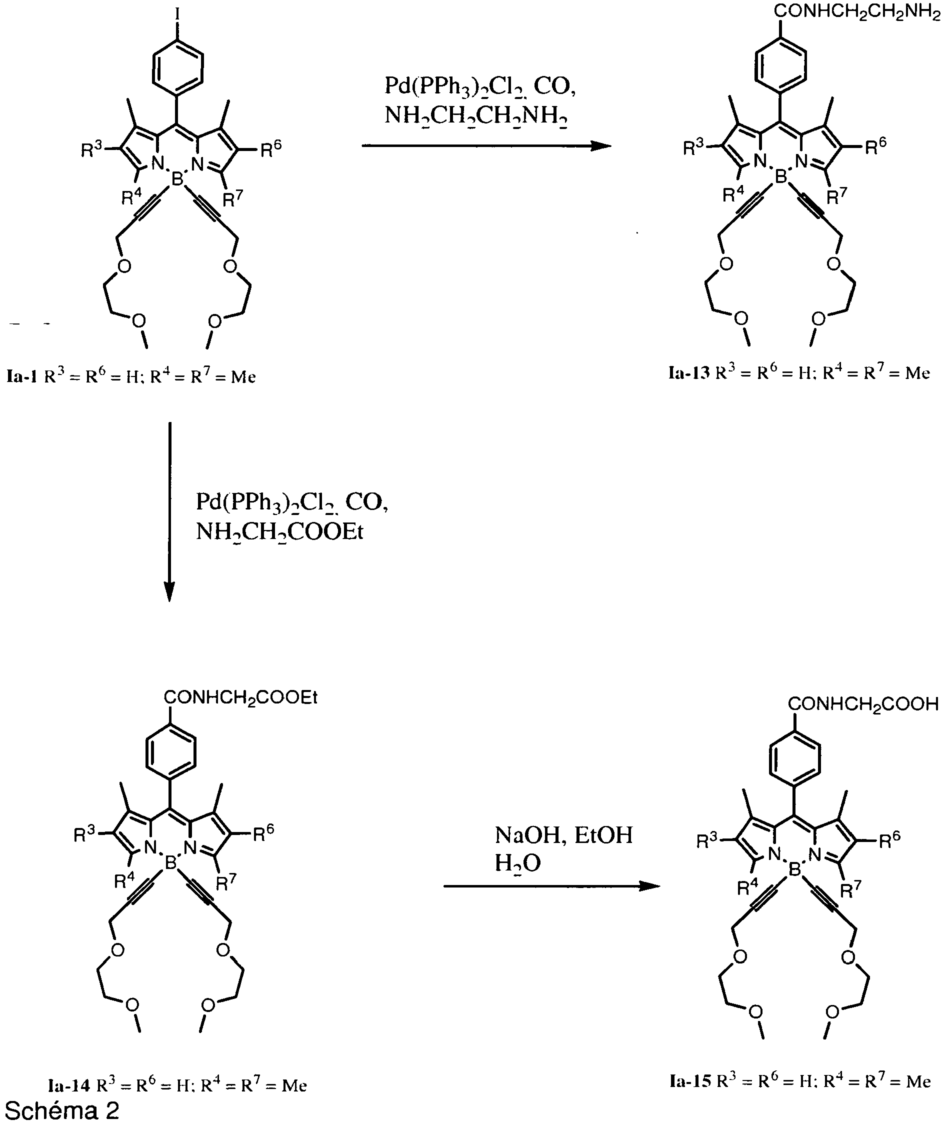

Le composé **Ia-16** peut notamment être obtenu par action du triisopropylsillyloxyéthoxyéthynyl Grignard, par exemple dans le THF à 60°C, notamment en suivant les procédures de la demande PCT/WO 2006/087459A2 en partant du Composé **1.** Le groupement protecteur TIPS (triisopropylsilyle) peut ensuite être éliminé en milieu acide, par exemple avec une solution aqueuse de HCl à 0,1 M. Le dialcool **Ia-17** peut ensuite être déprotoné, par exemple avec du *t-*butoxide de potassium, et du triflate de diéthylphoshonate peut être additioné. Le composé **Ia-18** peut alors être modifié en position méso, portant un iodure d'aryle. Un ester d'éthyle peut être synthétisé par réaction avec du monoxyde de carbone, par exemple en présence d'éthanol, de catalyseur [Pd(PPh₃)₂Cl₂], dans un mélange triéthylamine benzène à environ 70°C. Le composé **Ia-19** ainsi obtenu peut être saponifié pour donner le composé ciblé **Ia-20** (Schéma 3).

Typiquement, les composés peuvent être synthétisés selon la voie de synthèse décrite dans le schéma 3 ci-dessous.

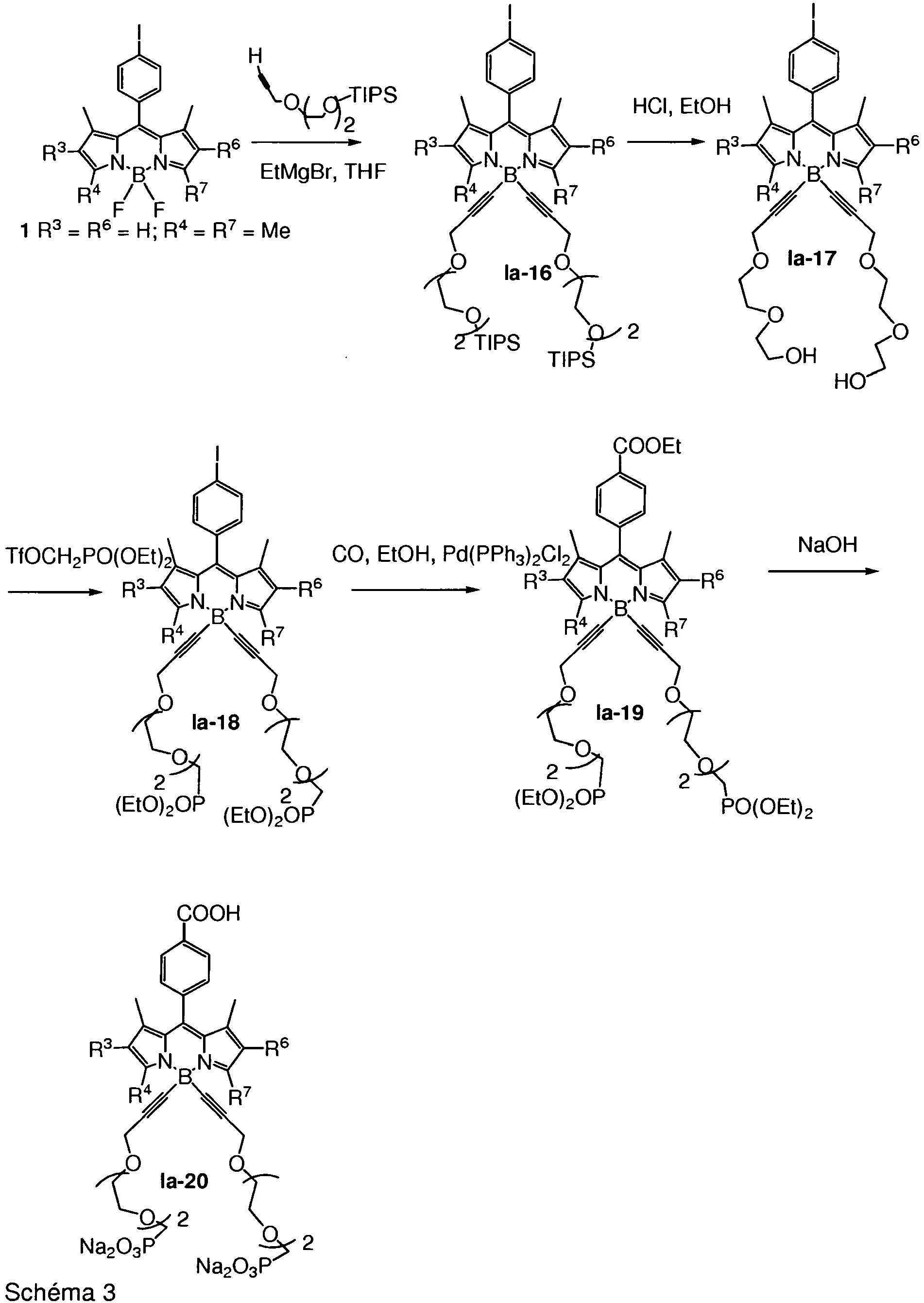

Les composés de la famille **Ic** peuvent être obtenus en suivant le protocole synthétique décrit dans le Schéma 4. Comme exemple le composé **2,** a peut réagir avec du diméthylamino-propyne Grignard, notamment dans du THF à environ 60°C, pour obtenir le composé intermédiaire **Ic-0.** Celui-ci peut ensuite être mis en présence de propanesultone, par exemple dans du toluène, pour donner le composé **Ic-1.** Le composé Ic-1 présente l'avantage d'être hydrosoluble. La fonction iode du composé **Ic-1** peut être utilisée à titre d'exemple pour introduire un ester carboxylique par réaction de carboalcoxylation, notamment en présence de catalyseur au palladium, pour donner le composé **Ic-2**, celui-ci peut aisément être saponifié par l'homme de l'art pour donner l'acide carboxylique correspondant. Un groupe pouvant servir de chromophore supplémentaire (pour créer une dyade, c'est-à-dire une molécule composée de deux fluorophores absorbant à des longueurs d'ondes différentes et où la partie absorbant à haute énergie transfère de l'énergie à la deuxième qui émet alors une lumière de plus basse énergie) peut aussi être introduit par exemple par couplage catalysé par du palladium sous-ligandé avec un pyrène disubstitué portant une fonction acétylènique vraie, pour donner le fluorophore **Ic-3.** De façon analogue, la fonction ester peut être aisément saponifiée (Schéma 4).

Typiquement, les composés peuvent être synthétisés selon la voie de synthèse décrite dans le schéma 4 ci-dessous.

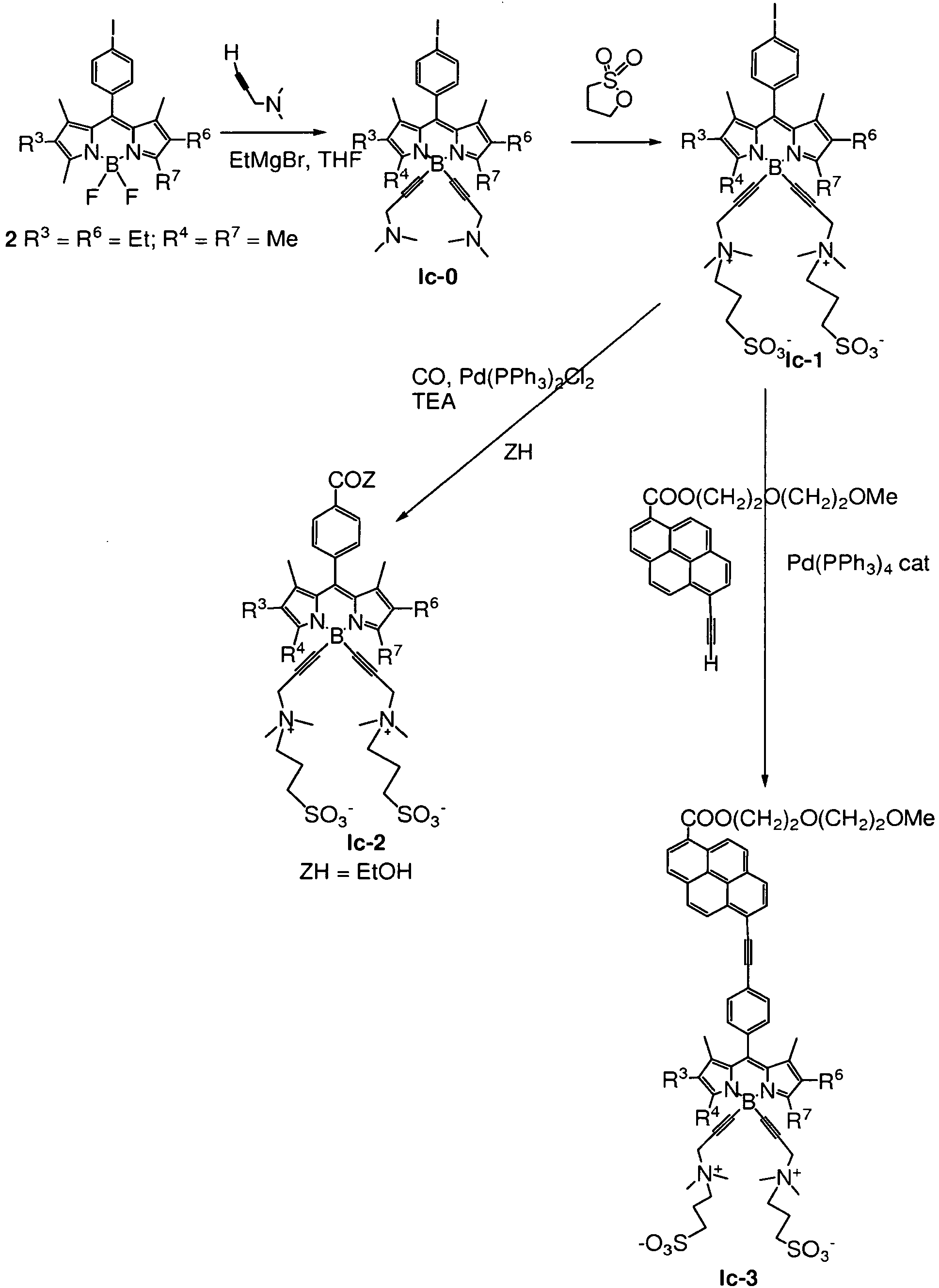

Les composés hydrosolubles spécifiques **Ia-9, Ia-10, Ia-12, Ia-15** et **Ic-1** constituent un objet particulier de la présente invention.

### Exemples :

Les différents composés fluorescents hydrophiles selon l'invention ont été synthétisés selon les protocoles décrits ci-après.

### Préparation du composé Ia-1

Le composé **Ia-1** a été préparé selon le schéma réactionnel suivant :

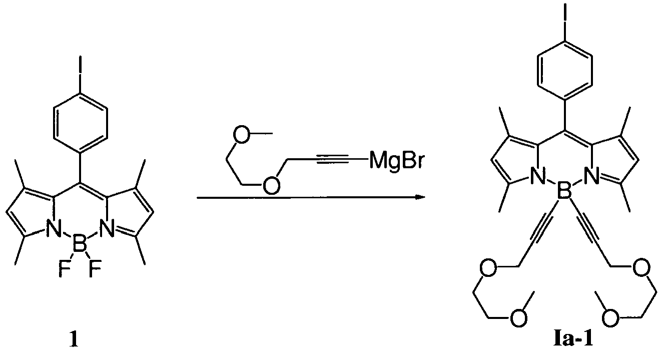

A une solution de 2,5-dioxaoct-7-yne (1,1 mL, 8,90 mmol) dans du THF anhydre, à température ambiante, on a ajouté sous argon du bromure d'éthylmagnésium (1,0 M dans le THF, 8 ml). Le mélange a été agité pendant 2 h à 60°C, puis laissé se refroidir à température ambiante. La solution ainsi obtenue a été transférée par une canule dans une solution de difluoroboradipyrrométhène 1b (900 mg, 1,778 mmol) dans du THF anhydre. La solution a été agitée pendant une nuit à 60°C, puis de l'eau a été ajoutée. Cette solution a été extraite avec du dichlorométhane. La phase organique est ensuite lavée avec de l'eau (3X20 ml) puis avec une solution saturée de NaCl (1X20 ml). Après évaporation, le résidu organique a été purifié par chromatographie sur colonne de gel de silice (Acétate d'éthyle/ éther de pétrole, 10:90 ; 20 :80 ; 30 :70), et on a obtenu le composé **Ia-1** sous forme d'une poudre orange (1080 mg, 87%).

### Caractérisation du composé Ia-1

¹H RMN (CDCl₃ 300 MHz) : 0,94 (t, 3H, ³*J* = 7,55 Hz), 1,26 (s, 6H), 2,29 (q, 4H, ³*J*= 7,55Hz), 2.65 (s, 6H), 3,31 (s, 6H), 3,50 (m, 4H), 3,61 (m, 4H), 4,15 (s, 4H), 7,40 (AB sys, 4H, *J_{AB}* = 8,55 Hz, υ_{ο}δ = 226,42 Hz);

¹³C RMN (CDCl₃, 300 MHz): δ = 12,19, 14,09, 14,80, 17,44, 59,06, 59,82, 68,60, 71,88, 90,72, 94,35, 128,84, 130,66, 133,11, 136,07, 136,10, 138,21, 138,53, 154.

UV-Vis (CH₂Cl₂) λ nm (ε, M⁻¹ cm⁻¹) = 501 (90000), 365 (4500), 325 (5300), 280 (8700);

Analyse élémentaire calculée pour C₃₁H₃₆BlN₂O₄ : C, 58,33 ; H, 5,68 ; N, 4,39. Trouvé: C, 58,12 ; H, 5,41 ; N, 4,19.

### Préparation du composé Ia-2

Le composé **Ia-2** a été préparé selon le schéma réactionnel suivant :

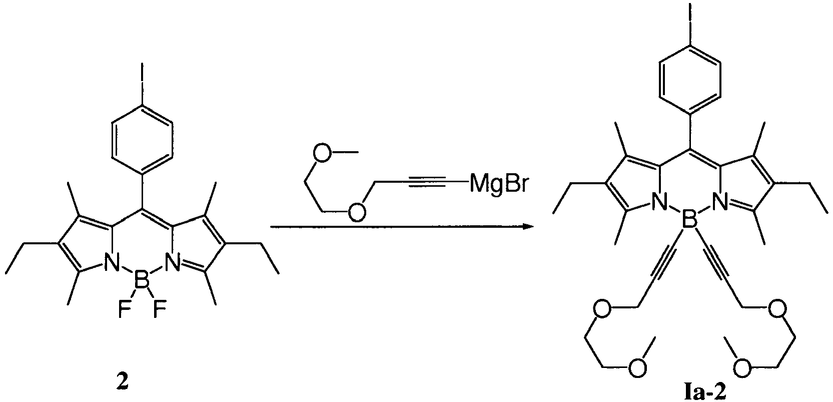

A une solution de 2,5-dioxaoct-7-yne (1,1 mL, 8,90 mmol) dans du THF anhydre, à température ambiante, on a ajouté sous argon du bromure d'éthylmagnésium (1,0 M dans le THF, 8 ml). Le mélange a été agité pendant 2 h à 60°C, puis laissé se refroidir à température ambiante. La solution ainsi obtenue a été transférée par une canule dans une solution de difluoroboradiyrrométhène 1 b (900 mg, 1,778 mmol) dans du THF anhydre. La solution a été agitée pendant une nuit à 60°C, puis de l'eau a été ajoutée. Cette solution a été extraite avec du dichlorométhane. La phase organique est ensuite lavée avec de l'eau (3X20 ml) puis avec une solution saturée de NaCl (1X20 ml). Après évaporation, le résidu organique a été purifié par chromatographie sur colonne de gel de silice (Acétate d'éthyle/ éther de pétrole, 10:90 ; 20 :80 ; 30 :70), et on a obtenu le composé **Ia-2** sous forme d'une poudre orange (1080 mg, 87%).

### Caractérisation du composé Ia-2

¹H RMN (CDCl₃ 300 MHz) : 0,94 (t, 3H, ³*J* = 7,55 Hz), 1,26 (s, 6H), 2,29 (q, 4H, ³*J*= 7,55Hz), 2.65 (s, 6H), 3,31 (s, 6H), 3,50 (m, 4H), 3,61 (m, 4H), 4,15 (s, 4H), 7,40 (AB sys, 4H, *J_{AB}* = 8,55 Hz, *uₒ*δ= 226,42 Hz);

¹³C RMN (CDCl₃, 300 MHz): δ = 12,19, 14,09, 14,80, 17,44, 59,06, 59,82, 68,60, 71,88, 90,72, 94,35, 128,84, 130,66, 133,11, 136,07, 136,10, 138,21, 138,53, 154.

UV-Vis (CH₂Cl₂) λ nm (ε, M⁻¹ cm⁻¹) = 522 (82000), 488 (20000), 381 (6400), 277 (6400);

### Préparation du composé Ia-3

Le composé **Ia-3** a été préparé selon le schéma réactionnel suivant :

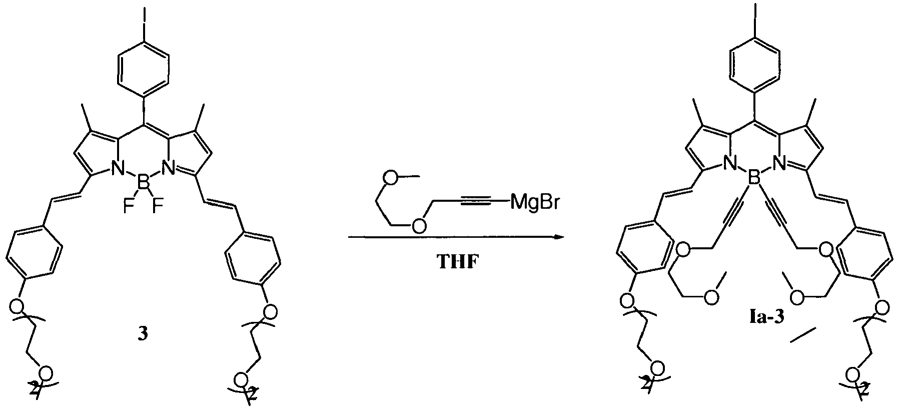

A une solution de 2,5-dioxaoct-7-yne (0,49 mL, 0.41 mmol) dans du THF anhydre, à température ambiante, on a ajouté sous argon du bromure d'éthylmagnésium (1,0 M dans le THF, 3,7 ml). Le mélange a été agité pendant 2 h à 60 °C, puis laissé se refroidir à température ambiante. La solution ainsi obtenue a été transférée par une canule dans une solution de difluoroboradipyrrométhène 1 c (670 mg, 0,816 mmol) dans du THF anhydre. La solution a été agitée pendant une nuit à 60°C, puis de l'eau a été ajoutée. Cette solution a été extraite avec du dichlorométhane. La phase organique est ensuite lavée avec de l'eau (3X20 ml) puis avec une solution saturée de NaCl (1X20 ml). Après évaporation, le résidu organique a été purifié par chromatographie sur colonne de gel de silice (Acétate d'éthyle/ éther de pétrole, 80 :20 ; 100%), et on a obtenu le composé **Ia-3** sous forme d'une poudre bleue (780 mg, 91%).

### Caractérisation du composé Ia-3

¹H RMN (CDCl₃ 300 MHz) : 1,46 (s, 6H), 3,15 (m, 4H), 3,19 (s, 6H), 3,40 (s, 6H), 3,50 (m, 4H), 3,59 (m, 4H), 3,74 (m, 4H), 3,88 (m, 4H), 4,15 (s, 4H), 4,18 (m, 4H), 6,62 (s, 2H), 7,26 (AB sys, 8H, *J_{AB}* = 8,65 Hz, *uₒ*δ= 180,55 Hz), 7,11 (m, 4H), 7,82 (d, 2H), 8,05 (d, 2H).

¹³C RMN (CDCl₃, 300 MHz): δ =15,21, 27,01, 58,86, 59,19, 59,50, 67,64, 68,26, 69,80, 70,91, 71,61, 72,07, 91,64, 94,62, 115,20, 118,15, 119,15, 128,89, 130,24, 130,80, 131,33, 134,16, 135,37, 136,82, 138,23, 140,04, 152,26, 159,62.

UV-Vis (CH₂Cl₂) λ nm (ε, M⁻¹ cm⁻¹) = 646 (126600), 600 (43000), 371 (76500), 266 (8080);

### Préparation du composé Ia-4

Le composé **Ia-4** est préparé selon le schéma réactionnel suivant :

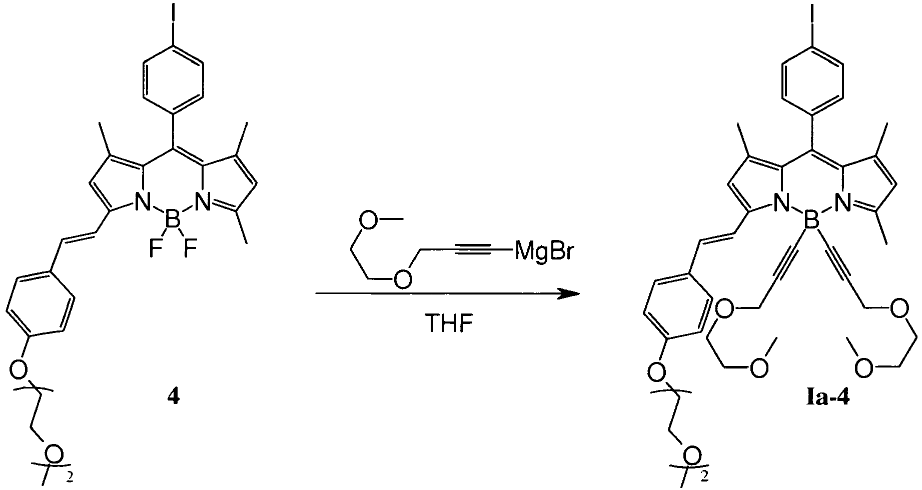

A une solution de 2,5-dioxaoct-7-yne (0,25 mL, 2.1 mmol) dans du THF anhydre, à température ambiante, on a ajouté sous argon du bromure d'éthylmagnésium (1,0 M dans le THF, 1.90 ml). Le mélange a été agité pendant 2 h à 60°C, puis laissé se refroidir à température ambiante. La solution ainsi obtenue a été transférée par une canule dans une solution de difluoroboradipyrrométhène 4 (273 mg, 0,418 mmol) dans du THF anhydre. La solution a été agitée pendant une nuit à 60°C, puis de l'eau a été ajoutée. Cette solution a été extraite avec du dichlorométhane. La phase organique est ensuite lavée avec de l'eau (3X20 ml) puis avec une solution saturée de NaCl (1X20 ml). Après évaporation, le résidu organique a été purifié par chromatographie sur colonne de gel de silice (Acétate d'éthyle/ éther de pétrole, 20 :80 ; 40 :60), et on a obtenu le composé **Ia-4** sous forme d'une poudre violette (300 mg, 85%).

### Caractérisation du composé Ia-4

¹H RMN (CDCl₃ 300 MHz) :1,40 (s, 3H), 1,44 (s, 3H), 2,73 (s, 3H), 3,25 (s, 6H), 3,30 (m, 4H), 3,39 (s, 3H), 3,54 (m, 4H), 3,59 (m, 2H), 3,72 (m, 2H) 3,87 (m, 2H) 4,17 (s, 4H), 6,02 (s, 1H), 6,59 (s, 1H), 7,22 (AB sys, 4H, *J_{AB}* = 8,65 Hz, *uₒ*δ= 179,98 Hz); 7,48 (AB sys, 4H, *J_{AB}* = 8,28 Hz, *uₒ*δ= 223,73 Hz), 7,57 (AB sys, 2H, *J_{AB}* = 16,18 Hz, *uₒ*δ= 296,87 Hz)

¹³C RMN (CDCl₃, 300 MHz,) : δ = 14,31, 14,99, 15,20, 16,36, 58,94, 59,20, 59,58, 67,63, 68,41, 69,79, 70,91, 71,69, 72,06, 91,40, 94,64, 115,13, 118,01, 119,16, 121,84, 128,72, 129,94, 130,17, 130,52, 130,68, 133,94, 135,27, 138,28, 138,61, 140,44, 140,66, 152,45, 155,40, 159,58.

UV-Vis (CH₂Cl₂) λ nm (ε, M⁻¹ cm⁻¹) = 572 (93500), 533 (27600), 328 (47800)

### Préparation du composé Ia-5

Le composé **Ia-1** a été préparé selon le schéma réactionnel suivant :

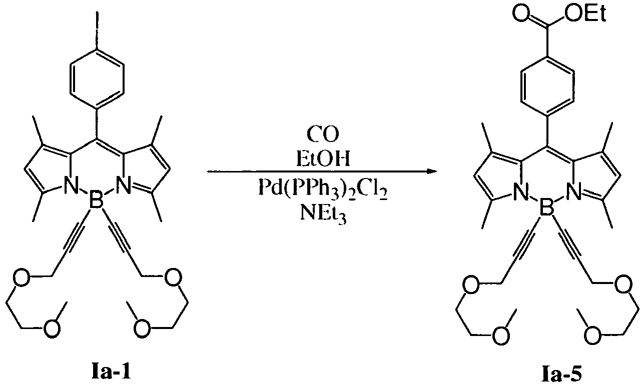

A une solution du composé **Ia-1** (235 mg, 0,37 mmol) dans 15 mL de benzène ont été ajoutés 1 mL d'éthanol (17,2 mmol), 44 mg de palladium bis-triphénylphosphine bis-chlorure (0,07 mmol) et 5 mL de triéthylamine. La solution a été agitée à 70°C pendant une nuit en faisant "buller" du monoxyde de carbone. Le mélange réactionnel a été extrait au dichlorométhane et lavé à l'eau (3x20 mL). La phase organique a été séchée sur du coton hydrophile et évaporée. Le résidu a été purifié par chromatographie sur colonne de gel de silice (CH₂Cl₂/MeOH 99:1 ou AcOEt/Ether de pétrole 40:60) pour donner le composé **Ia-5** sous forme d'une poudre orange (210 mg, 97%).

### Caractérisation du composé Ia-5

¹H NMR (CDCl₃, 400 MHz) : δ = 1,33 (s, 6H), 1,42 (t, 3H, ³*J* = 7,0 Hz), 2,71 (s, 6H), 3,35 (s, 6H), 3,53 (m, 4H), 3,64 (m, 4H), 4,19 (s, 4H), 4,40 (q, 2H, ³*J* = 7,0 Hz), 6,00 (s, 2H), 7,78 (AB sys, 4H, *J_{AB}* = 8,5 Hz, *vₒ*δ = 300,4 Hz);

¹³C {¹H} NMR (CDCl₃, 100 MHz,) : δ = 14,4, 14,8, 16,1, 59,0, 59,7, 61,4, 68,4, 68,6, 71,8, 90,9, 121,8, 128,6, 129,1, 130,3, 131,0, 140,3, 140,3, 140,9, 155,6, 166,1;

¹¹B NMR (CDCl₃, 128,4 MHz) : δ = -10,2 (s);

UV-Vis (CH₂Cl₂) λ nm (ε, M⁻¹ cm⁻¹) = 500 (90000), 366 (4900), 308 (7700);

FAB⁺ m/z : 585,2 ([M+H]⁺, 100) ;

Analyse élémentaire calculée pour C₃₄H₄₁BN₂O₆ : C, 69,86 ; H, 7,07 ; N, 4,79. Trouvé: C, 69,77 ; H, 7,04 ; N, 4,59.

### Préparation du composé Ia-6

Le composé **Ia-6** a été préparé selon le schéma réactionnel suivant :

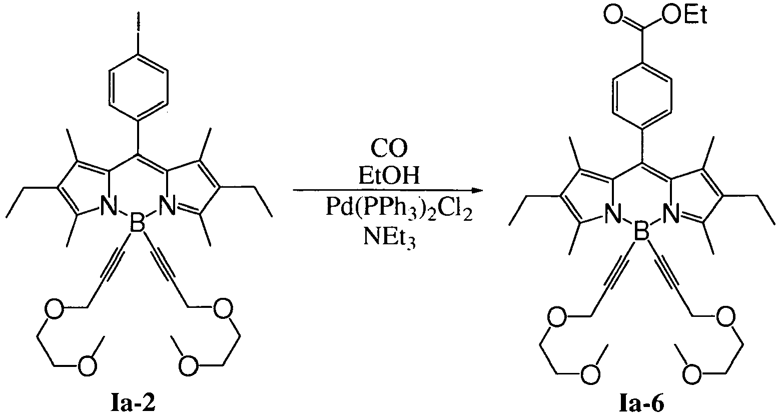

A une solution du composé 2b (980 mg, 1,41 mmol) dans 50 mL de benzène ont été ajoutés 3 mL d'éthanol (17,2 mmol), 240 mg de palladium bis-triphénylphosphine bis-chlorure (0,07 mmol) et 15 mL de triéthylamine. La solution a été agitée à 70°C pendant une nuit en faisant "buller" du monoxyde de carbone. Le mélange réactionnel a été extrait au dichlorométhane et lavé à l'eau (3x20 mL). La phase organique a été séchée sur du coton hydrophile et évaporée. Le résidu a été purifié par chromatographie sur colonne de gel de silice (AcOEt/Ether de pétrole 20:80 ; 40:60) pour donner le composé **Ia-6** sous forme d'une poudre orange (895 mg, quantitatif).

### Caractérisation du composé Ia-6

¹H RMN (CDCl₃ 300 MHz) : 0,97 (t, 6H, ³*J* = 7,40 Hz), 1,23 (s, 6H), 1,43 (t, 3H, ³*J* = 7,10 Hz), 2,31 (q, 4H, ³*J* = 7,40 Hz) 2,69 (s, 6H), 3,35 (s, 6H), 3,53 (m, 4H), 3,65 (m, 4H), 4,19 (s, 4H), 4,43 (q, 2H, ³*J* = 7,10 Hz), 7,78 (AB sys, 4H, *J_{AB}* = 8,19 Hz, *uₒ*δ= 223,07 Hz);

¹³C RMN (CDCl₃, 300 MHz,) : δ =12,03, 14,07, 14,41, 14,76, 17,40, 29,78, 59,02, 59,79, 61,37, 68,57, 71,85, 90,67, 128,60, 128,95, 130,19, 130,81, 133,11, 136,02, 138,77, 141,27, 154,05, 166,28.

¹¹B NMR (CDCl₃,128,4 MHz) : δ = -10,2 (s);

UV-Vis (CH₂Cl₂) λ nm (ε, M⁻¹ cm⁻¹) = 522 (80000),488 (20000), 381 (6400), 277 (6400);

### Préparation du composé Ia-7

Le composé **Ia-2** a été préparé selon le schéma réactionnel suivant :

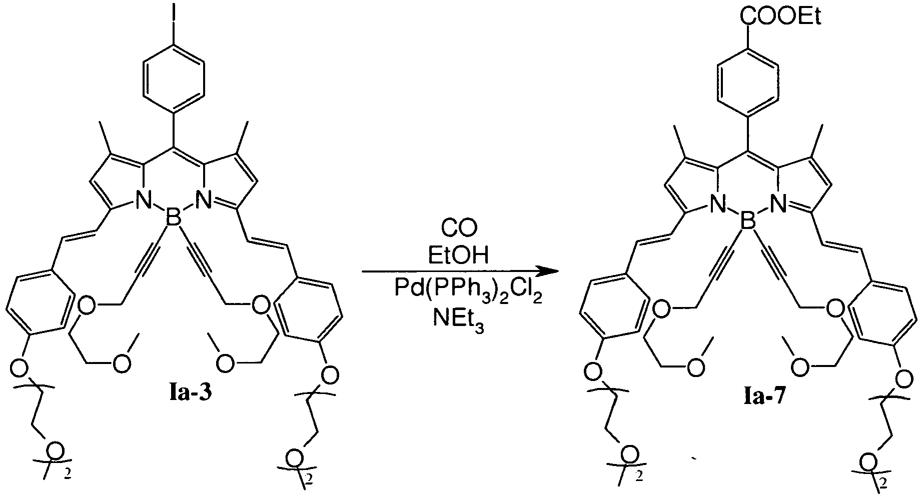

A une solution du composé 2c (100 mg, 0,095 mmol) dans 25 mL de benzène ont été ajoutés 1 mL d'éthanol (17,2 mmol), 24 mg de palladium bis-triphenylphosphine bis-chlorure (0,035 mmol) et 5 mL de triéthylamine. La solution a été agitée à 70°C pendant une nuit en faisant "buller" du monoxyde de carbone. Le mélange réactionnel a été extrait au dichlorométhane et lavé à l'eau (3x10 mL). La phase organique a été séchée sur du coton hydrophile et évaporée. Le résidu a été purifié par chromatographie sur colonne de gel de silice (AcOEt/Ether de pétrole 80 :20 ; 100%) pour donner le composé **Ia-7** sous forme d'une poudre bleue (88 mg, 92%).

### Caractérisation du composé Ia-7

¹H RMN (CDCl₃ 200 MHz) : 1,40 (s, 6H), 1,44 (t, 3H, ³*J*= 10,5 Hz) 3,15 (m, 4H), 3,19 (s, 6H), 3,41 (s, 6H), 3,50 (m, 4H), 3,59 (m, 4H), 3,74 (m, 4H), 3,88 (m, 4H), 4,15 (s, 4H), 4,18 (m, 4H), 4,41 (q, 2H, ³*J*= 10,5 Hz), 6,62 (s, 2H), 7,27 (AB sys, 8H, *J_{AB}* = 8,73 Hz, *uₒ*δ= 120,73 Hz), 7,60 (AB sys, 4H, *J_{AB}* = 16,26 Hz, *uₒ*δ= 192,63 Hz) 7,83 (AB sys, 4H, *J_{AB}* = 8,34 Hz, *uₒ*δ= 141,89 Hz).

UV-Vis (CH₂Cl₂) λ nm (ε, M⁻¹ cm⁻¹) = 647 (121000), 373 (72800),

### Préparation du composé Ia-8

Le composé **Ia-8** a été préparé selon le schéma réactionnel suivant :

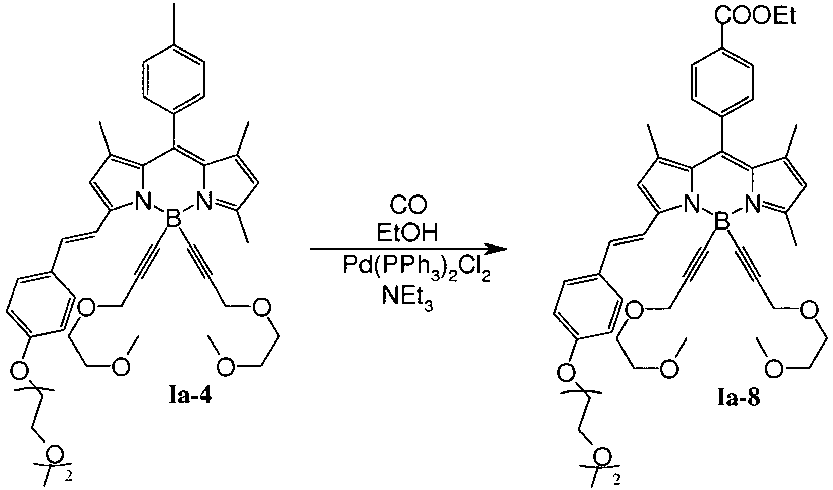

A une solution du composé **Ia-4** (100 mg, 0,118 mmol) dans 25 mL de benzène ont été ajoutés 2 mL d'éthanol (XXX mmol), 24 mg de palladium bis-triphenylphosphine bis-chlorure (0,07 mmol) et 5 mL de triéthylamine. La solution a été agitée à 70°C pendant une nuit en faisant "buller" du monoxyde de carbone. Le mélange réactionnel a été extrait au dichlorométhane et lavé à l'eau (3x10 mL). La phase organique a été séchée sur du cotton hydrophile et évaporée. Le résidu a été purifié par chromatographie sur colonne de gel de silice (AcOEt/Ether de pétrole 20:80 ; 40:60) pour donner le composé **Ia-8** sous forme d'une poudre violette (82 mg, 88%).

### Caractérisation du composé Ia-8

¹H RMN (CDCl₃ 300 MHz) : 1,35 (s, 3H), 1,38 (s, 3H), 1,43 (t, 3H, ³*J* = 7,15 Hz) 2,74 (s, 3H), 3,25 (s, 6H), 3,31 (m, 4H), 3,39 (s, 3H), 3,54 (m, 6H), 3,72 (m, 2H), 3,87 (m, 2H), 4,18 (m, 4H), 4,43 (q, 2H, ³*J* = 7 Hz), 6,02 (s, 1 H), 6,59 (s, 1 H), 7,22 (AB sys, 4H, *J_{AB}* = 8,67 Hz, *uₒ*δ= 180,18 Hz); 7,58 (AB sys, 2H, *J_{AB}* = 16,29 Hz, *uₒ*δ= 297,72 Hz), 7,85 (AB sys, 4H, *J_{AB}* = 7,99 Hz, *uₒ*δ= 226,28 Hz)

### Préparation du composé Ia-9

Le composé **Ia-9** a été préparé selon le schéma réactionnel suivant :

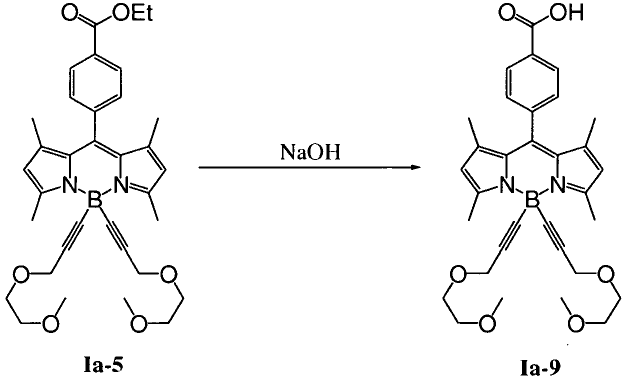

A une solution du composé **3a** (210 mg, 0,36 mmol) dans 20 mL d'éthanol a été ajouté 215 mg de soude (5,39 mmol). La solution a été agitée pendant 3 heures à température ambiante. 30-40 mL d'acétate d'éthyle ont été ajoutés. La phase organique a été extraite à l'eau (3x20 mL). Les phases aqueuses ont été rassemblées et acidifiées à l'aide d'une solution aqueuse de HCl à 1 M jusqu'à pH 1-2. La phase aqueuse a été extraite au dichlorométhane. La phase organique a été séchée sur coton hydrophile puis évaporée à sec pour donner le composé **5a** sous forme d'une poudre orange (190 mg, 95%).

Caractérisation du composé **II-5a**

UV-Vis (CH₂Cl₂) λ nm (ε, M⁻¹ cm⁻¹) = 501 (72800), 366 (4000), 307 (6400);

UV-Vis (Tampon PBS) λ nm (ε, M⁻¹ cm⁻¹) = 494 (71500), 364 (3900), 307 (4900);

### Préparation du composé Ia-10

Le composé **Ia-10** a été préparé selon le schéma réactionnel suivant :

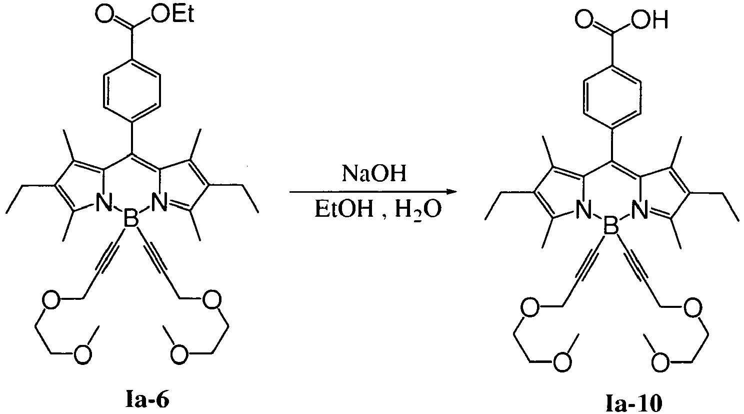

A une solution du composé **Ia-6** (840 mg, 1,31 mmol) dans 50 mL d'éthanol a été ajouté 2,10 g de soude (0,525 mol). La solution a été agitée pendant une nuit à température ambiante. 30-40 mL d'acétate d'éthyle ont été ajoutés. La phase organique est extraite à l'eau (3x20 mL). Les phases aqueuses ont été rassemblées et acidifiées à l'aide d'une solution aqueuse de HCl à 1 M jusqu'à pH 1-2. La phase aqueuse a été extraite au dichlorométhane. La phase organique a été séchée sur coton hydrophile puis évaporée à sec pour donner le composé **Ia-10** sous forme d'une poudre orange (778 mg, 97%).

¹H NMR (CDCl₃, 300 MHz) : 0,97 (t, 6H, ³*J*= 7,35 Hz), 1,23 (s, 6H), 2,31 (q, 4H, ³*J* = 7,35 Hz) 2,69 (s, 6H), 3,35 (s, 6H), 3,53 (m, 4H), 3,65 (m, 4H), 4,19 (s, 4H), 7,78 (AB sys, 4H, *J_{AB}* = 8,19 Hz, *uₒ*δ= 223,07 Hz);

UV-Vis (Tampon PBS) λ nm (ε, M⁻¹ cm⁻¹) = 517 (65000), 379 (3600), 320 (5000);

### Préparation du composé Ia-11

Le composé **Ia-11** a été préparé selon le schéma réactionnel suivant :

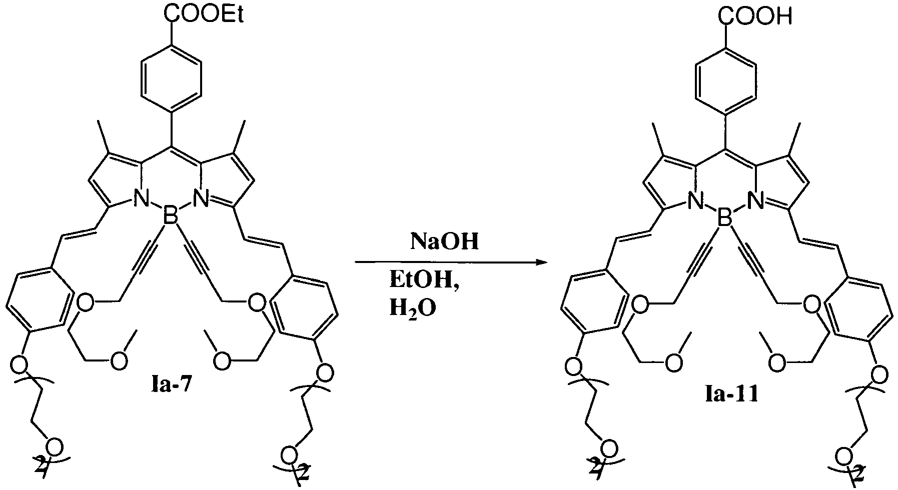

A une solution du composé **Ia-7** (80 mg, 0,080 mmol) dans 20 mL d'éthanol a été ajouté 130 mg de soude (3,22 mmol). La solution a été agitée pendant une nuit à température ambiante. 10-20 mL d'acétate d'éthyle ont été ajoutés. La phase organique est extraite à l'eau (3x10 mL). Les phases aqueuses ont été rassemblées et acidifiées à l'aide d'une solution aqueuse de HCl à 1 M jusqu'à pH 1-2. La phase aqueuse a été extraite au dichlorométhane. La phase organique a été séchée sur coton hydrophile puis évaporée à sec pour donner le composé **Ia-11** sous forme d'une poudre bleue (70 mg, 90%).

### Caractérisation du composé Ia-11

¹H RMN (CDCl₃ 300 MHz) : 1,41 (s, 6H), 3,15 (m, 4H), 3,20 (s, 6H), 3,41 (s, 6H), 3,52 (m, 4H), 3,60 (m, 4H), 3,74 (m, 4H), 3,90 (m, 4H), 4,17 (s, 4H), 4,22 (m, 4H), 6,63 (s, 2H), 7,28 (AB sys, 8H, *J_{AB}* = 8,6 Hz, *uₒ*δ= 120,59 Hz), 7,61 (AB sys, 4H, *J_{AB}* = 16,12 Hz, *uₒ*δ= 191,44 Hz) 7,88 (AB sys, 4H, *J_{AB}* = 8,19 Hz, *uₒ*δ= 144,73 Hz).

UV-Vis (CH₂Cl₂) λ nm (ε, M⁻¹ cm⁻¹) = 647 (118000), 373 (67800),

### Préparation du composé Ia-12

Le composé **Ia-12** a été préparé selon le schéma réactionnel suivant :

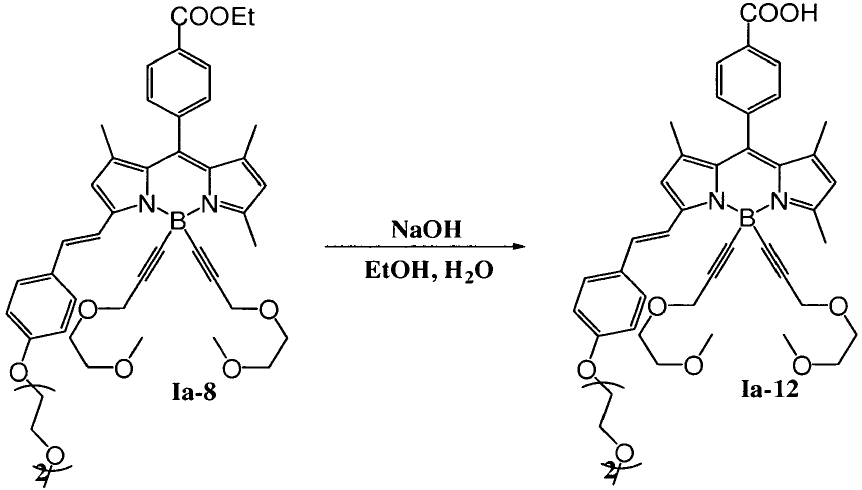

A une solution du composé **Ia-8** (80 mg, 0,10 mmol) dans 20 mL d'éthanol a été ajouté 162 mg de soude (4,05 mmol). La solution a été agitée pendant une nuit à température ambiante. 10-20 mL d'acétate d'éthyle ont été ajoutés. La phase organique est extraite à l'eau (3x10 mL). Les phases aqueuses ont été rassemblées et acidifiées à l'aide d'une solution aqueuse de HCl à 1 M jusqu'à pH 1-2. La phase aqueuse a été extraite au dichlorométhane. La phase organique a été séchée sur coton hydrophile puis évaporée à sec pour donner le composé **Ia-12** sous forme d'une poudre orange (70 mg, 90%).

### Caractérisation du composé Ia-12

¹H RMN (CDCl₃ 300 MHz) :1,36 (s, 3H), 1,39 (s, 3H), 2,74 (s, 3H), 3,26 (s, 6H), 3,32 (m, 4H), 3,40 (s, 3H), 3,56 (m, 6H), 3,73 (m, 2H), 3,88 (m, 2H), 4,18 (m, 6H), 6,03 (s, 1 H), 6,59 (s, 1 H), 7,22 (AB sys, 4H, *J_{AB}* = 8,67 Hz, *uₒ*δ= 180,18 Hz); 7,58 (AB sys, 2H, *J_{AB}* = 16,29 Hz, *uₒ*δ= 297,72 Hz), 7,85 (AB sys, 4H, *J_{AB}* = 7,99 Hz, *uₒ*δ= 226,28 Hz).

¹³C RMN (CDCl₃, 300 MHz,) : δ = 14,86, 15,08, 16,37, 29,79, 58,91, 59,18, 59,58, 67,63, 68,41, 69,79, 70,88, 71,69, 72,05, 91,43, 128,76, 129,06, 129,69, 130,15, 130,44, 130,86, 134,10, 138,65, 140,39, 140,59, 141,25, 152,61, 155,54, 159,61, 170,40.

UV-Vis (Tampon PBS) λ nm (ε, M⁻¹ cm⁻¹) = 564 (70000), 338 (25000);

### Préparation du composé Ia-13

Le composé **Ia-13** a été préparé selon le schéma réactionnel suivant :

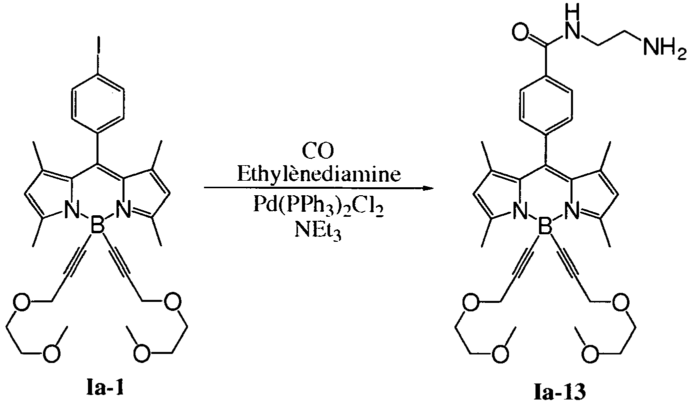

A une solution du composé **Ia-13** (200 mg, 0,31 mmol) dans 15 mL de benzène ont été ajoutés 1 mL d'éthylènediamine (15 mmol), 66 mg de palladium bis-triphenylphosphine bis-chlorure (0,09 mmol) et 1 mL de triéthylamine. La solution a été agitée à 70°C pendant une nuit en faisant "buller" du monoxyde de carbone. Le mélange réactionnel a été extrait au dichlorométhane et lavé à l'eau (3x20 mL). La phase organique a été séchée sur du coton hydrophile et évaporée. Le résidu a été purifié par chromatographie sur colonne de silice (gradient de CH₂Cl₂ 100% à CH₂Cl₂ 75:25) pour donner le composé **Ia-13** sous forme d'une poudre orange (160 mg, 80%).

### Caractérisation du composé Ia-13

¹H NMR (CDCl₃, 300 MHz) : δ = 1,34 (s, 6H), 2,72 (s, 6H), 3,01 (t, 2H, ³*J*= 5,7 Hz), 3,36 (s, 6H), 3,55 (m, 6H), 3,64 (m, 4H), 4.20 (s, 4H), 6,01 (s, 2H), 6,98 (t, 1H, ³*J* = 5,5 Hz), 7,69 (AB sys, 4H, *J_{AB}* = 8,3 Hz, *vₒ*δ = 162,7 Hz);

¹³C {¹H} NMR (CDCl₃, 75,4 MHz,) : δ = 15,0, 16,2, 41,3, 42,2, 59,1, 59,8, 68,7, 71,9, 90,6, 121,9, 127,9, 128,8, 129,4, 134,9, 139,1, 140,4, 141,0, 155,7, 167,0;

¹¹B NMR (CDCl₃, 128,4 MHz) : δ = -10,3 (s);

UV-Vis (CH₂Cl₂) λ nm (ε, M⁻¹ cm⁻¹) = 500 (64500), 371 (5600)

FAB⁺ m/z : 599,2 ([M+H]⁺, 100) ;

Analyse élémentaire calculée pour C₃₄H₄₃BN₄O₅ : C, 68,23 ; H, 7,24 ; N, 9,36. Trouvé: C, 67,84 ; H, 7,07 ; N, 9,22.

### Préparation du composé Ia-14

Le composé **Ia-14** a été préparé selon le schéma réactionnel suivant :

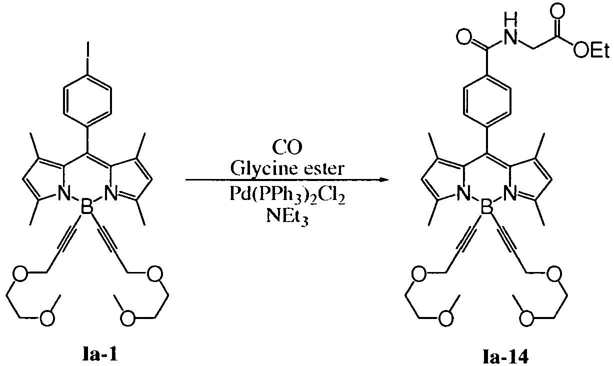

A une solution du composé **Ia-1** (100 mg, 0,16 mmol) dans 6 mL de toluène anhydre ont été ajoutés 80 mg de glycine ester d'éthyle (0,47 mmol), 22 mg de palladium bis-triphenylphosphine bis-chlorure (0,03 mmol) et 2 mL de triéthylamine. La solution a été agitée à 80°C pendant 6h en faisant "buller" du monoxyde de carbone. Le mélange réactionnel a été filtré sur Célite et partiellement évaporé. Le résidu a été extrait au dichlorométhane et lavé à l'eau (2x20 mL). La phase organique a été séchée sur du coton hydrophile et évaporée. Le résidu a été purifié par chromatographie sur colonne de gel de silice (AcOEt/Ether de pétrole 50:50) pour donner le composé **Ia-14** sous forme d'une poudre orange (43 mg, 43%).

### Caractérisation du composé Ia-14

¹H NMR (CDCl₃, 300 MHz) : δ = 1,33 (t, 3H, ³*J* = 7,2 Hz), 1,34 (s, 6H), 2,72 (s, 6H), 3,36 (s, 6H), 3,55 (m, 4H), 3,66 (m, 4H), 4,20 (s, 4H), 4,27 (d, 2H, ³*J* = 4,5 Hz), 4,29 (q, 2H, ³*J* = 7,1 Hz), 6,01 (s, 2H), 6,77 (t, 1H, ³*J* = 4,9 Hz), 7,69 (AB sys, 4H, *J_{AB}* = 8,3 Hz, *vₒ*δ = 156,4 Hz);

¹³C {¹H} NMR (CDCl₃, 75,4 MHz,) : δ = 14,3, 14,9, 16,2, 42,1, 59,1, 59,8, 61,9, 68,7, 71,9, 91,0, 121,9, 127,9, 129,0, 129,3, 134,2, 139,5, 140,2, 141,0, 155,8, 166,7, 170,2;

¹¹B NMR (CDCl₃, 128,4 MHz) : δ = -10,3 (s);

UV-Vis (CH₂Cl₂) λ nm (ε, M⁻¹ cm⁻¹) = 501 (84200), 366 (4200), 309 (6500);

### Préparation du composé Ia-15

Le composé **Ia-15** a été préparé selon le schéma réactionnel suivant :

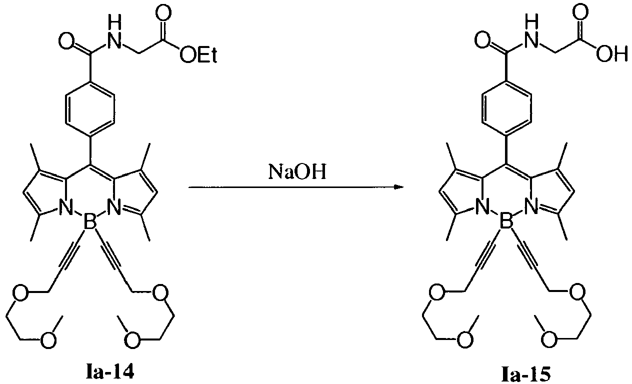

A une solution du composé **Ia-14** (40 mg, 0,06 mmol) dans l'éthanol (10 mL) a été ajoutée une solution aqueuse de soude (60 mg, 1,2 mmol). La solution a été agitée pendant 2h à température ambiante. 10-20 mL d'acétate d'éthyle ont été ajoutés. La phase organique est extraite à l'eau (2x20 mL). Les phases aqueuses ont été rassemblées et acidifiées à l'aide d'une solution aqueuse de HCl à 1 M jusqu'à pH 1-2. Le produit a été extrait au dichlorométhane. La phase organique a été séchée sur Na₂SO₄ puis évaporée à sec pour donner le composé **Ia-15** sous forme d'une poudre orange (35 mg, 90%).

### Caractérisation du composé Ia-15

¹H NMR (CDCl₃, 400 MHz) : δ = 1,32 (s, 6H), 2,72 (s, 6H), 3,36 (s, 6H), 3,55 (m, 4H), 3,66 (m, 4H), 4,19 (s, 4H), 4,27 (d, 2H, ³*J* = 3,4 Hz), 4,87 (b, 1 H), 6,01 (s, 2H), 7,04 (t, 1H, ³*J* = 3,8 Hz), 7,69 (AB sys, 4H, *J_{AB}* = 6,0 Hz, *vₒ*δ = 160,2 Hz);

¹³C {¹H} NMR (CDCl₃, 100 MHz,) : δ = 14,9, 16,2, 42,0, 59,0, 59,7, 68,6, 71,8, 90,9, 121,9, 128,0, 129,0, 129,3, 133,8, 139,6, 140,2, 140,9, 155,8, 167,3, 172,3;

¹¹B NMR (CDCl₃, 128,4 MHz) : δ = -10,2 (s);

UV-Vis (CH₂Cl₂) λ nm (ε, M⁻¹ cm⁻¹) = 501 (65000), 366 (3800), 309 (5900);

UV-Vis (Tampon PBS) λ nm (ε, M⁻¹ cm⁻¹) = 496 (59600), 367 (4100), 308 (6100);

### Préparation du composé Ia-16

Le composé **Ia-16** a été préparé selon le schéma réactionnel suivant :

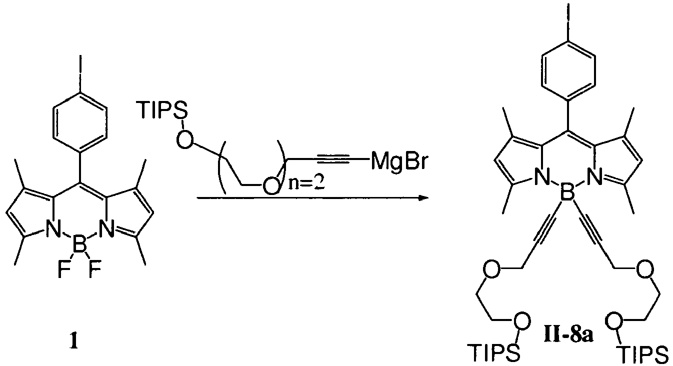

A une solution de 2-triisopropyloxysilanoxy-5-oxaoct-7-yne (2,20 mmol, 661 mg) dans du THF anhydre, à température ambiante, a été ajouté sous argon du bromure d'éthylmagnésium (1,0 M dans le THF, 2 ml). Le mélange a été agité pendant 2 h à 60 °C, puis laissé se refroidir à température ambiante. La solution ainsi obtenue a été transférée par une canule dans une solution de difluoroboradipyrrométhène **1** (330 mg, 0,733 mmol) dans du THF anhydre. La solution a été agitée pendant une nuit à 60°C, puis de l'eau a été ajoutée. Cette solution a été extraite avec du dichlorométhane. La phase organique est ensuite lavée avec de l'eau (3X20 ml) puis avec une solution saturée de NaCl (1X20 ml). Après évaporation, le résidu organique a été purifié par chromatographie sur colonne de gel de silice (Acétate d'éthyle/ éther de pétrole, 10:90 ; 20 :80 ; 30 :70), et on a obtenu le composé **Ia-16** sous forme d'une poudre orange (620 mg, 87%).

### Caractérisation du composé Ia-16

¹H RMN (CDCl₃ 300 MHz) : 1.05 (m, 42H), 1,40 (s, 6H), 2.71 (s, 6H), 3,56 (t, 4H, ³*J*= 5.70Hz), 3,65 (s, 8H), 3,82 (t, 4H, ³*J*= 5.70Hz), 4,18 (s, 4H), 6,00 (S, 2H), 7,45 (AB sys, 4H, *J_{AB}* = 8,28 Hz, *uₒδ=* 227,51 Hz);

¹³C RMN (CDCl₃, 300 MHz): δ = 12,13, 14,97, 16.,21, 18,11, 59,77, 63,07, 68,99, 70,80, 72,86, 77,36, 94,60, 121,84, 129,45, 130,39, 135,30, 138,34, 140,11, 140,92, 155,67.

### Préparation du composé Ia-17

Le composé **Ia-17** a été préparé selon le schéma réactionnel suivant :

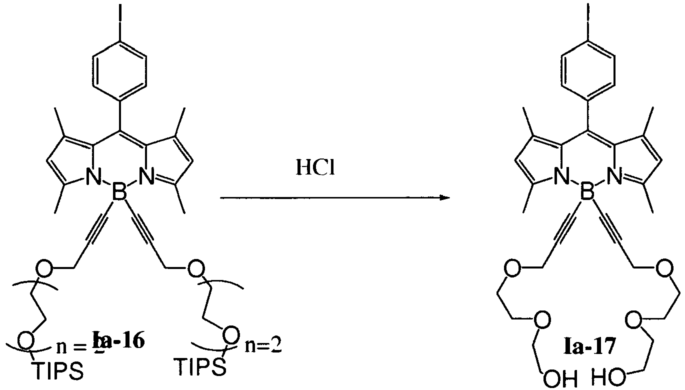

A une solution du composé **Ia-16** (300 mg, 2,96 mmol) dans l'éthanol (15 mL) a été ajoutée une solution aqueuse d'acide chlorhydrique 1 M (10ml). La solution a été agitée toute la nuit à température ambiante. La phase organique est ensuite neutralisée avec une solution de NaHCO₃ jusqu'à pH 7. Le brut réactionnel a ensuite été évaporé au rotavapeur, dissout dans du CH₂Cl₂ puis lavé avec une solution saturée de NaCl (2x15 ml). La phase organique est ensuite séchée sur Na₂SO₄ puis évaporée à sec. Le produit brut est purifié par chromatographie sur colonne de gel de silice (Acétate d'éthyle/Méthanol, 95/5%) et on a obtenu une poudre orange (200mg, 81 %)

### Caractérisation du composé Ia-17

¹H RMN (CDCl₃ 200 MHz) : 1,39 (s, 6H), 2.72 (s, 6H), 3,67 (m, 16H), 4,18 (s, 4H), 6,02 (s, 2H), 7,44 (AB sys, 4H, *J_{AB}* = 8,15 Hz, *uₒδ* = 152,97 Hz)

¹³C RMN (CDCl₃, 200 MHz): δ = 14,99, 16,22, 59,76, 61,89, 68,92, 70,44, 72,59, 77,35, 94,67, 121,87, 123,37, 129,40, 130,30, 135,13, 138,36, 140,21, 141,09, 155,63, 197,65.

### Préparation du composé Ia-18

Le composé **Ia-18** a été préparé selon le schéma réactionnel suivant :

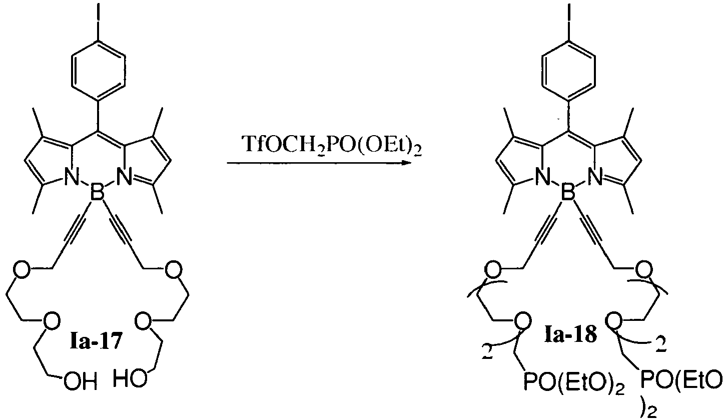

A une solution du composé **Ia-17** (200 mg, 0,241 mmol) dans du THF anhydre (20 ml) a été additionnée une solution de THF (10 ml) avec du tBuOK en suspension (54 mg, 0,241 mmol) à l'aide d'une canule. Toute de suite après on a ajouté 5 ml (155 mg, 0.29 mmol) d'une solution de phosphonate dans du THF. On a laissé agité a température ambiante pendant 30 min puis on a rajouté les mêmes quantités de réactifs pour obtenir au total un excès de 3 équivalents.

Le milieu réactionnel a ensuite été neutralisé avec 30 ml d'une solution aqueuse d'HCl à 1 M puis a été extrait avec 2x30 ml de dichlorométhane. La phase organique a ensuite été lavée avec 2x1 0ml d'eau et 1x10 ml d'une solution, saturée de NaCl. Les phases organiques ont été rassemblées puis séchées sur coton hydrophile puis évaporées a sec. Le produit brut a été purifié par chromatographie sur colonne de gel de silice (Acétate d'éthyle/Méthanol, 100% ; **99/1** ;98/2 ;97/3 ;94/6) pour donner le composé **Ia-18** sous forme d'une huile orange (135 mg, 50%)

### Caractérisation du composé Ia-18

¹H RMN (CDCl₃ 200 MHz) : 1,33 (t, 12H, ³*J* = 7,25 Hz), 1,40 (s, 6H), 2.70 (s, 6H), 3,75 (m, 16H), 3.83 (d, 4H ²*J* = 8 Hz), 4,15 (m, 12H),6,01 (s, 2H), 7,45 (AB sys, 4H, *J_{AB}* = 7,93 Hz, *uₒδ* = 152,88 Hz);

### Préparation du composé Ic-0

Le composé **Ic-0** a été préparé selon le schéma réactionnel suivant :

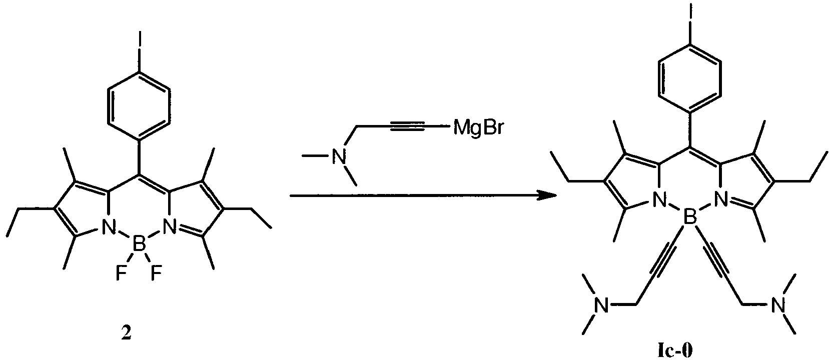

A une solution de 1-diméthylamino-2-propyne (0.136 g, 1.976 mmol) dans du THF anhydre (5 ml), sous argon a été additionné du EtMgBr dans du THF (1.738 ml, 1.0 M) à 60 °C pendant 2 heures. Ce mélange a ensuite été canulé dans une solution de 2, 6-diéthyl-4, 4-difluoro-1, 3, 5, 7-tétraméthyl-8-(4'-iodo-phényl)- 4-bora-3a,4a-diaza-s-indacène **2** (0.400 g, 0.79 mmol) dans du THF anhydre (3 ml). Le mélange a été agité à 60 °C pendant 30 minutes, ensuite de l'eau H₂O (3 ml) a été additionnée, et le mélange extrait avec du CH₂Cl₂. Après évaporation, une chromatographie sur gel de silice (CH₂Cl₂/ AcOEt, 50: 50 puis MeOH/ AcOEt, 1/9) a permis d'obtenir **Ic-0** pur (0.313 g, 63%).

### Caractérisation du composé Ic-0

¹H RMN (CDCl₃ 300 MHz) : 0,97 (t, 6H, ³*J* = 7,53 Hz), 1,30 (s, 6H), 2,32 (q, 4H, ³*J*= 7,14Hz), 2,38 (s, 12H), 2.72 (s, 6H), 3,30 (s, 4H), 7,06 (AB sys, 2H, *J_{AB}* = 8,31 Hz), 7,81 (AB sys, 2H, *J_{AB} =* 8,31 Hz);

¹³C RMN (CDCl₃, 75 MHz): δ = 12,11, 14,12, 14,69, 17,32, 29,36, 43,73, 48,78, 94,29, 128,69, 130,50, 133,03, 135,87, 136,07, 138,10, 138,52, 153,63.

MS (FAB⁺, m-NBA): m/z (%) = 633.1 [M + H] ⁺ (100).

Anal. calculée pour C₃₃H₄₂BIN₄. C, 62.67; H, 6.69; N, 8.86. trouvé : C, 62.52; H, 6.51; N, 8.53.

### Propriétés optiques :

ζ(CH₂Cl₂)= 6.6 ns.

UV-vis (CH₂Cl₂): λ_{ab} (ε)= 521 (57000), 378 (4500).

Fluorescence (CH₂Cl₂): 6.1 × 10⁻⁷ M. λₑₘ= 533 nm, Φ= 48%.

### Préparation du composé Ic-1

Le composé **Ic-1** a été préparé selon le schéma réactionnel suivant :

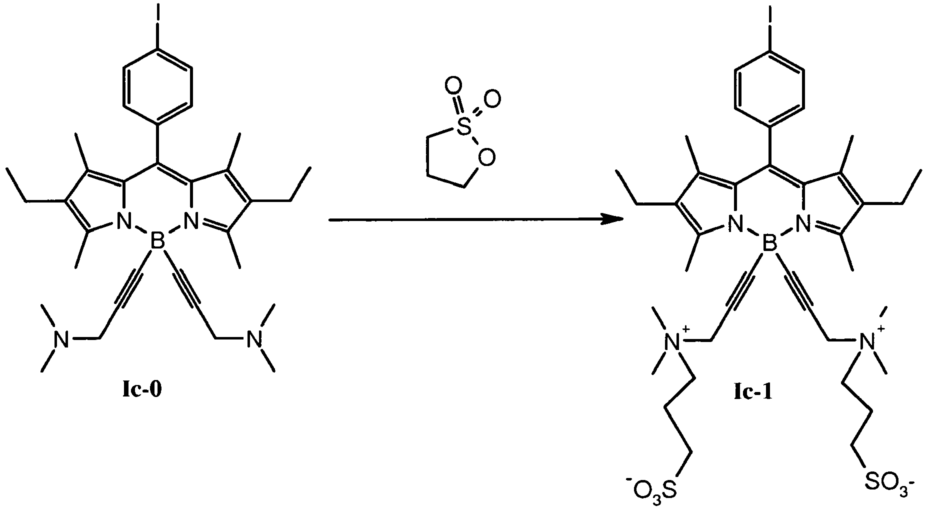

A une solution de **Ic-0** (0.050g, 0.079 mmol) dans du toluène anhydre (3 ml) sous argon, a été additionné du 1,3-propane Sultone (0.024 g, 0.20 mmol), le mélange a été agité à 60 °C pendant la nuit, jusqu'à disparition complète du produit de départ (contrôle par CCM). La suspension a été centrifugée, puis lavée avec du toluène (5ml) et du pentane (5 ml). Après séchage de la poudre sous vide on obtient le composé **Ic-1** pur (0.086 g, 62%).

### Caractérisation du composé Ic-1

¹H RMN (CD₃OD 300 MHz) : 0,99 (t, 6H, ³*J* = 7,53 Hz), 1,37 (s, 6H), 2,20 (m, 4H,), 2.39 (q, 4H, ³*J*= 7,53 Hz), 2,72 (s, 6H), 2,82 (t, 4H, ³*J*= 6,99 Hz), 3,14 (s, 12H), 3,56 (m, 4H), 4,30 (s, 4H), 7,13 (AB sys, 2H, *J_{AB}* = 8,28 Hz), 7,93 (AB sys, 2H, *J*_{AB} = 8,28 Hz);

¹³C RMN (CD₃OD, 75 MHz): δ = 10,93, 13,45, 13,59, 16,59, 18,72, 29,27, 49,71, 55,16, 62,68, 94,12, 116,51, 128,66, 130,33, 133,64, 135,09, 137,26, 138,37, 139,59, 153,55.

MS (FAB⁺, m-NBA): m/z (%) = 876.1 [M + H] ⁺ (100).

Anal. Calculée pour Ic-1 +H₂O, C₃₉H₅₈BIN₄O₈S₂. C, 51.32; H, 6.40; N, 6.14; Trouvé: C, 51.27; H, 6.28; N, 5.82.

### Propriétés optiques:

ζ(H₂O)= 7.0 ns.

UV-vis (PBS buffer): λ_{ab} (ε)= 519 (28700), 564 (15000).

Fluorescence (tampon PBS): 4.6× 10⁻⁷ M. λₑₘ= 530 nm, Φ= 61%.

UV-vis (EtOH): λ_{ab} (ε)= 521 (81200), 240 (34400).

Fluorescence (EtOH): 3.99× 10⁻⁷ M. λₑₘ= 532 nm, Φ= 71 %.

### Préparation du composé Ic-2

Le composé **Ic-2** a été préparé selon le schéma réactionnel suivant :

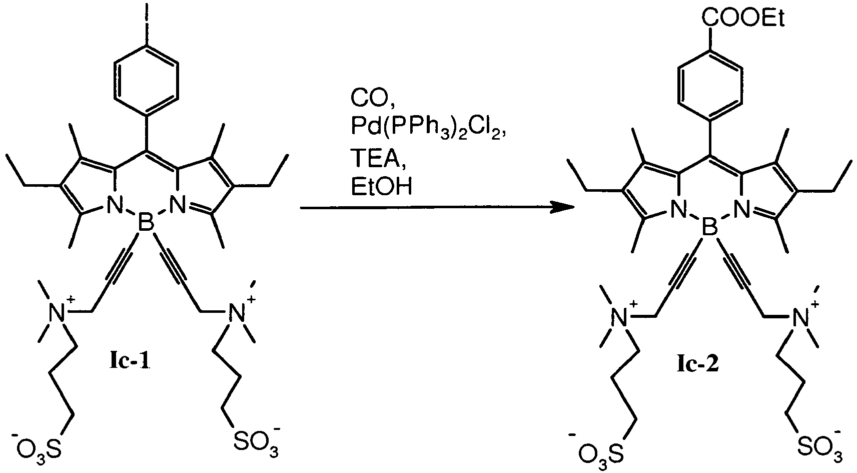

Dans une solution de **Ic-1** (0.040 g, 0.457 mmol) avec de l'éthanol absolu (4 ml) de la triéthylamine (3 ml), du Pd(PPh₃)₂Cl₂ (4 mg, 0.046 mmol) à 70°C a été injecté par bullage du CO pendant 4 heures. Après évaporation du solvant, une chromatographie sur silice (H₂O/EtOH, 20: 80), suivie d'une recristallisation dans un mélange méthanol-Et₂O permet d'obtenir le produit **Ic-2** (20 mg, 54%).

### Caractérisation du composé Ic-2

¹H RMN (CD₃OD 300 MHz) : 1.01 (t, 6H, ³*J* = 7,53 Hz), 1,33 (s, 6H), 1.43 (t, 3H, ³*J* = 7,17 Hz), 2.24 (m, 4H), 2,40 (q, 4H, ³*J* = 7,53 Hz), 2,75 (s, 6H), 2,85 (m, 4H), 3,18 (s, 12H), 3,61 (m, 4H), 4,32 (s, 4H), 4,43 (q, 2H, ³*J* = 7,17 Hz), 7,50 (AB sys, 2H, *J_{AB}* = 8,28 Hz), 8,21 (AB sys, 2H, *J_{AB}* = 8,49 Hz);

¹³C RMN (CD₃OD, 75 MHz): δ = 6,22, 10,84, 13,19, 13,47, 13,57, 16,57, 18,71, 21,68, 22,63, 30,67, 31,64, 37,27, 49,71, 52,55, 53,39, 55,19, 61,10, 62,71, 128,15, 128,45, 128,79, 130,04, 133,70, 137,22, 153,69, 179,87.

UV-vis (EtOH): λ_{ab} (ε)= 521 (15339), 240 (2740).

Fluorescence (EtOH): 4.56 × 10⁻⁷ M. λₑₘ= 533 nm, Φ= 45%.

### Préparation du composé Ic-3

Le composé **Ic-3** a été préparé selon le schéma réactionnel suivant :

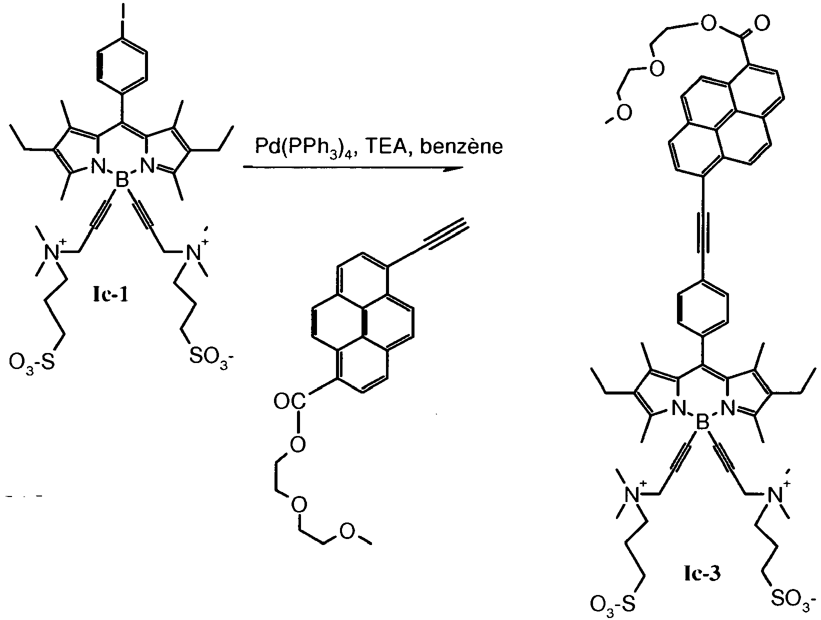

Une solution de **Ic-1** (0.060 g, 0.068 mmol), dans du DMF (5ml) et de la NEt₃ (4ml) a été degazée avec de l'argon pendant 20 min, puis du [Pd (PPh₃)₄] (0.008 g, 0.0070 mmol) et du 1-éthynyl-6-carboxylatepyrène de méthoxydiéthylèneglycol (0.31 g, 0.082 mmol) ont été additionnés. Le mélange a été agité à 80 °C pendant 36 heures, jusqu'à consommation complète du produit de départ observée par CCM (H₂O/EtOH, 20: 80). Le mélange a ensuite été évaporé à sec et le résidu a été dissous dans 3 ml de CH₂Cl₂ puis précipité avec de l'Et₂O. Une recristallisation dans CH₃OH-Et₂O permet d'obtenir le produit pur (40 mg, 50%).

### Caractérisation du composé Ic-3

¹H RMN (CD₃OD 300 MHz) : 1.03 (t, 6H, ³*J* = 7,53 Hz), 1,47 (s, 6H), 2.25 (m, 4H), 2,40 (q, 4H, ³*J*= 7,53 Hz), 2,77 (s, 6H), 2,86 (t, 4H, ³*J*= 6,78 Hz), 3,17 (s, 12H), 3,39 (s, 3H), 3,62 (m, 6H), 3,78 (m, 2H), 3,98 (m, 2H), 4,34 (s, 4H), 4,47 (m, 2H), 7,47 (AB sys, 2H, *J_{AB}* = 8,10 Hz), 7,94 (AB sys, 2H, *J_{AB}* = 8,28 Hz), 8,27 (m, 5H), 8,65 (d, 1H, ³*J* = 9,42 Hz), 8,75 (d, 1 H, ³*J* = 9,21 Hz), 9,20 (d, 1 H, ³*J* = 9,39 Hz).

### Propriétés optiques:

UV-vis (EtOH): λ_{ab} (ε)= 521 (60936), 402 (35224), 380(37255), 291(25567).

Fluorescence (EtOH): 3.79× 10⁻⁷ M. λₑₘ= 533 nm, Φ= 39%.

### Préparation du composé IV-5c

Le composé **IV-5c** a été préparé selon le schéma réactionnel suivant :

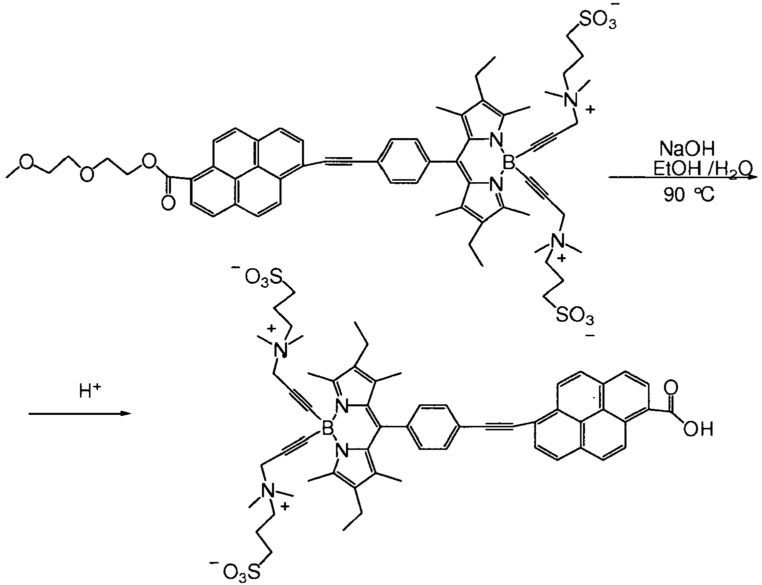

A une solution du composé **IV-5b** (0,030 g, 0,026 mmol) dans l'éthanol (2ml) et l'eau (1 ml)a été ajouté du NaOH (0,020 g, 0,05 mmol). Le mélange a été chauffé à 80 °C pendant 40 minutes. La solution a ensuite été neutralisée jusqu'à pH 4 avec une solution aqueuse d'HCl (à 10%). Après évaporation, une chromatographie sur colonne (silice, H₂O/EtOH, 10:90) a permis d'obtenir le composé **IV-6b** sous forme de poudre (20 mg, 75%).

### Caractérisation du composé IV-6b

¹H RMN (CD₃OD 200 MHz) : 1.01 (t, 6H, ³*J* = 7,30 Hz), 1,45 (s, 6H), 2.04-2.22 (m, 8H), 2,74-2,86 (m,9H), 3,14 (s, 12H), 3,59 (m, 5H), 4,30 (s, 4H), 7,43 (AB sys, 2H, *J_{AB} =* 8,40 Hz), 7,90 (AB sys, 2H, *J_{AB} =* 8,40 Hz), 8.10-8,27 (m, 6H), 8,66 (d, 1 H, ³*J* = 9,14 Hz), 8,84 (d, 1 H, ³*J* = 9,12 Hz).

MS (FAB⁺, m-NBA): m/z (%) = 1041.46 [M + Na] ⁺ (100)

Tous les composés synthétisés dans les exemples ci-dessus sont fluorescents et hydrophiles. Les composés marqués d'un * sont hydrosolubles et présentent une solubilité supérieure à 10 mg/L, et même supérieure à 50mg/L pour la-9, la-10, Ic-1. Les valeurs des propriétés de fluorescences pour certains des composés exemplifiés sont données dans le tableau 1 ci-dessous:

**Tableau 1**

| **N°** | λ _{abs} (nm) | λₑₘ (nm) | ε(M⁻¹ cm⁻¹) | Φ(%) |
|---|---|---|---|---|
| **Ia-1** | 500 | 511 | 90000 | 65 |
| **Ia-2** | 522 | 488 | 82000 | 80 |
| **Ia-3** | 646 | 371 | 126600 | 75 |
| **Ia-4** | 572 | 533 | 93500 | 80 |
| **Ia-5** | 500 | 512 | 91000 | 63 |
| **Ia-6** | 522 | 488 | 80000 | 85 |
| **Ia-9** | 501 | 513 | 78500 | 50 |
| | 494* | 506* | 74000* | 60* |
| **Ia-10** | 517* | 530* | 65000* | 70* |
| **Ia-11** | 647 | 662 | 118000 | 74 |
| **la-12** | 564* | 578* | 70000* | 70* |
| **Ia-13** | 500 | 513 | 65000 | 30 |
| **Ia-14** | 501 | 511 | 84000 | 80 |
| **Ia-15** | 501 | 511 | 67000 | 60 |
| | 495* | 507* | 62000* | 50* |
| **Ic-1*** | 519* | 530* | 72000* | 61* |

Valeurs obtenues dans le dichlorométhane sauf pour celles marquées d'un *, mesurées dans l'eau et le tampon PBS.

## Revendications

1. Composé fluorescent et hydrophile répondant à la formule (I) suivante : 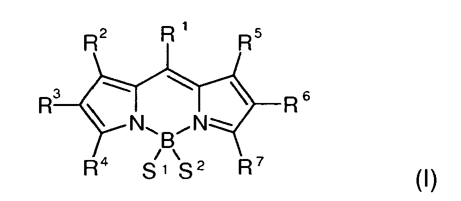 dans laquelle :
◆ S¹ représente un groupe de formule -CΞC-L'-A où :
- L' est un groupement de liaison qui est
- une liaison simple ; ou
- un groupement hydrocarboné divalent choisi dans le groupe consistant en les alkylènes linéaires ou ramifié, comprenant éventuellement dans leur chaîne un ou plusieurs oxygène, azote ou soufre; les alcénylènes linéaires ou ramifiés ; les alcynylènes linéaires ou ramifiés, et les arylènes ; ou une chaîne hydrocarbonée divalente constitué par un enchaînement d'au moins deux groupements hydrocarbonés divalents du type précité ;
- A est un groupement fonctionnel polaire choisi parmi les groupes sulfonate, sulfate, phosphate, ammonium, carboxylate, phosphonate, sulfate d'alkylammonium et polyoxyéthylène;
◆ S² représente :
- un groupe -CΞC-L'-A identique ou différent de S¹, où L' et A ont les significations précitées;
- -F;
- -H; ou
- une chaîne hydrocarbonée, linéaire ou ramifiée, saturée ou insaturée, éventuellement interrompue par un ou plusieurs atomes d'oxygène, d'azote ou de soufre, éventuellement cyclisée en totalité ou en partie, éventuellement aromatique, et éventuellement fonctionnalisée, et
◆ chacun des groupes R¹, R², R³, R⁴, R⁵, R⁶ ou R⁷ désigne, indépendamment des autres, un groupement -H ou une chaîne hydrocarbonée, linéaire ou ramifiée, saturée ou insaturée, éventuellement interrompue par un ou plusieurs atomes d'oxygène, éventuellement cyclisé en totalité ou en partie, éventuellement aromatique et éventuellement fonctionnalisée,
étant entendu que tout ou partie des R¹, R², R³, R⁴, R⁵, R⁶ ou R⁷, peuvent être reliés entre eux pour former une forme pontée.

2. Composé selon la revendication 1, où le groupement fonctionnel A présent sur le groupement -CΞC-L'-A présent à titre de groupement S¹ est choisi parmi les groupes polyoxyéthylène, phosphate, sulfate et sulfate d'alkylammonium.

3. Composé selon la revendication 1 ou 2, dans lequel S¹ et S² sont tous deux des groupements répondant à la formule -CΞC-L'-A définie dans la revendication 1, S¹ et S² étant de préférence identiques.

4. Composés selon l'une quelconque des revendications 1 à 3, de formule (II) suivante : 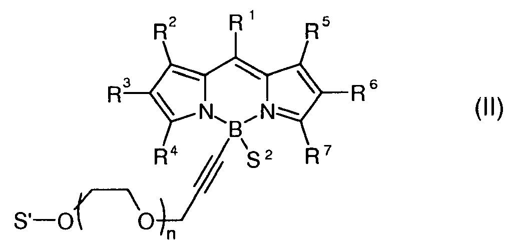 dans laquelle :
◆ R¹, R², R³, R⁴, R⁵, R⁶, R⁷ et S² sont tels que définis dans la revendication 1,
◆ n représente 1, 2, 3 ou 4,
◆ S' représente -H, -Me -(CH₂)_{n'}-SO₃⁻(X^{m+})_{1/m} ou -(CH₂)_{n'}-PO₃²⁻(X^{m+})_{2/m} dans lesquelles :
- X^{m+} représente un cation (mono ou polyatomique) de valence m,
- n' est un entier égal à 1, 2, 3 ou 4.

5. Composés selon l'une quelconque des revendications 1 à 3, de formule (III) suivante : 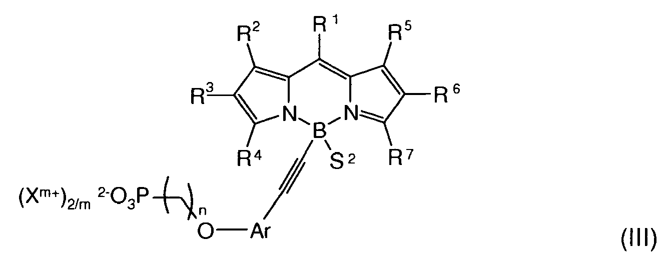 dans laquelle :
- R¹, R², R³, R⁴, R⁵, R⁶, R⁷ et S² sont tels que définis dans la revendication 1,
- Ar représente un arylène,
- X^{m+} représente un cation (mono ou polyatomique) de valence m,
- n' est un entier égal à 1, 2, 3 ou 4.

6. Composés selon l'une quelconque des revendications 1 à 3, de formule (IV) suivante : 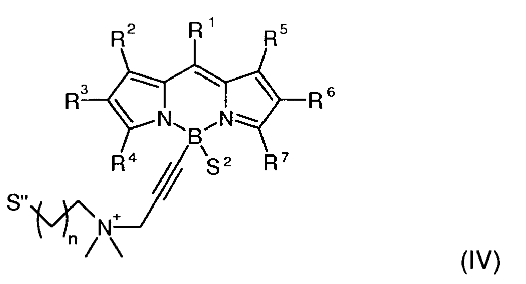 dans laquelle :
- R¹, R², R³, R⁴, R⁵, R⁶, R⁷ et S² sont tels que définis dans la revendication 1,
- n représente 0, 1, 2, 3, 4 ou 5,
- S" représente -SO₃⁻ ou -PO₃²⁻(X^{m+})_{1/m}
où X^{m+} représente un cation (mono ou polyatomique) de valence m.

7. Composés selon l'une quelconque des revendications 1 à 6, dans lequel au moins un des groupements R¹, R², R³, R⁴, R⁵, R⁶ ou R⁷ est un groupe porteur d'un groupement fonctionnel polaire choisi parmi les groupes carboxylate, sulfonate, sulfate, phosphate, ammonium, hydroxyle, phosphonate et polyoxyéthylène.

8. Composé selon l'une quelconque des revendications 1 à 7, dans lequel R¹ représente un groupement -Ar-L-Y, où :
- Ar représente un arylène,
- L représente une liaison simple; un alkylène linéaire ou ramifié ou un alkynylène substitué linéaire ou ramifié,
- Y représente -Cl, -Br, -I, -COOH, -COOMe, -COOEt, -CONH-CH₂-CH₂-NH₂, -CONH-CH₂-COOEt, -CONH-CH₂-COOH, -CONH-(CH₂)_{q}NCS, ou bien un groupe répondant à l'une des formules suivantes : 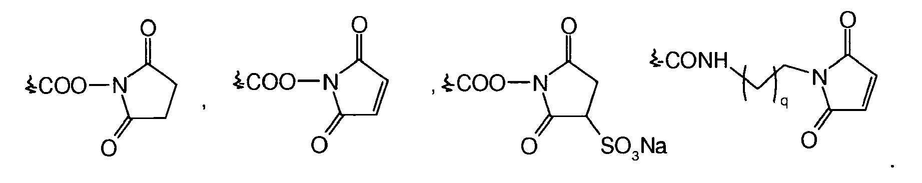 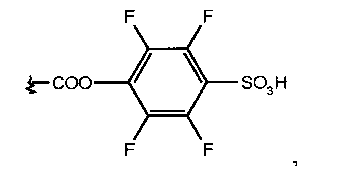
où q représente 1, 2, 3, 4 ou 5

9. Composé selon l'une quelconque des revendications 1 à 8, dans lequel :
◆ les groupements R² et R⁵ sont, indépendamment, des groupes -H ou -Me, et
◆ les groupements R³, R⁴, R⁶ et R⁷ sont choisis indépendamment parmi -H, -Me, - C≡C-CH₂-N⁺(Me)₂-(CH₂)ₙ-SO₃⁻, -CΞC-Ar-R' et un groupe de formule 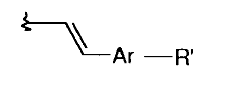 où :
- Ar représente un arylène,
- R' représente -OMe, -CH₂-PO₃²⁻(X^{m+})_{2/m}, ou -CΞC-CH₂-R", où R" représente -O-(CH₂-CH₂-O)ₙ-CH₃, -O-(CH₂-CH₂-O)ₙ-CH₂-PO₃²⁻(X^{m+})_{2/m}, -O-(CH₂-CH₂-O)ₙ-CH₂-SO₃-(X^{m+})_{1/m}, -N⁺(Me)₂-CH₂-(CH₂)ₙ-PO₃²⁻(X^{m+})_{1/m} ou -N⁺(Me)₂-CH₂-(CH₂)ₙ-SO₃⁻, où :
- n représente 1, 2, 3 ou 4
- X^{m+} représente un cation de valence m.

10. Composé selon l'une quelconque des revendications 1 à 9, dans lequel :
- R² et R⁵ sont identiques,
- R³ et R⁶ sont identiques, et
- R⁴ et R⁷ sont identiques.

11. Composé selon l'une quelconque des revendications 1 à 3, de formule (la) suivante : 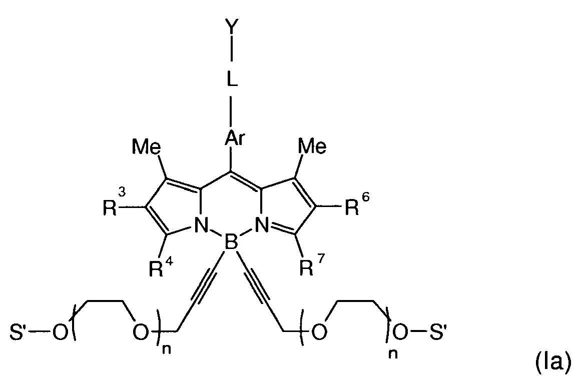 dans laquelle :
◆ S' est tel que défini dans la revendication 4,
◆ Ar, L et Y sont tels que définis dans la revendication 8,
◆ n représente 1, 2, 3 ou 4,
**◆** R³, R⁶, R⁴ et R⁷ sont choisis tels que :
- R³ et R⁶ sont identiques et représentent -H et R⁴ et R⁷ sont identiques et représentent -Me,
- R³ et R⁶ sont identiques et représentent -Et et R⁴ et R⁷ sont identiques et représentent -Me,
- R³ et R⁶ sont identiques et représentent -H et R⁴ et R⁷ sont identiques et représentent 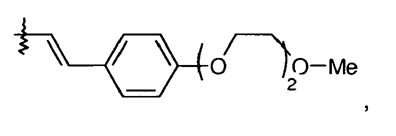
- R³ et R⁶ sont identiques et représentent -H, R⁴ représente -Me et R⁷ représente 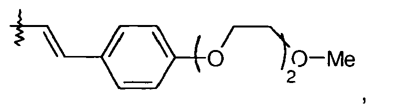
- R³ et R⁶ sont identiques et représentent -H et R⁴ et R⁷ sont identiques et représentent 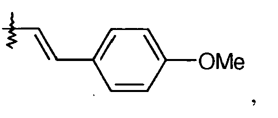
- R³ et R⁴ forment ensemble un groupe divalent -(CH₂)₄- et R⁶ et R⁷ forment ensemble un groupe divalent -(CH₂)₄-, ou
- R³ et R⁶ sont identiques et représentent -H, R⁴ représente -Me et R⁷ représente 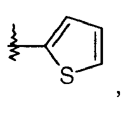 substitué ou non,

12. Composé selon l'une quelconque des revendications 1 à 3, de formule (Ic) suivante : 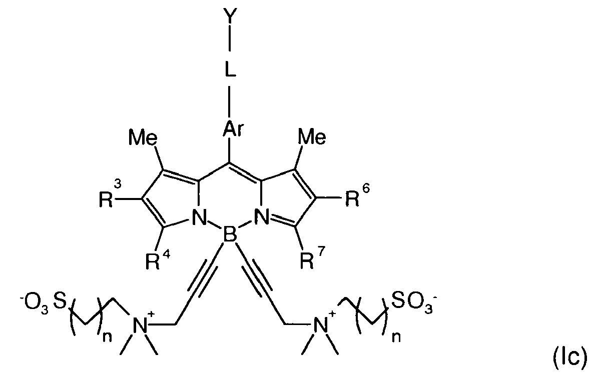 dans laquelle :
- Y, L et Ar sont tels que définis dans la revendication 8,
- R³, R⁶, R⁴ et R⁷ sont tels que définis à la revendication 9,
- n représente 2, 3 ou 4.

13. Composé selon l'une quelconque des revendications 1 à 3, ayant l'une des formules suivantes :

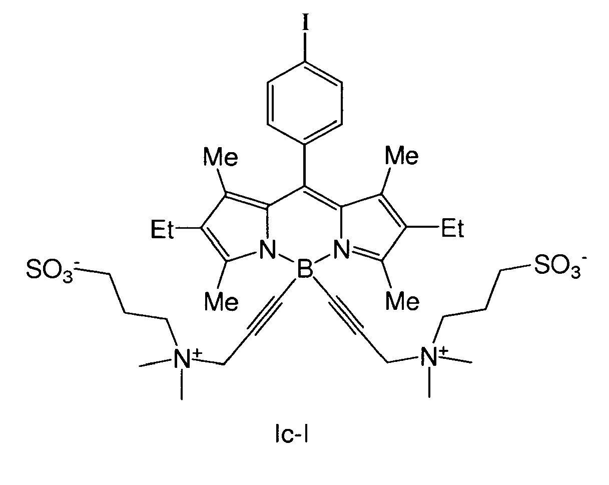

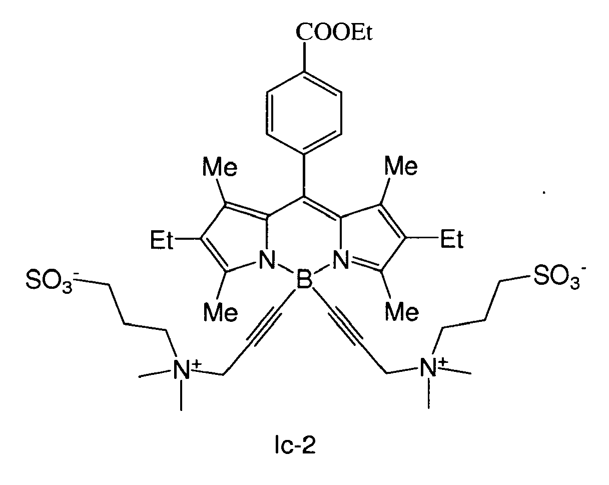

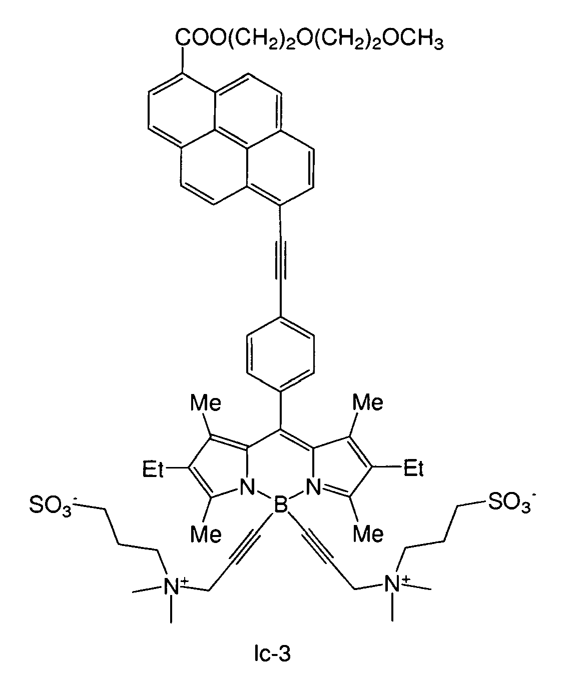

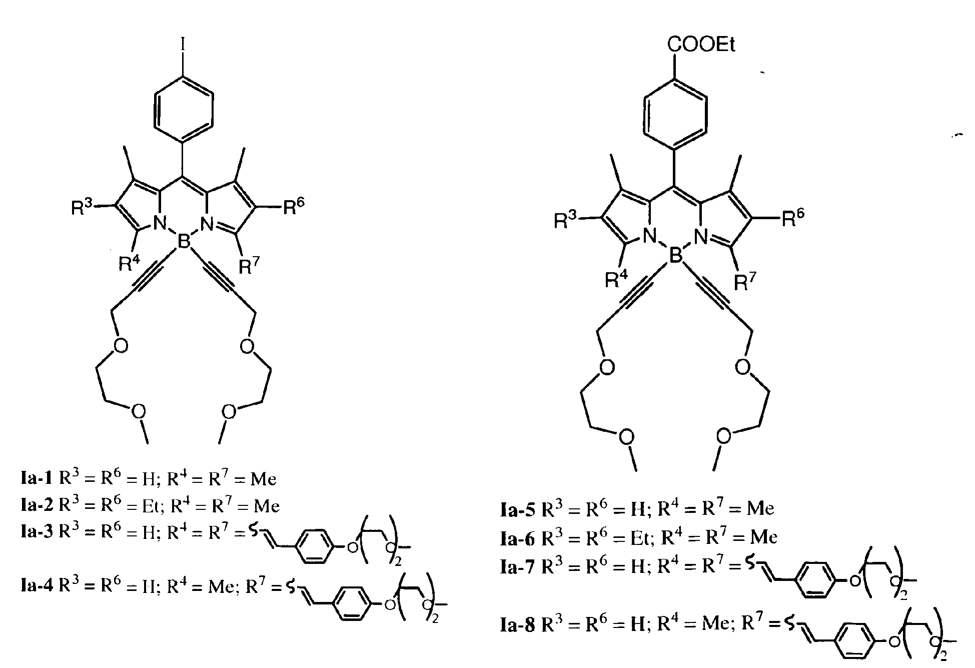

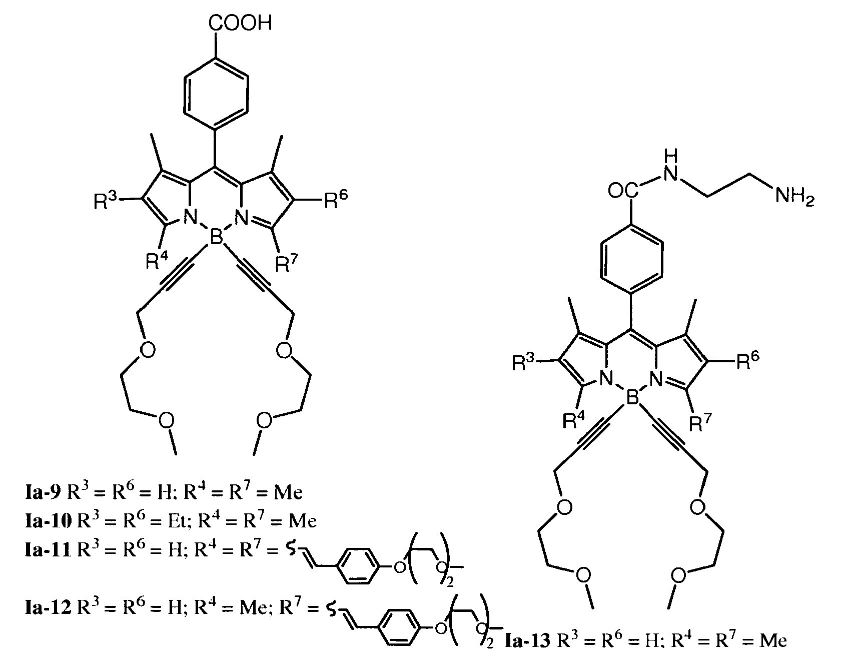

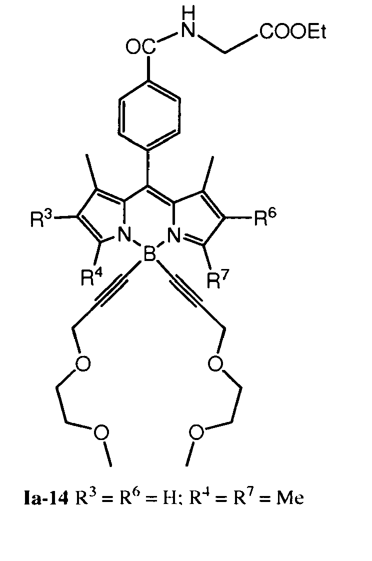

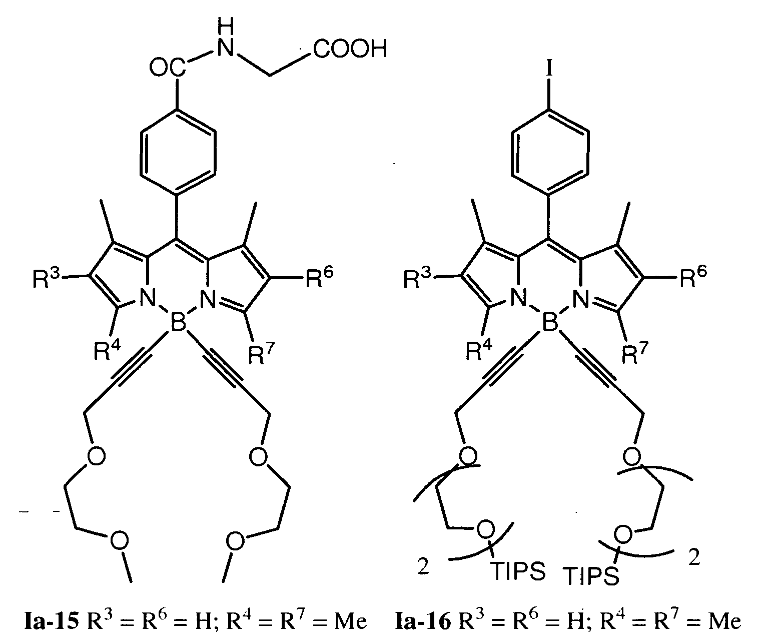

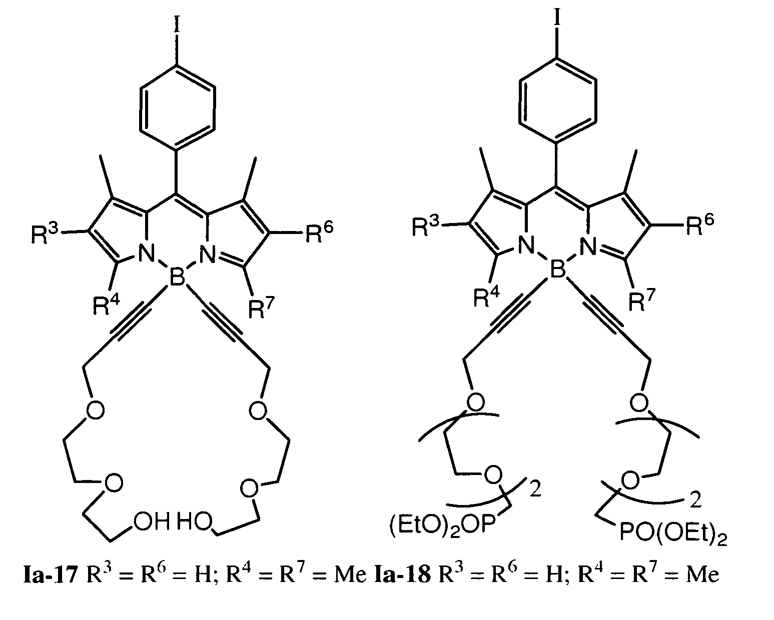

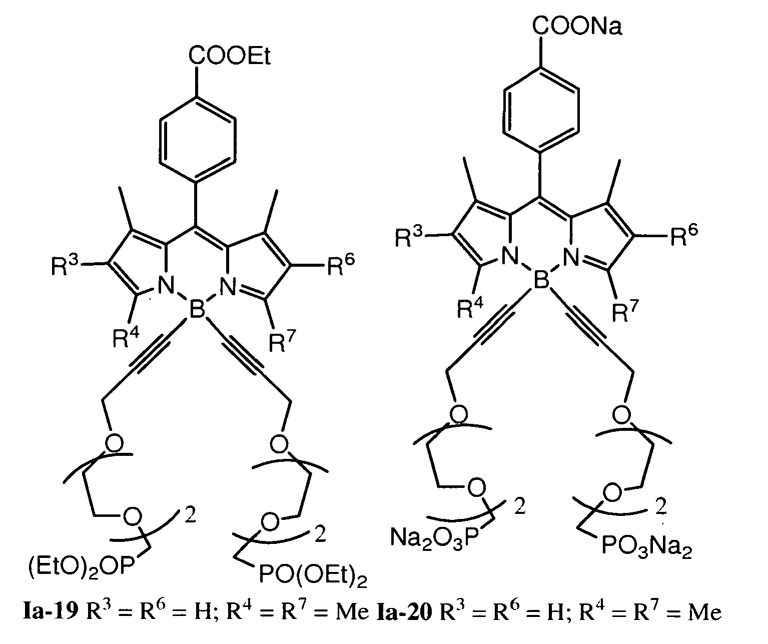

14. Composé selon l'une quelconque des revendications 1 à 3, qui sont hydrosolubles et répondent à l'une des formules suivantes :

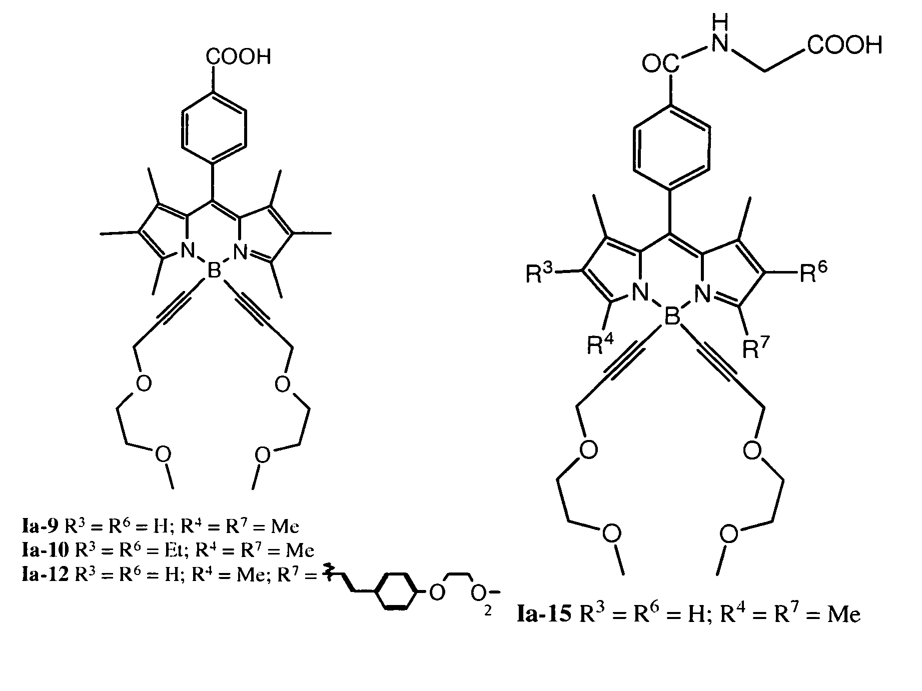

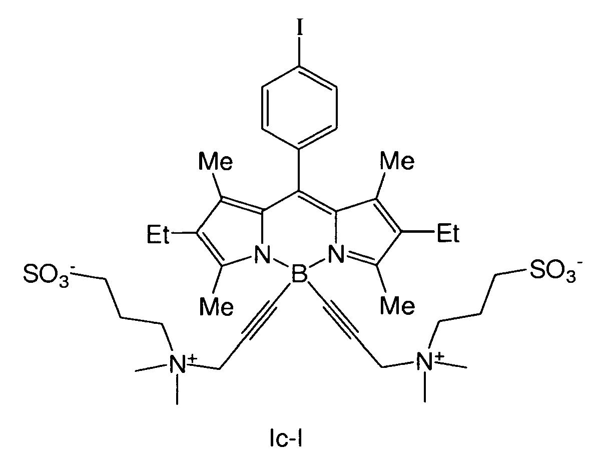

15. Utilisation comme marqueur fluorescent en milieu aqueux d'un composé fluorescent et hydrophile répondant à la formule (I) suivante : 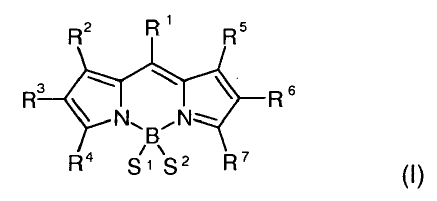 dans laquelle :
◆ S¹ représente un groupe de formule -CΞC-L'-A où :
- L' est un groupement de liaison qui est
- une liaison simple ; ou
- un groupement hydrocarboné divalent choisi dans le groupe consistant en les alkylènes linéaires ou ramifié, comprenant éventuellement dans leur chaîne un ou plusieurs oxygène, azote ou soufre; les alcénylènes linéaires ou ramifiés ; les alcynylènes linéaires ou ramifiés, et les arylènes ; ou une chaîne hydrocarbonée divalente constitué par un enchaînement d'au moins deux groupements hydrocarbonés divalents du type précité ;
- A est un groupement fonctionnel polaire choisi parmi les groupes sulfonate, sulfate, phosphate, ammonium, carboxylate, hydroxyle, phosphonate, sulfate d'alkylammonium et polyoxyéthylène;
◆ S² représente :
- un groupe -CΞC-L'-A identique ou différent de S¹, où L' et A ont les significations précitées;
- -F;
- -H; ou
- une chaîne hydrocarbonée, linéaire ou ramifiée, saturée ou insaturée, éventuellement interrompue par un ou plusieurs atomes d'oxygène, d'azote ou de soufre, éventuellement cyclisée en totalité ou en partie, éventuellement aromatique, et éventuellement fonctionnalisée, et
◆ chacun des groupes R¹, R², R³, R⁴, R⁵, R⁶ ou R⁷ désigne, indépendamment des autres, un groupement -H ou une chaîne hydrocarbonée, linéaire ou ramifiée, saturée ou insaturée, éventuellement interrompue par un ou plusieurs atomes d'oxygène, éventuellement cyclisé en totalité ou en partie, éventuellement aromatique et éventuellement fonctionnalisée,
étant entendu que tout ou partie des R¹, R², R³, R⁴, R⁵, R⁶ ou R⁷, peuvent être reliés entre eux pour former une forme pontée.

## Patentansprüche

1. Fluoreszierende und hydrophile Verbindung, die der folgenden Formel (I) entspricht: 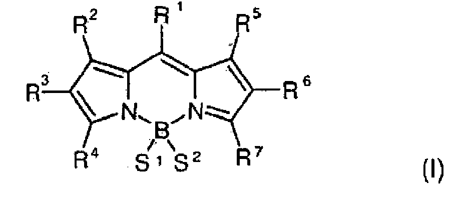 in der:
• S¹ eine Gruppe der Formel -CΞC-L'-A darstellt, worin:
- L' eine Bindungsgruppierung ist, die ist:
- eine Einfachbindung oder
- eine divalente Kohlenwasserstoffgruppierung, ausgewählt aus der Gruppe, bestehend aus linearen oder verzweigten Alkylenen, die gegebenenfalls in ihrer Kette ein oder mehrere Sauerstoff(e), Stickstoff(e) oder Schwefel umfassen; linearen oder verzweigten Alkenylen; linearen oder verzweigten Alkinylenen und Arylenen; oder eine divalente Kohlenwasserstoffkette, die durch Verkettung von wenigstens zwei divalenten Kohlenwasserstoff-Gruppierungen des vorstehend genannten Typs gebildet wird;
- A eine polare funktionelle Gruppierung ist, ausgewählt aus Sulfonat-, Sulfat-, Phosphat-, Ammonium-, Carboxylat-, Phosphophat-, Alkylammoniumsulfat- und Polyoxyethylen-Gruppen;
• S² darstellt:
- eine Gruppe -CΞC-L'-A, die identisch mit oder verschieden von S¹ ist, in der L' und A die vorstehend genannten Bedeutungen haben;
- -F;
- -H oder
- eine lineare oder verzweigte, gesättigte oder ungesättigte Kohlenwasserstoffkette, die gegebenenfalls durch ein oder mehrere Sauerstoff-, Stickstoff- oder Schwefelatom(e) unterbrochen ist, die gegebenenfalls ganz oder teilweise cyclisiert ist, gegebenenfalls aromatisch und gegebenenfalls funktionalisiert ist, und
• jede der Gruppen R¹, R², R³, R⁴, R⁵, R⁶ oder R⁷ unabhängig voneinander eine Gruppierung -H oder eine lineare oder verzweigte, gesättigte oder ungesättigte Kohlenwasserstoffkette, die gegebenenfalls durch ein oder mehrere Sauerstoffatom(e) unterbrochen ist, gegebenenfalls ganz oder teilweise cyclisiert ist, gegebenenfalls aromatisch und gegebenenfalls funktionalisiert ist, bezeichnet,
mit der Maßgabe, dass alle oder ein Teil der R¹, R², R³, R⁴, R⁵, R⁶ oder R⁷ unter Bildung einer verbrückten Form untereinander verbunden sein können/kann.

2. Verbindung nach Anspruch 1, wobei die funktionelle Gruppierung A, die in der Gruppierung -CΞ-C-L'-A, die als Gruppierung S¹ vorliegt, vorhanden ist, aus den Polyoxy-ethylen-, Phosphat-, Sulfat- und Alkylammoniumsulfat-Gruppen ausgewählt ist.

3. Verbindung nach Anspruch 1 oder 2, wobei S¹ und S² beides Gruppierungen sind, die der Formel -CΞC-L'-A, die in Anspruch 1 definiert ist, entsprechen, wobei S¹ und S² vorzugsweise gleich sind.

4. Verbindungen nach einem der Ansprüche 1 bis 3 der folgenden Formel (II): 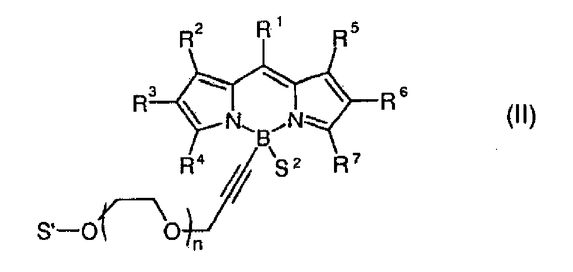 in der:
• R¹, R², R³, R⁴, R⁵, R⁶, R⁷ und S² wie in Anspruch 1 definiert sind,
• n für 1, 2, 3 oder 4 steht,
• S' für -H, -Me-(CH₂)_{n'}-SO₃⁻(X^{m+})_{1/m}, oder -(CH₂)ₙ-PO₃²⁻(X^{m+})_{2/m} steht, in denen:
- X^{m+} für ein Kation (ein- oder mehratomiges) mit der Valenz m steht,
- n' eine ganze Zahl 1, 2, 3 oder 4 ist.

5. Verbindungen nach einem der Ansprüche 1 bis 3 der folgenden Formel (III): 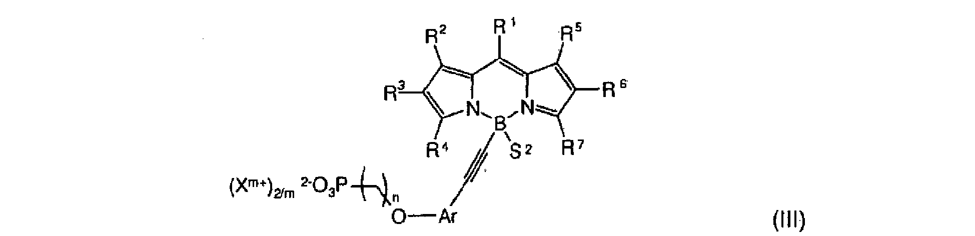 in der:
- R¹, R², R³, R⁴, R⁵, R⁶, R⁷ und S² wie in Anspruch 1 definiert sind,
- Ar für Arylen steht,
- X^{m+} für ein Kation (ein- oder mehratomiges) mit der Valenz m steht,
- n' eine ganze Zahl 1, 2, 3 oder 4 ist.

6. Verbindungen nach einem der Ansprüche 1 bis 3 der folgenden Formel (IV): 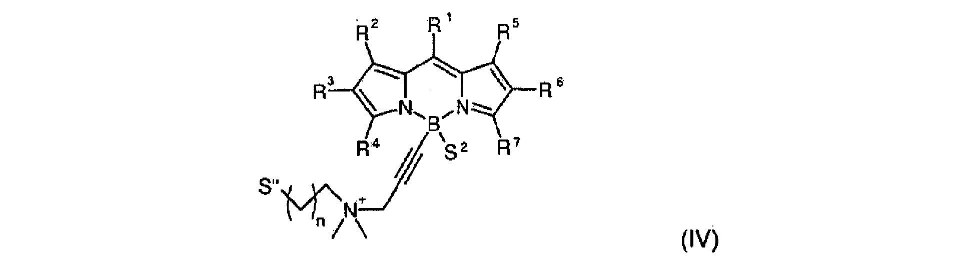 in der:
- R¹, R², R³, R⁴, R⁵, R⁶, R⁷ und S² wie in Anspruch 1 definiert sind,
- n für 0, 1, 2, 3, 4 oder 5 steht,
- S" für -SO₃⁻ oder -PO₃²⁻(X^{m+})_{1/m} steht,
worin X^{m+} für ein Kation (ein- oder mehratomiges) mit der Valenz m steht.

7. Verbindungen nach einem der Ansprüche 1 bis 6, wobei wenigstens eine der Gruppierungen R¹, R², R³, R⁴, R⁵, R⁶ oder R⁷ eine Gruppe ist, die eine polare funktionelle Gruppe trägt, welche ausgewählt ist aus Carboxylat-, Sulfonat-, Sulfat-, Phosphat-, Ammonium-, Hydroxyl-, Phosphonat- und Polyoxyethylen-Gruppen.

8. Verbindung nach einem der Ansprüche 1 bis 7, wobei R¹ eine Gruppe -Ar-L-Y darstellt, worin:
- Ar ein Arylen darstellt,
- L eine Einfachbindung; lineares oder verzweigtes Alkylen oder lineares oder verzweigtes substituiertes Alkinylen darstellt,
- Y für -Cl, -Br, -I, -COOH, -COOMe, -COOEt, -CONH-CH₂-CH₂NH₂, -CONH-CH₂-COOEt, -CONH-CH₂-COOH, -CONH-(CH₂)_{q}NCS oder auch für eine Gruppe, die einer der folgenden Formeln entspricht, steht: 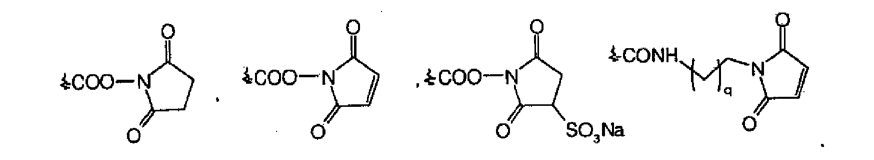 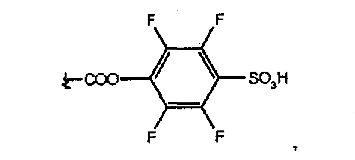
worin q für 1, 2, 3, 4 oder 5 steht.

9. Verbindung nach einem der Ansprüche 1 bis 8, wobei:
• die Gruppierungen R² und R⁵ unabhängig Gruppen -H oder -Me sind und
• die Gruppierungen R³, R⁴, R⁶ und R⁷ unabhängig aus -H, -Me, -CΞC-CH₂-N⁺-(Me₂)-(CH₂)ₙ-SO₃⁻, -CΞC-Ar-R' und einer Gruppe der Formel 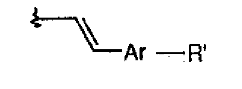 ausgewählt sind, worin:
- Ar ein Arylen darstellt,
- R' für -OMe, -CH₂-PO₃²⁻(X^{m+})_{2/m} oder -CΞC-CH₂-R" steht, worin R" für -O-(CH₂-CH₂-O)ₙ-CH₃, -O-(CH₂-CH₂-O)ₙ-CH₂-PO₃²⁻X^{m+})_{2/m}, -O-(CH₂-CH₂-O)ₙ-CH₂-SO₃⁻(X^{m+})_{1/m}, -N⁺(Me)₂-CH₂-(CH₂)ₙ-PO₃²⁻(X^{m+})_{1/m} oder -N⁺(Me)₂-CH₂(CH₂)ₙ-SO₃⁻ steht, worin:
- n für 1, 2, 3 oder 4 steht;
- X^{m+} ein Kation mit der Valenz m darstellt.

10. Verbindung nach einem der Ansprüche 1 bis 9, wobei:
- R² und R⁵ gleich sind,
- R³ und R^{6*} gleich sind und
- R⁴ und R⁷ gleich sind.

11. Verbindung nach einem der Ansprüche 1 bis 3 der folgenden Formel (Ia): 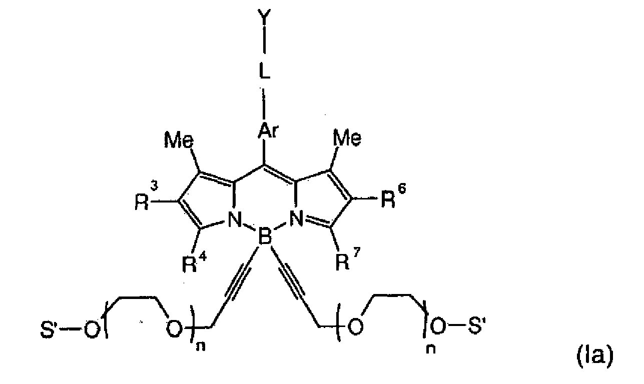 in der :
• S' wie in Anspruch 4 definiert ist,
• Ar, L und Y wie in Anspruch 8 definiert sind,
• n für 1, 2, 3 oder 4 steht,
• R³, R⁶, R⁴ und R⁷ so gewählt sind, dass:
- R³ und R⁶ gleich sind und -H darstellen und R⁴ und R⁷ gleich sind und -Me darstellen,
- R³ und R⁶ gleich sind und -Et darstellen und R⁴ und R⁷ gleich sind und -Me darstellen,
- R³ und R⁶ gleich sind und H darstellen und R⁴ und R⁷ gleich sind und darstellen, 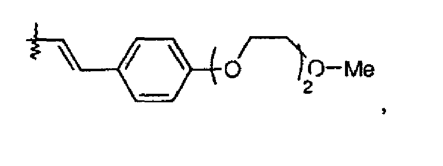
- R³ und R⁶ gleich sind und -H darstellen, R⁴ -Me darstellt und R⁷ 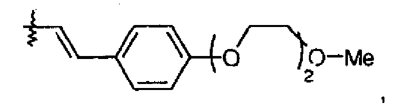 darstellt;
- R³ und R⁶ gleich sind und -H darstellen und R⁴ und R⁷ gleich sind und 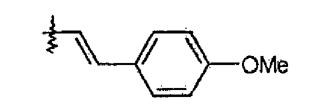 darstellen;
- R³ und R⁴ zusammen eine divalente Gruppe -(CH₂)₄- bilden und R⁶ und R⁷ zusammen eine divalente Gruppe -(CH₂)₄- bilden oder
- R³ und R⁶ gleich sind und -H darstellen, R⁴ -Me darstellt und R⁷ substituiertes oder nicht substituiertes 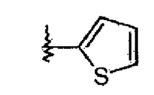
darstellt.

12. Verbindung nach einem der Ansprüche 1 bis 3 der folgenden Formel (Ic): 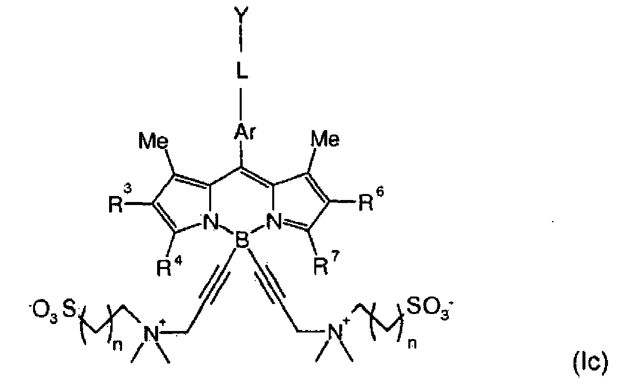 in der:
- Y, L und Ar wie in Anspruch 8 definiert sind,
- R³, R⁶, R⁴ und R⁷ wie in Anspruch 9 definiert sind,
- n für 2, 3 oder 4 steht.

13. Verbindung nach einem der Ansprüche 1 bis 3, die eine der folgenden Formeln hat:

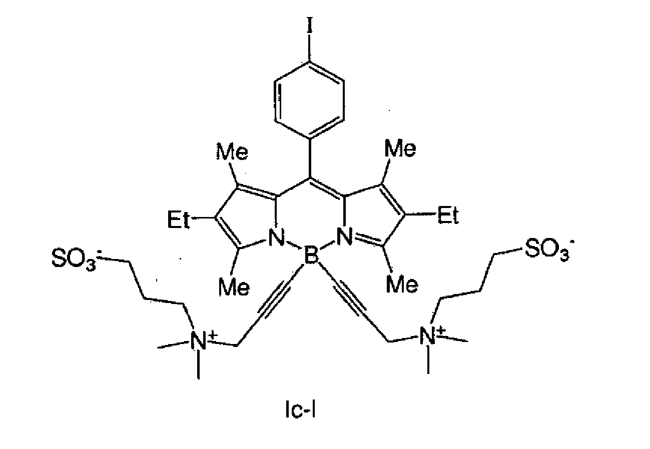

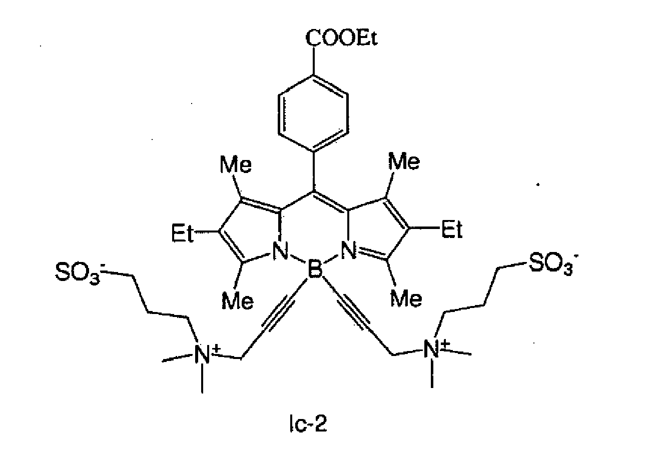

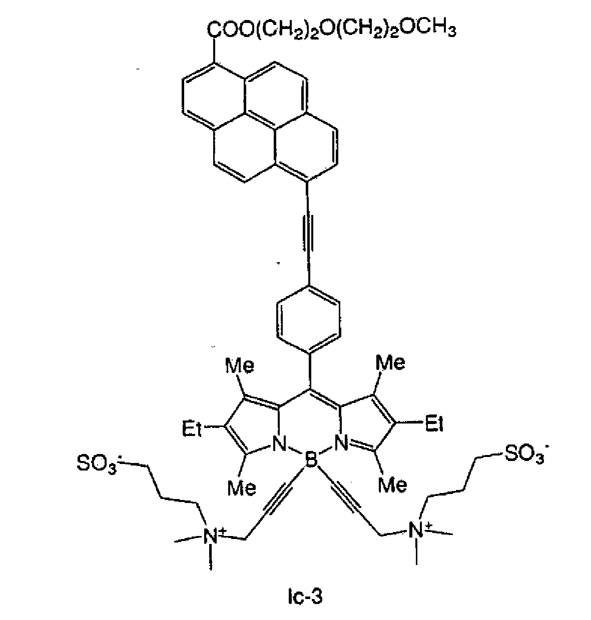

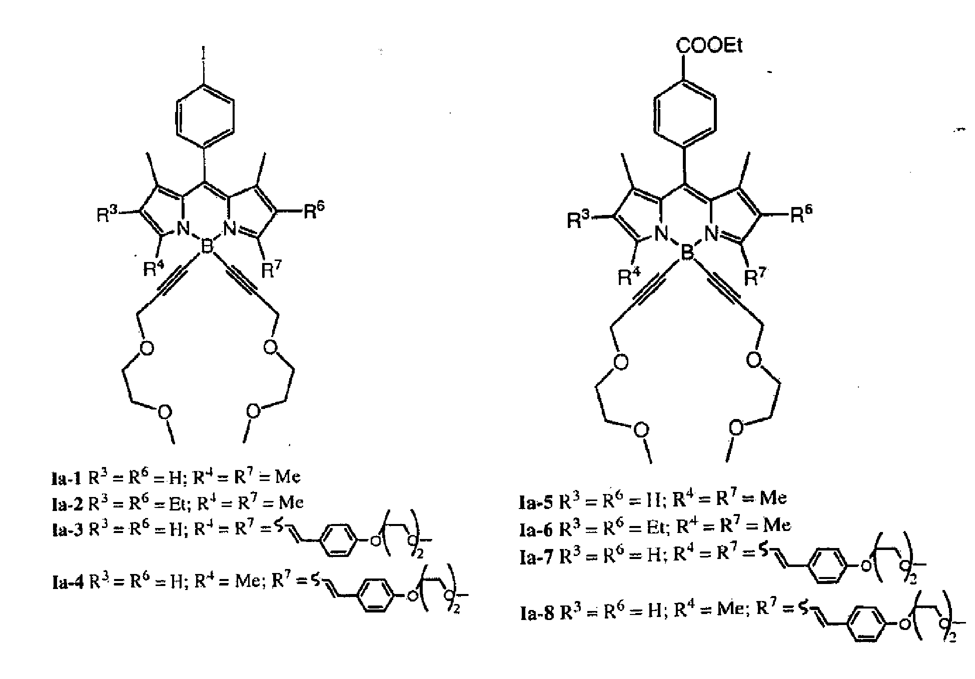

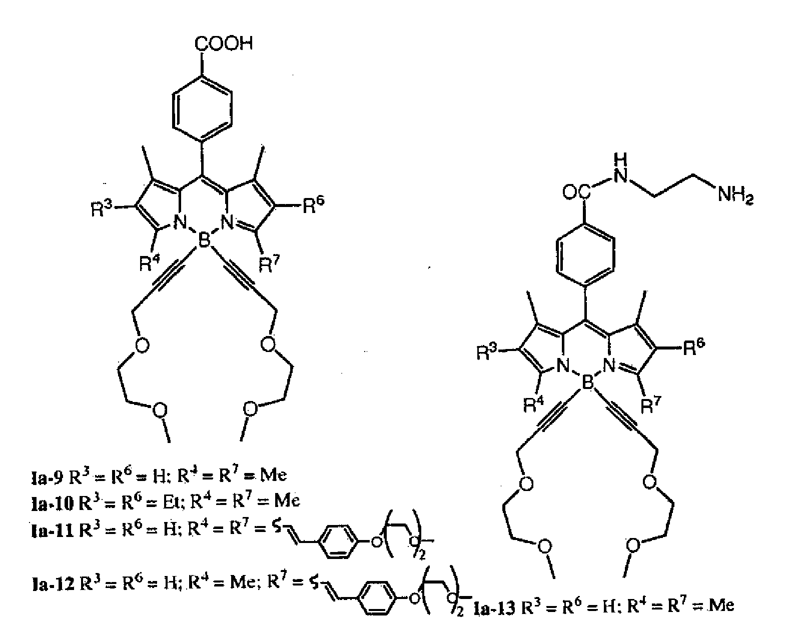

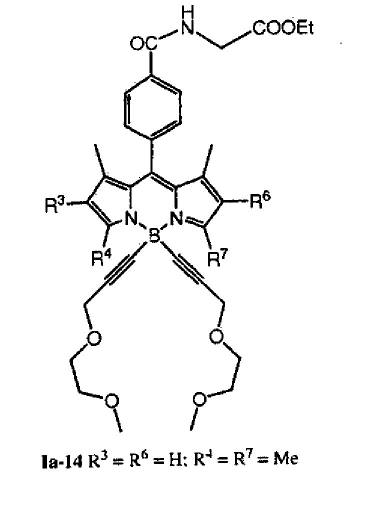

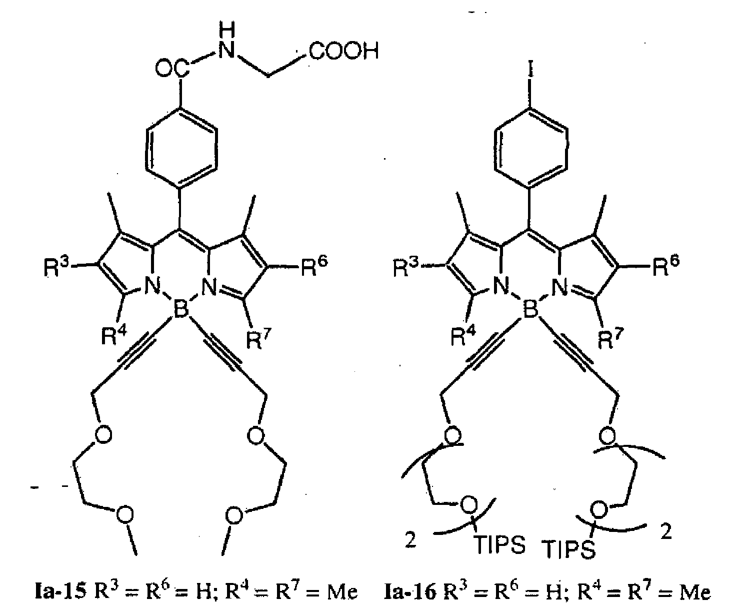

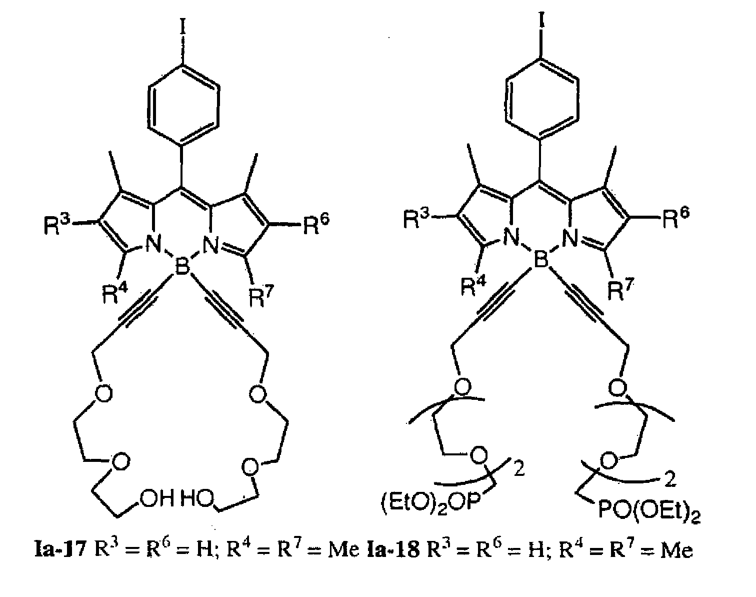

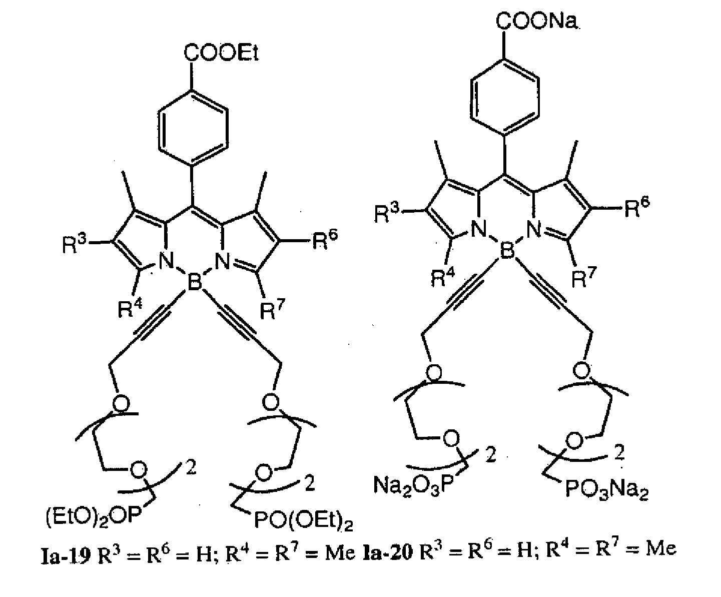

14. Verbindung nach einem der Ansprüche 1 bis 3, die wasserlöslich sind und einer der folgenden Formeln entsprechen:

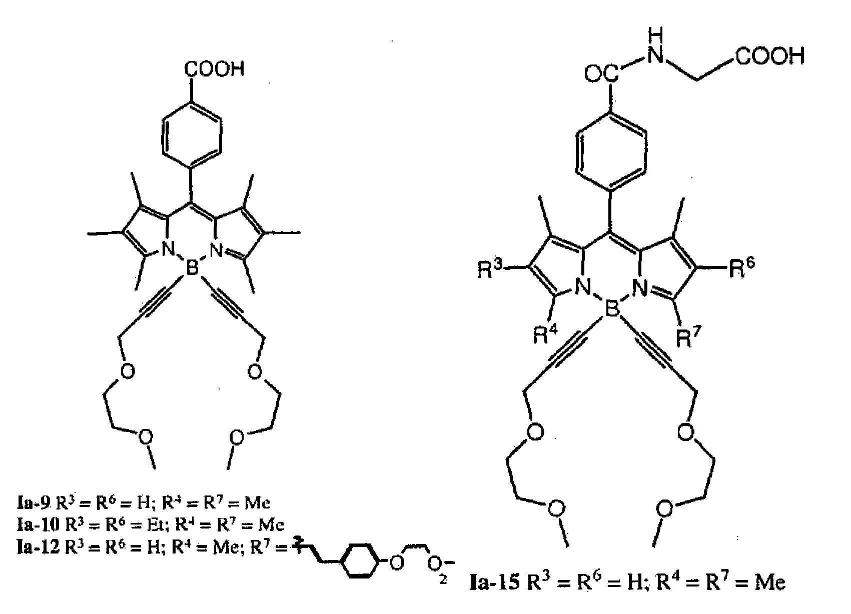

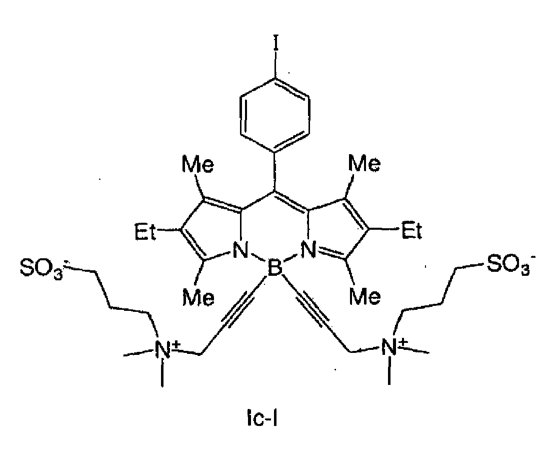

15. Verwendung als filuoreszierender Marker in wässrigem Milieu einer fluoreszierenden und hydrophilen Verbindung, die der folgenden Formel (I) entspricht: 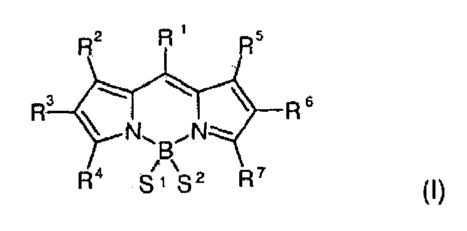 in der:
• S¹ eine Gruppe der Formel -CΞC-L'-A darstellt, worin:
- L' eine Bindungsgruppierung ist, die ist:
- eine Einfachbindung oder
- eine divalente Kohlenwasserstoffgruppierung, ausgewählt aus der Gruppe, bestehend aus linearen oder verzweigten Alkylenen, die gegebenenfalls in ihrer Kette ein oder mehrere Sauerstoff(e), Stickstoff(e) oder Schwefel umfassen; linearen oder verzweigten Alkenylen; linearen oder verzweigten Alkinylenen und Arylenen; oder eine divalente Kohlenwasserstoffkette, die durch Verkettung von wenigstens zwei divalenten Kohlenwasserstoff-Gruppierungen des vorstehend genannten Typs gebildet wird;
- A eine polare funktionelle Gruppierung ist, ausgewählt aus Sulfonat-, Sulfat-, Phosphat-, Ammonium-, Carboxylat-, Phosphophat-, Alkylammoniumsulfat- und Polyoxyethylen-Gruppen;
• S² darstellt:
- eine Gruppe -CΞC-L'-A, die identisch mit oder verschieden von S¹ ist, in der L' und A die vorstehend genannten Bedeutungen haben;
- -F;
- -H oder
- eine lineare oder verzweigte, gesättigte oder ungesättigte Kohlenwasserstoffkette, die gegebenenfalls durch ein oder mehrere Sauerstoff-, Stickstoff- oder Schwefelatom(e) unterbrochen ist, die gegebenenfalls ganz oder teilweise cyclisiert ist, gegebenenfalls aromatisch und gegebenenfalls funktionalisiert ist, und
• jede der Gruppen R¹, R², R³, R⁴, R⁵, R⁶ oder R⁷ unabhängig voneinander eine Gruppierung -H oder eine lineare oder verzweigte, gesättigte oder ungesättigte Kohlenwasserstoffkette, die gegebenenfalls durch ein oder mehrere Sauerstoffatom(e) unterbrochen ist, gegebenenfalls ganz oder teilweise cyclisiert ist, gegebenenfalls aromatisch und gegebenenfalls funktionalisiert ist, bezeichnet,
mit der Maßgabe, dass alle oder ein Teil der R¹, R², R³, R⁴, R⁵, R⁶ oder R⁷ unter Bildung einer verbrückten Form untereinander verbunden sein können/kann.

## Claims

1. Fluorescent and hydrophilic compound meeting following formula (I): 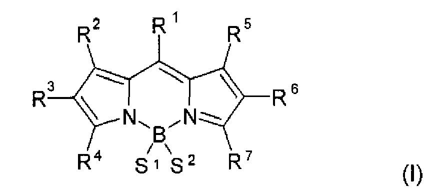 wherein:
◆ S¹ is a group of formula -CΞC-L'-A in which:
- L' is a linkage group which is
- a single bond, or
- a divalent hydrocarbon group chosen from the group consisting of straight or branched alkylenes optionally comprising one or more oxygen, nitrogen or sulphur atoms in their chain; straight or branched alkenylenes; straight or branched alkynylenes, and arylenes; or a divalent hydrocarbon chain composed of a chain of at least two divalent hydrocarbon groups of the aforementioned type;
- A is a polar functional group chosen from among sulphonate, sulphate, phosphate, ammonium, carboxylate, phosphonate, alkylammonium sulphate and polyoxyethylene groups;
◆ S² is:
- a -CΞC-L'-A group identical to or different from S¹, in which L' and A have the aforementioned meanings;
- -F;
- -H; or
- a hydrocarbon chain, straight or branched, saturated or unsaturated, optionally interrupted by one or more oxygen, nitrogen or sulphur atoms, optionally cyclized in whole or in part, optionally aromatic and optionally functionalized, and
◆ each of groups R¹, R², R³, R⁴, R⁵, R⁶ or R⁷ each independently designates a -H group or a hydrocarbon chain, straight or branched, saturated or unsaturated, optionally interrupted by one or more oxygen atoms, optionally cyclized in whole or in part, optionally aromatic and optionally functionalized,
provided that all or part of R¹, R², R³, R⁴, R⁵, R⁶ or R⁷ can be linked together to form a bridged form.

2. The compound according to claim 1, wherein the functional A group present as S¹ group on the -CΞC-L'-A group, is chosen from among the polyoxyethylene, phosphate, sulphate and alkylammonium sulphate groups.

3. The compound according to claim 1 or 2, wherein S¹ and S² are both groups meeting formula -CΞC-L'-A defined in claim 1, S¹ and S² preferably being the same.

4. The compounds according to any of claims 1 to 3, of following formula (II): 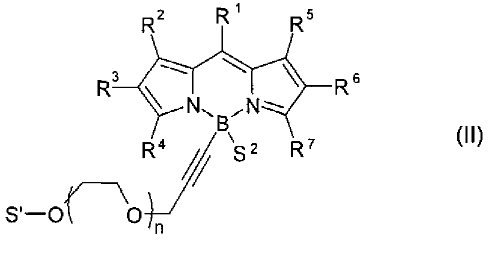 wherein:
◆ R¹, R², R³, R⁴, R⁵, R⁶, R⁷ and S² are such as defined in claim 1,
◆ n is 1, 2, 3 or 4,
◆ S' is -H, -Me -(CH₂)ₙ-SO₃⁻(X^{m+})_{1/m} or -(CH₂)ₙ-PO₃²⁻(X^{m+})_{2/m} in which:
- X^{m+} is a cation (mono- or polyatomic cation) of valence m,
- n' is an integer of 1, 2, 3 or 4.

5. The compounds according to any of claims 1 to 3, of following formula (III): 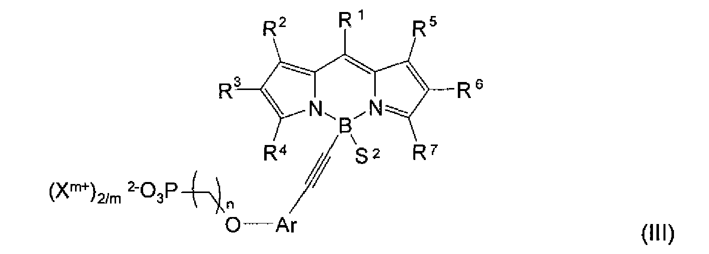 wherein:
- R¹, R², R³, R⁴, R⁵, R⁶, R⁷ and S² are such as defined in claim 1,
- Ar is an arylene,
- X^{m+} is a cation (mono- or polyatomic) of valence m,
- n' is an integer of 1, 2, 3 or 4.

6. The compounds according to any of claims 1 to 3, of following formula (IV) : 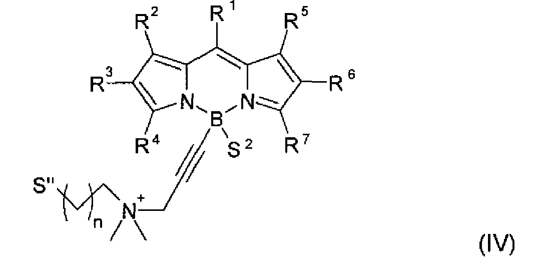 wherein:
- R¹, R², R³, R⁴, R⁵, R⁶, R⁷ and S² are such as defined in claim 1,
- n is 0, 1, 2, 3, 4 or 5,
- S" is -SO₃⁻ or -PO₃²⁻(X^{m+})_{1/m}
where X^{m+} is a cation (mono- or polyatomic) of valence m.

7. The compounds according to any of claims 1 to 6 wherein at least one of the groups R¹, R², R³, R⁴, R⁵, R⁶ or R⁷ is a group carrying a polar functional group chosen from the carboxylate, suphonate, sulphate, phosphate, ammonium, hydroxyl, phosphonate and polyoxyethylene groups.

8. The compound according to any of claims 1 to 7, wherein R¹ is an -Ar-L-Y group where:
- Ar is an arylene,
- L is a single bond, a straight or branched alkylene or a substituted straight or branched alkynylene,
- Y is -Cl, -Br, -I, -COOH, -COOMe, -COOEt, -CONH-CH₂-CH₂-NH₂, -CONH-CH₂-COOEt, -CONH-CH₂-COOH, -CONH-(CH₂)_{q}NCS or else a group meeting one of the following formulas: 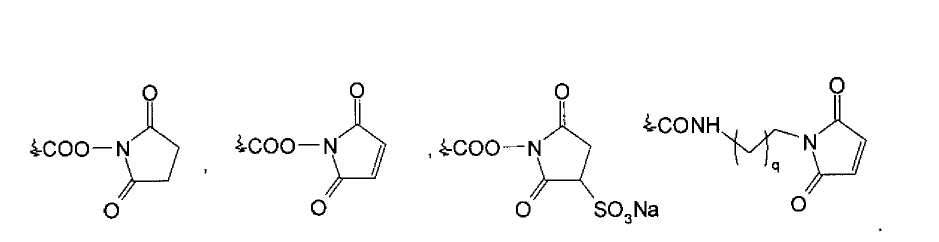 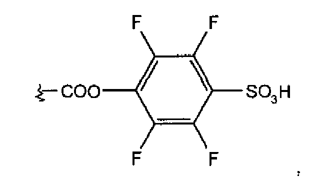 where q is 1, 2, 3, 4 or 5

9. The compound according to any of claims 1 to 8, wherein :
◆ the groups R² and R⁵ are each independently -H or -Me groups, and
◆ the groups R³, R⁴, R⁶ and R⁷ are each independent chosen from among -H, -Me, -C=C-CH₂-N⁺(Me)₂-(CH₂)ₙ-SO₃⁻, -CΞC-Ar-R' and a group of formula 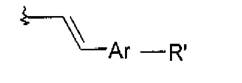
where:
- Ar is an arylene,
- R' is -OMe, -CH₂-PO₃²⁻(X^{m+})_{2/m} or -CΞC-CH₂-R", in which R" is -O-(CH₂-CH₂-O)ₙ-CH₃, -O-(CH2-CH2-O)ₙ-CH₂-PO₃²⁻(X^{m+})_{2/m}, -O-(CH₂-CH₂-O)ₙ-CH₂-SO₃⁻(X^{m+})_{1/m}, -N⁺(Me)₂-CH₂-(CH₂)ₙ-PO₃²⁻(X^{m+})_{1/m} or -N⁺(Me)₂-CH₂-(CH₂)ₙ-SO₃⁻, where:
- n is 1, 2, 3 or 4
- X^{m+} is a cation of valence m.

10. The compound according to any of claims 1 to 9 wherein:
- R² and R⁵ are the same,
- R³ and R⁶ are the same, and
- R⁴ and R⁷ are the same.

11. The compound according to any of claims 1 to 3 of following formula (Ia): 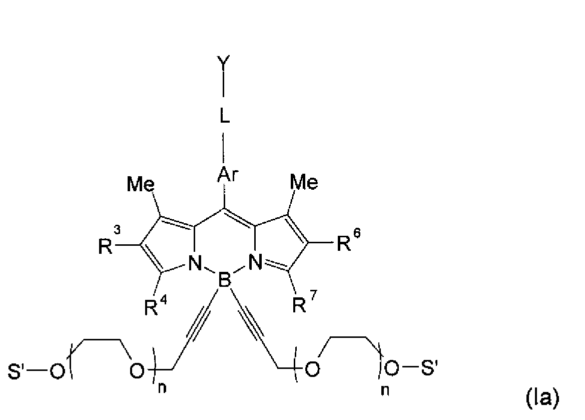 wherein:
**◆** S' is such as defined in claim 4,
◆ Ar, L and Y are such as defined in claim 8,
◆ n is 1, 2, 3 or 4,
◆ R³, R⁶, R⁴ and R⁷ are chosen such that:
- R³ and R⁶ are the same and represent-H, and R⁴ and R⁷ are the same and represent -Me,
- R³ and R⁶ are the same and represent-Et, and R⁴ and R⁷ are the same and represent -Me,
- R³ and R³ are the same and represent-H, and R⁴ and R⁷ are the same and represent 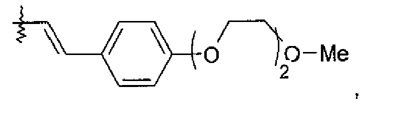
- R³ and R⁶ are the same and represent -H, R⁴ represents -Me and R⁷ represents 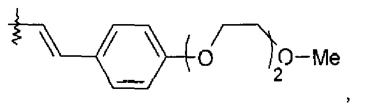
- R³ and R⁶ are the same and represent-H, and R⁴ and R⁷ are the same and represent 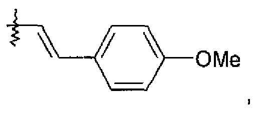
- R³ and R⁴ together form a divalent group -(CH₂)₄- and R⁶ and R⁷ together form a divalent group -(CH₂)₄-, or
- R³ and R⁶ are the same and represent -H, R⁴ represents -Me and R⁷ represents 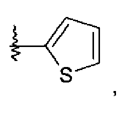 substituted or unsubstituted,

12. The compound according to any of claims 1 to 3 of following formula (Ic): 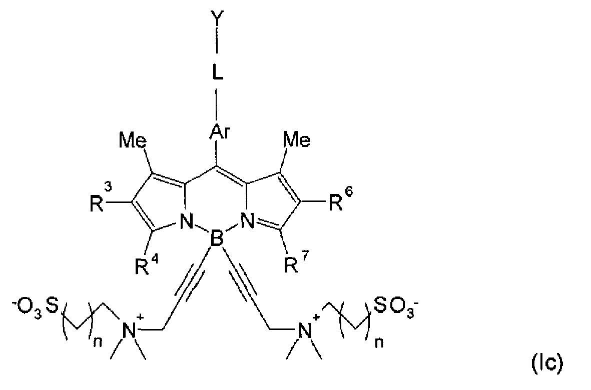 wherein:
- Y, L and Ar are such as defined in claim 8,
- R³, R⁶, R⁴ and R⁷ are such as defined in claim 9,
- n is 2, 3 or 4.

13. The compound according to any of claims 1 to 3, having one of the following formulas:

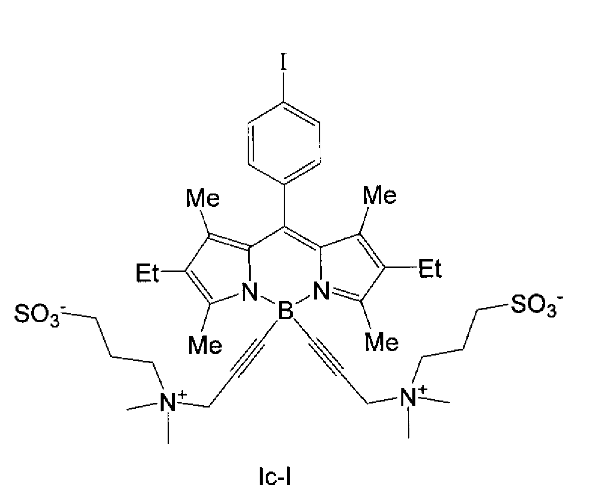

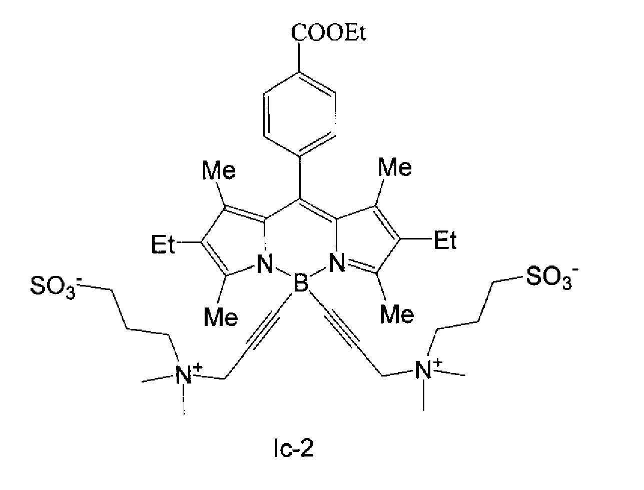

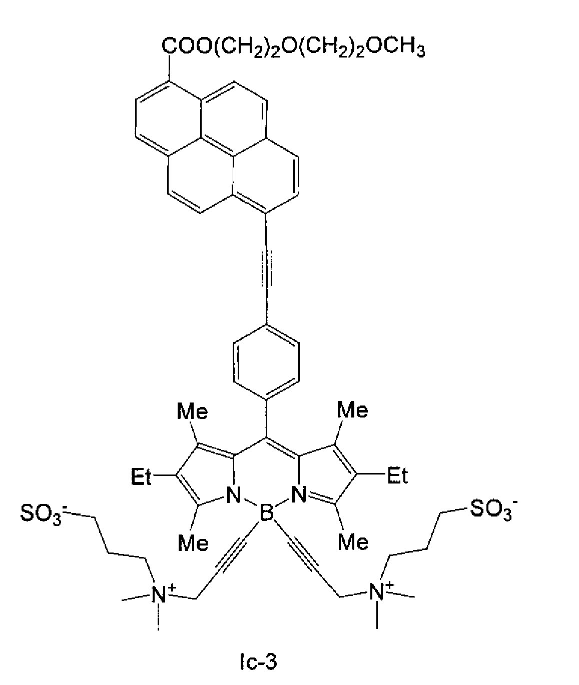

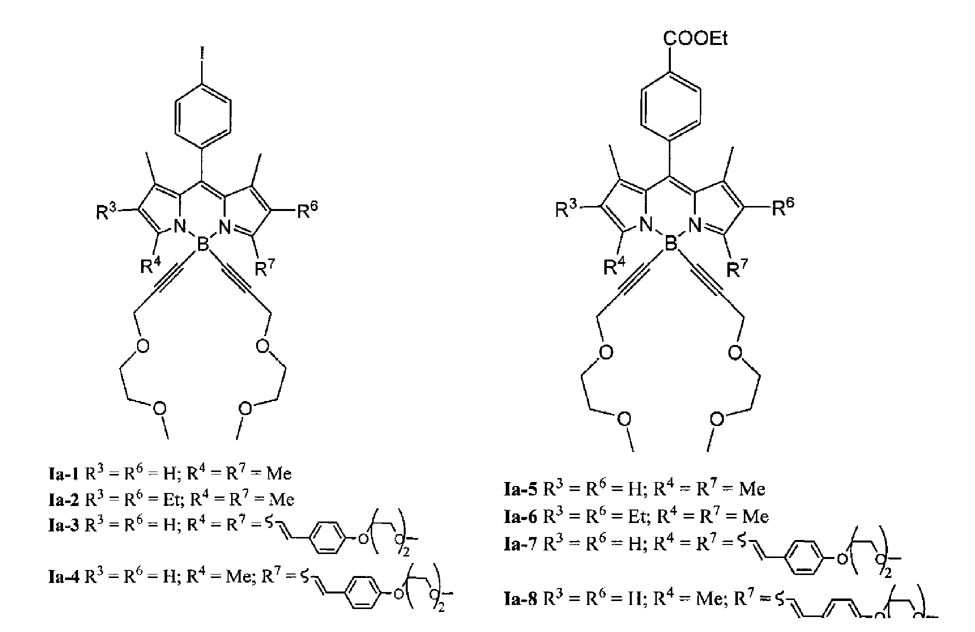

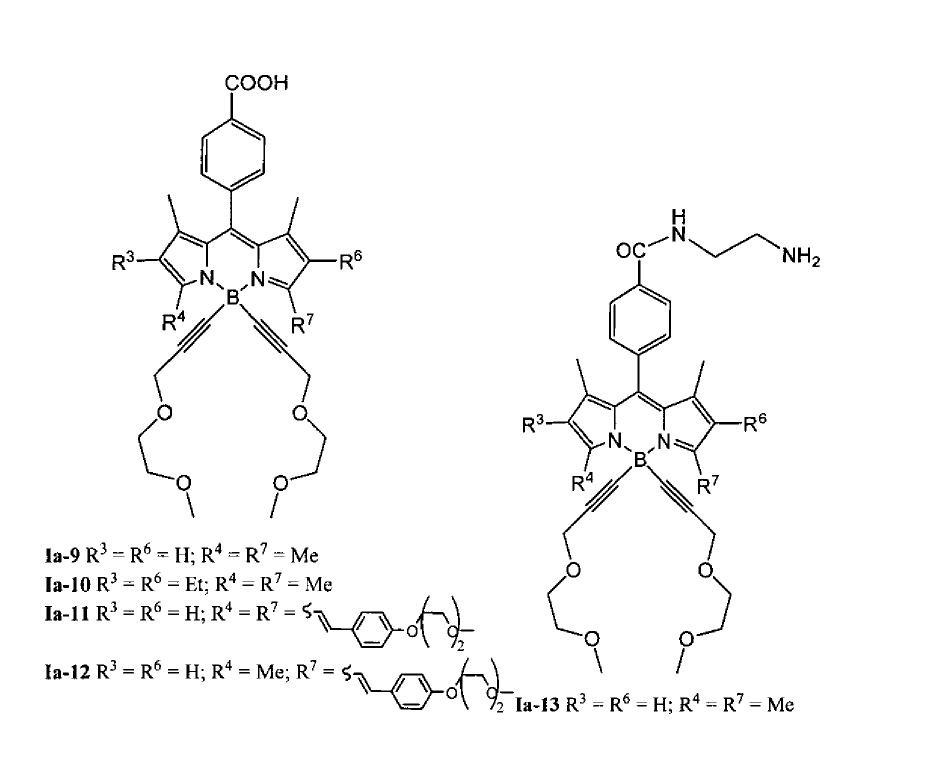

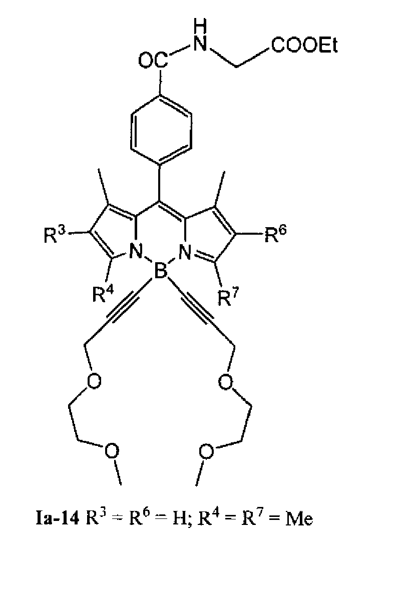

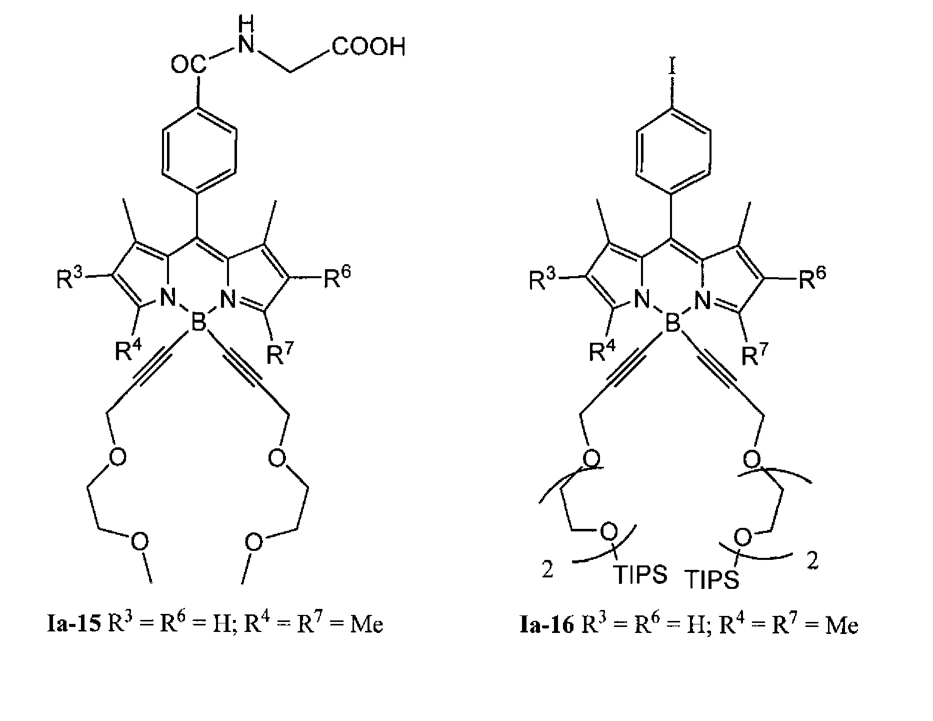

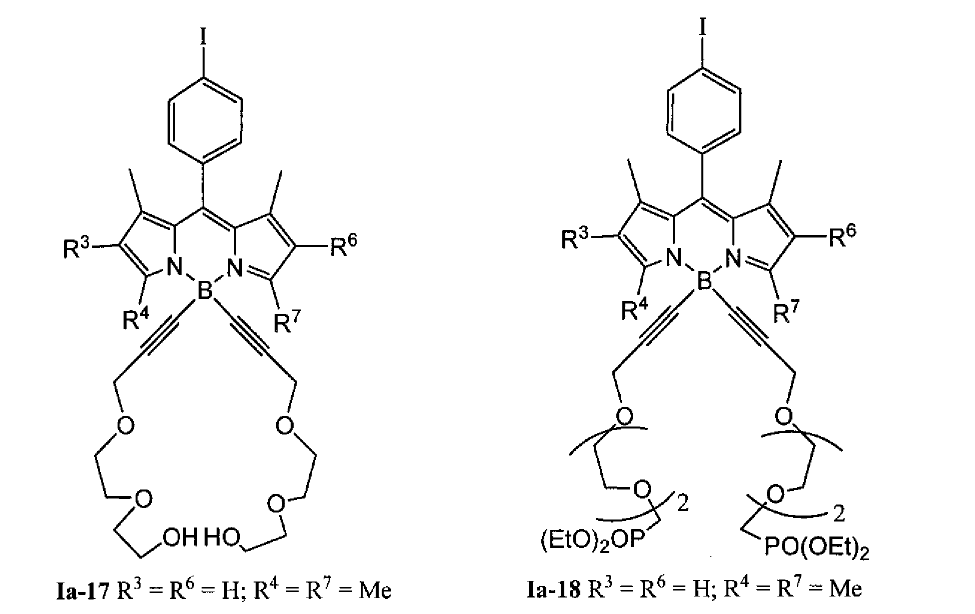

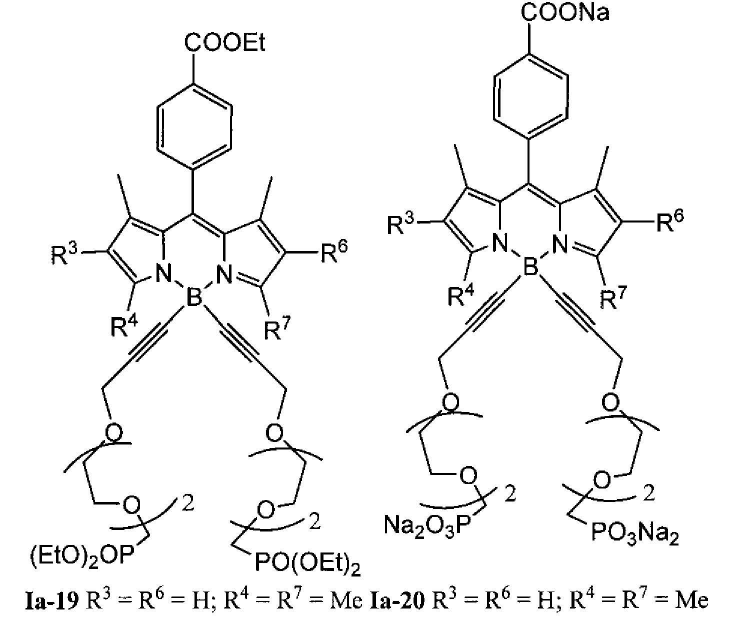

14. The compound according to any of claims 1 to 3 which are water-soluble and meet one of the following formulas:

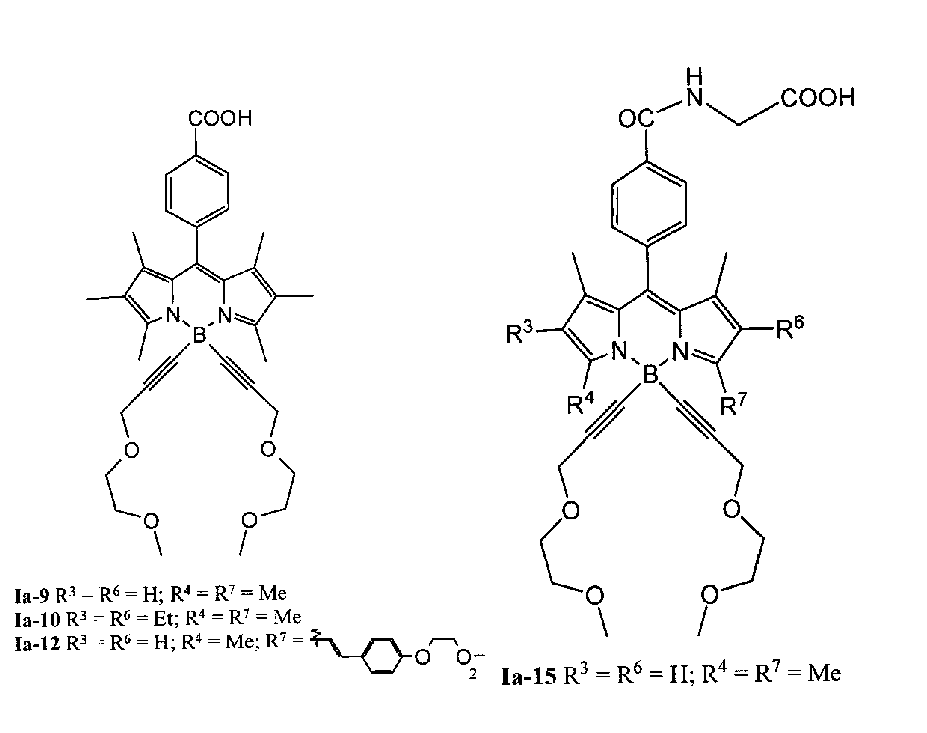

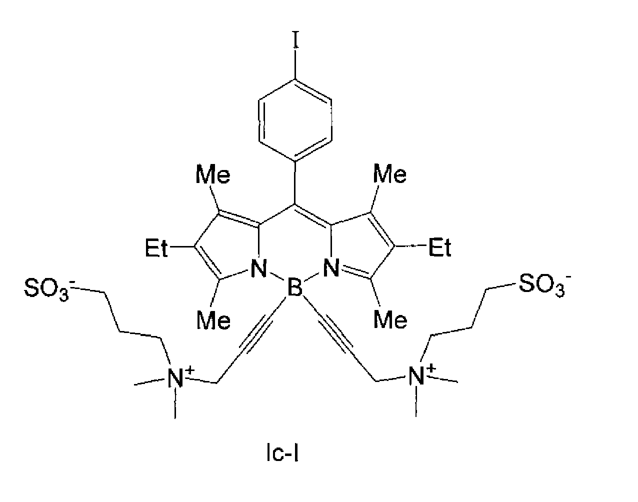

15. The use as fluorescent marker in an aqueous medium of a fluorescent and hydrophilic compound meeting following formula (I): 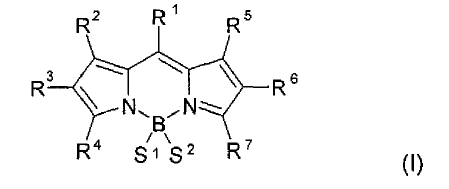 wherein:
◆ S¹ is a group of formula -CΞC-L'-A in which:
- L' is a linkage group which is
- a single bond; or
- a divalent hydrocarbon group chosen from the group consisting of straight or branched alkylenes optionally comprising one or more oxygen, nitrogen or sulphur atoms in their chain; straight or branched alkenylenes; straight or branched alkynylenes, and arylenes; or a divalent hydrocarbon chain consisting of a chain of at least two divalent hydrocarbon groups of the aforementioned type;
- A is a polar functional group chosen from among the sulphonate, sulphate, phosphate, ammonium, carboxylate, hydroxyl, phosphonate, alkylammonium sulphate and polyoxyethylene groups;
◆ S² is:
- a -CΞC-L'-A group the same or different from S¹, in which L' and A have the aforementioned meanings;
- -F;
- -H; or
- a hydrocarbon chain, straight or branched, saturated or unsaturated, optionally interrupted by one or more oxygen, nitrogen or sulphur atoms, optionally cyclized in whole or in part, optionally aromatic and optionally functionalized; and
◆ each of the groups R¹, R², R³, R⁴, R⁵, R⁶ or R⁷ each independently designates an -H group or a straight or branched, saturated or unsaturated hydrocarbon chain, optionally interrupted by one or more oxygen atoms, optionally cyclized in whole or in part, optionally aromatic and optionally functionalized,
on the understanding that all or part of R¹, R², R³, R⁴, R⁵, R⁶ or R⁷ can be linked together to form a bridged form.
